# EUROPEAN PATENT APPLICATION

(11) **EP 2 392 894 A2**
(43) Date of publication of application: **07.12.2011**
(21) Application number: 11177439.4
(22) Date of filing: 21.01.2010
(51) Int. Cl.: G01B 11/14, G05D 7/00

(54) **Fluid control platform, fluid control systems, intelligent fluid control components and optical aperture sensors**

(30) Priority: 23.01.2009 US 202052 P; 25.11.2009 US 264629 P
(62) Divisional of application: 10733838.6
(71) Applicant: Acro Associates, Concord, CA 94520 (US)
(72) Inventor: Weatherbee, Jamil, Pleasant Hill, CA California 94523 (US); Huntley, Albin, Martinez, CA California 94523 (US); Musolf, Blaik, Concord, CA California 94521 (US); Zielger, Russell, Pleasant Hills, CA California 94523 (US); Wong, Winston, Bradford, MA Massachusetts 01835 (US); Huntington, Nicolas, Concord, CA California 94520 (US)
(74) Representative: Hyden, Martin Douglas

(57) **Abstract**

A fluid control platform with an optical aperture sensor (1300) is disclosed. Optical aperture sensor (1300) may be attached to various devices, to measure the size of a variable gap between two members. Object (1308) may be used to house most of optical aperture sensor's component. Pin (1301) may be mechanically attached to a member of a device from which gap position is to be measured, for instance, the armature of solenoid pinch valve (161). Object (1308) may be attached to the device or for instance, the solenoid valve or non-movable pole of solenoid pinch valve (161). As a gap between members closes, pin (1301) may be inserted into pin shaft (1302), closing off main tunnel (1303) in an amount that is proportional to the size of the gap (or position of the armature).

## Description

### Technical Field

The present disclosure relates generally to the field of fluid control. Fluid control may include, for example, the manner of processing, distributing, or storing of fluids to serve needs in a variety of applications. These include medical, pharmaceutical, bio-technology, laboratory, chemical processing, manufacturing, food and beverage, and industrial applications. More particularly, an embodiment of the present disclosure relates to a fluid control platform that can be configured into a fluid control system and fulfill the system-wide fluid control needs for a specific application.

### Background

Conventional fluid control systems may be used to reliably control fluids in various medical, pharmaceutical, bio-technology, laboratory, chemical processing, manufacturing, food and beverage, and industrial applications. Manufacturers typically provide fluid control systems for each of these applications, tailored to a particular user's needs, requiring customized system design.

Conventional fluid control systems utilize off-the-shelf components, but typically require custom designed hardware to control a plurality of elements. A fluid control system may need to support and control a variety of fluid control components, such as, for example, solenoid pinch valves, pneumatic control valves, brushless DC motors, and stepper motors, as well as various sensors. And each conventional fluid control system may require customized hardware design and software designs to meet the user's needs. Such hardware customization adds significant expense and time to the production of a fluid control system designed to meets a particular consumer's specifications.

Further, conventional fluid control components are not capable of storing and communicating digital information. As such, any digital data pertaining to the operation of, or identification of a conventional fluid control component may be stored or retrieved-if at all-only by use of memory associated with the controller of a fluid control system.

Solenoid pinch valves are commonly used in fluid control systems to control the flow of fluid through flexible tubing. The armature of a solenoid pinch valve is characteristically a movable iron core within the solenoid. Movement of the armature is due to a magnetic field created by current through the solenoid. Typically, solenoid pinch valves remain closed in the rest state due to an internal spring. The spring closes the solenoid pinch valve unless there is sufficient power to hold the valve open, i.e., in its actuated state.

Conventional fluid control systems may incorporate solenoid drivers. Commercially available pulse and hold solenoid drivers typically use a fixed, high-power pulse, followed by a low-power state to keep the solenoid in an actuated state. The fixed duration of the high-power pulse is necessary to ensure that actuation is completed before the low-power state begins. The manufacturer or user of a solenoid driver sets the duration of the high-power pulse when incorporating the solenoid driver into a fluid control system.

Additionally, relative position sensors may be used as fluid control components, for example to monitor solenoid pinch valves. Existing relative position sensors include digital optical slot sensors, mechanical switches, hall effect sensors, capacitive sensors, and linear resistive sensors.

As described above, purchasers and users of fluid control systems have varying needs, depending on the application for the fluid control system. These purchasers and users desire a customized, application-specific fluid control system developed without expending the significant resources that designing a fully-customized system requires.

### SUMMARY OF THE DISCLOSURE

One aspect of the invention comprises position sensors and methods of determining relative position and methods of calibration as set forth in the claims.

The invention is applicable to a fluid control platform comprising a first controller programmed to control a first set of a plurality of fluid control components; a controller board, wherein the controller board contains the first controller, and wherein the controller board contains hardware sufficient to permit the first controller to operate each of a plurality of different groups of fluid control components, including the first set of a plurality of fluid control components; a power supply connected to the first controller.

The first controller can be configured to determine if simultaneously operating a plurality of fluid control components requires an amount of power above a predetermined amount of power; and the first controller can be configured to delay operating at least one of the plurality of fluid control components if the amount of power is above the predetermined amount of power. The fluid control can further comprise an order of component priority programmed into the first controller, the order providing a sequence of operation of fluid control components if the amount of power is above the predetermined amount of power. The first controller can be configured to delay operating one of the plurality of fluid control components if the one of the plurality of fluid control components is not precedent in the order of component priority to a second component of the plurality of fluid control components to be operated. The first controller can also be configured to operate multiple components of a plurality of fluid control components simultaneously, if all fluid control components to be operated that are precedent in the order of component priority to the multiple components have been operated and if the controller determines that an amount of power required to operate the multiple components simultaneously is not above the predetermined amount of power. The order of component priority can be a preliminary order of component priority; and wherein the first controller references system information relating to system conditions and determines a second order of component priority based on the system information and the preliminary order of component priority.

The fluid control platform can further comprise a capacitive device connected to the first controller, wherein said first controller is configured to utilize power stored in said capacitive device. The first controller can also be configured to log operational data of the fluid control platform.

The first set of a plurality of fluid control components can include a solenoid actuator such as a solenoid pinch valve. The first controller can be configured to use adaptive pulse and hold techniques to operate the solenoid actuator. The solenoid actuator can have a static position (e.g. an open or closed position) and the first controller can be configured to measure an impedance of the solenoid actuator in the static position to obtain a measured value, compare the measured value to a predetermined impedance value of the solenoid actuator, and determine a position of the solenoid actuator from the comparison. The first controller can be configured to transmit an electrical signal having an AC voltage component through a circuit containing the solenoid actuator, measure a magnitude of the AC component of a resulting current that passes through the solenoid actuator, and compare the magnitude to a predetermined magnitude indicative of a position of the solenoid actuator subjected to the electrical signal to determine the position of the solenoid actuator. The solenoid actuator can have an armature, and the first controller can modulate an electrical signal sent to the solenoid actuator to control a velocity of the armature to control a position of the armature, for example.

The first set of a plurality of fluid control components can include an intelligent fluid control component comprising a first functional fluid control component; a data storage device; and a data communication device. The data storage device can contain authentication data; and the controller can be programmed to limit a function of the intelligent fluid control component dependent on the contents of the authentication data.

The fluid control platform can further comprise a sensor configured to measure a characteristic of a first fluid control component, wherein the first fluid control component is a member of the first set of a plurality of fluid control components, and wherein the first controller is configured to determine an operating point value of the first fluid control component based on the measured characteristic, and, based on the operating point value, to modify a parameter in the controller to improve operation of the first fluid control component. The first controller can modify the parameter in accordance with a lookup table stored in the first controller. Where the first fluid control component is a pinch valve, the measured characteristic can be a pinch force, a stroke, and/or a position of an armature of the pinch valve. Where the first fluid control component is an actuating peripheral device, the measured characteristic can be a time of actuation at a certain voltage, a time of actuation at a certain power level, and/or a time of actuation at a certain current. Where the first fluid control component is an actuating peripheral device, the measured characteristic can be a power required for actuation, a current required for actuation, a voltage required for actuation, a power required to maintain said fluid control component in an actuated state, a current required to maintain said fluid control component in an actuated state, and/or a voltage required to maintain said fluid control component in an actuated state.

The fluid control system can comprise a second controller programmed to control at least one fluid control component that is not a member of the first set of fluid control components; a first networking connection on the first controller configured to communicate with the second controller; a second networking connection on the second controller configured to communicate with the first controller; and one or more power supplies, each controller being connected to a power supply. The second networking connection can be configured to communicate with the first controller through a third controller. The third controller can have a third networking connection configured to communicate with one or both of the first and second controllers, and the first, second, and third controllers can be networked in a ring so that each controller receives data from one controller of the first, second, and third controller and transmits data (which can be transmitted via an optical fiber) to another controller of the first, second, and third controller. The fluid control can further comprise a user system in communication with the first and second controllers through a data connection to only the first controller. The first set of a plurality of fluid control components can include an intelligent fluid control component comprising a first functional fluid control component; a data storage device; and a data communication device.

The fluid control system can be manufactured by providing a prefabricated controller board, the controller board including a programmable controller and the controller board having hardware sufficient to permit the controller to operate each of a plurality of different groups of fluid control and input and output components; determining specifications of the fluid control system; based on the specifications, selecting a component group of fluid control components, zero or more data input and output components, and zero or more direct user input and output components; connecting the component group to the prefabricated controller board; and programming said controller to operate the component group. The step of programming said controller to operate the component group can occur prior to or after the connecting step. The selected component group can include an actuating peripheral device such as a solenoid actuator, a sensor, an intelligent fluid control component comprising a first functional fluid control component, a data storage device, and a data communication device.

The manufacturing can further comprise providing a second prefabricated controller board, the second controller board including a second programmable

The manufacturing can further comprise programming the first programmable controller to communicate with a user system; and connecting the user system to the first controller board; and can also comprise programming the first controller to control the component group, and programming the second controller to follow commands of the first controller. The method can further comprise providing a third prefabricated controller board having a third programmable controller, wherein the first, second, and third programmable controllers are networked in a ring so that each controller receives data from one controller of the first, second, and third controllers and sends data to another of the first, second, and third controllers. The selected component group can include an intelligent fluid control component comprising: a first functional fluid control component; a data storage device; and a data communication device.

Controlling a power supplied to the fluid control system can comprise determining an amount of power needed to comply with commands from a controller to simultaneously operate a plurality of system components, the plurality of system components including at least one fluid control component; determining if the amount of power is above a predetermined amount of power; and if the amount of power is above the predetermined amount of power, delaying operation of at least one system component. Prior to the step of determining an amount of power, the method can include receiving data from a system component of the plurality of system components, wherein the received data includes a power consumption characteristic of the system component.

Power control can further comprise referencing an order of component priority programmed into the controller, wherein the order of component priority lists the prioritization of operation of said plurality of system components if the amount of power is above the predetermined amount of power, and delaying operation of a first system component if the amount of power is above the predetermined amount of power, the first system component is not precedent to a second component in the order of component priority, and the second component has not yet been operated. Prior to referencing the order of component priority, the method can include referencing a preliminary order of component priority programmed into the controller; determining system conditions; determining the order of component priority based on the system conditions and the preliminary order of component priority; and programming the order of component priority into the controller.

Power control can further comprise referencing an order of component priority programmed into the controller, wherein the order of component priority lists the prioritization of operation of said plurality of system components if the amount of power is above the predetermined amount of power, and operating multiple components of said plurality of system components simultaneously, if all system components that are precedent in the predetermined order of component priority to said multiple components have been operated and if the controller determines that operating said multiple components simultaneously would not require more power than the predetermined amount of power. Prior to referencing the order of component priority, the method can comprise referencing a preliminary order of component priority programmed into the controller; determining system conditions; determining the order of component priority based on the system conditions and the preliminary order of component priority; and programming the order of component priority into the controller.

The position of a solenoid actuator that can be used in the system, such as a pinch valve, can be determined by transmitting an electrical signal having a first value of a first characteristic of the electrical signal through a circuit containing the solenoid actuator; measuring a second value of a second characteristic of the electrical signal after the electrical signal passes through the solenoid actuator; based on the first and second values, calculating an impedance of the solenoid actuator; and comparing the impedance to a predetermined impedance value indicative of a position of the solenoid actuator to determine the position of the solenoid actuator. The determination can further comprise the step of receiving the predetermined impedance value from a data storage device coupled to the solenoid actuator. The first characteristic can be a voltage across the solenoid actuator during a period time, and the second characteristic can be a current through the solenoid actuator during the period time. The electrical signal can be an AC signal, a non-sinusoidal time-varying signal or a nonmonotonic signal. The position of a solenoid actuator can also be determined by transmitting an electrical signal having an AC voltage component through a circuit containing the solenoid actuator; measuring a magnitude of the AC component of a resulting current that passes through the solenoid actuator; and comparing the magnitude to a predetermined magnitude indicative of a position of the solenoid actuator subj ected to the electrical signal to determine the position of the solenoid actuator. The predetermined magnitude can be received from a data storage device coupled to the solenoid actuator.

Noise from the solenoid actuator can be reduced by reducing a force of impact of an armature of the solenoid actuator against a contacting surface of the solenoid actuator by controlling an acceleration of an armature of the solenoid actuator during actuation, wherein the acceleration is controlled by modulating an electrical signal sent to the solenoid actuator. The electrical signal can be modulated to achieve a substantially constant velocity of the armature of the solenoid actuator, and to reduce a velocity of an armature of the solenoid actuator as the armature approaches a contacting surface. The position of the armature of the solenoid actuator can be determined and compared to a predetermined target position, and the electrical signal modulated to change a velocity of the armature based on the comparison of the position and the predetermined target position. The step of comparing can utilize data received from a data storage device coupled to the solenoid actuator. The method can further comprise determining the velocity of the armature of the solenoid actuator, and comparing the velocity to a predetermined target velocity, wherein the electrical signal is modulated to increase the velocity of the armature if the predetermined target velocity is less than the velocity, or decrease the velocity of the armature if the predetermined target velocity is greater than the velocity. The step of comparing can utilize data received from a data storage device coupled to the solenoid actuator.

Operation of a solenoid pinch valve can comprise modulating an electrical signal sent to a solenoid pinch valve to control a position of an armature, wherein the position is neither open nor closed. The position of the armature can be controlled by modulating an electrical signal sent to the solenoid pinch valve to control a velocity of the armature, and the velocity can be controlled by modulating an electrical signal sent to the solenoid pinch valve to control an acceleration of the armature.

A calibration value of a fluid control component in a fluid control system can be determined by connecting a fluid control component to a programmable controller, wherein the programmable controller is capable of measuring an electrical characteristic through the connection and, wherein the controller is programmed to operate a plurality of fluid control components; sending an electrical signal to the component; measuring the electrical characteristic of said component; determining an operating point value of said component based on the measured characteristic; and storing said operating point value in a data storage device coupled to said component. Calibrating operation of a fluid control component can be based on said operating point value, by automatically updating a program of said controller.

A calibration value of a fluid control component in a fluid control system can be determined by connecting a fluid control component to a programmable controller, the controller programmed to operate a plurality of fluid control components; connecting a sensor to said controller, the sensor being capable of measuring a characteristic of said component; via the sensor, measuring the characteristic of said component; determining an operating point value of said component based on the measured characteristic; and storing said operating point value in a data storage device coupled to said component. Calibrating the component can be based on said operating point value, by automatically updating a program of said controller.

The controller can update the program by modifying a parameter in a software of the controller in accordance with a lookup table and the said operating point value. Where the component is a pinch valve, the measured characteristic can be a pinch force, a stroke, and/or a position of an armature of a pinch valve. Where the component is an actuating peripheral device, the measured characteristic can be a time of actuation at a certain voltage, a time of actuation at a certain power level, and/or a time of actuation at a certain current. Where the component is an actuating peripheral device, the measured characteristic can be a power required for actuation, a current required for actuation, a voltage required for actuation, a power required to maintain the component in an actuated state, a current required to maintain the component in an actuated state, and/or a voltage required to maintain the component in an actuated state.

Calibrating operation of a fluid control component can comprise connecting a fluid control component to a programmable controller, wherein the component is capable of storing calibration data and communicating calibration data to the controller; transferring calibration data from the component to the controller; and calibrating the component based on the transferred calibration data, by: automatically updating a program of the controller, or automatically modifying a hardware configuration of the component. Where the component includes a potentiometer; the step of modifying a hardware configuration can include setting the potentiometer to a resistance value. The step of connecting can occur while the programmable controller is controlling a second fluid control component.

An intelligent fluid control component for use with the invention can comprise a first functional fluid control component, such as an actuating peripheral device or a sensor; a data storage device, such as an EEPROM chip; and a data communication device, which can be configured to communicate with a controller via a 1-wire system. The data storage device can store authentication data, calibration data, and/or operational log data. The intelligent fluid control component can further comprise a second functional fluid control component. The first functional fluid control component can comprise an actuating peripheral device, such as a pinch valve, and the second functional fluid control component can comprise a sensor that is configured to measure a characteristic of the first functional fluid control component, such as a position sensor that is configured to measure a position of the pinch valve.

A fluid control system having a plurality of fluid control components can be controlled by using a controller board wherein the controller board contains a single controller, and wherein the controller board contains hardware sufficient to permit the first controller to operate each of a plurality of different groups of fluid control components, including the first set of a plurality of fluid control components; and using the single controller, for operating a first fluid control component; for operating a second fluid control component of a type different from the first fluid control component. The first fluid control component can be a solenoid actuator, a stepper motor, a brushless DC motor, a pneumatic control valve, a permanent magnetic latching solenoid, a load cell, an encoder, an optical aperture sensor, and/or a peripheral device coupled with a sensor. The second fluid control component can be a solenoid actuator, a stepper motor, a brushless DC motor, a pneumatic control valve, a permanent magnetic latching solenoid, a load cell, an encoder, an optical aperture sensor, and/or a peripheral device coupled with a sensor. The first fluid control component can be operated by receiving or transmitting data from an intelligent fluid control component.

Additional objects and advantages of embodiments consistent with the disclosure will be set forth in part in the following description, and in part will be obvious from the description, or may be learned by practice of the embodiments disclosed herein. Both the foregoing general description and the following detailed description are exemplary and explanatory only and are not restrictive of the disclosure, as claimed. The accompanying drawings, which are incorporated in and constitute a part of this specification, illustrate several embodiments consistent with the disclosure and together with the description, serve to explain the principles of the disclosure

### BRIEF DESCRIPTION OF THE DRAWINGS

Figure 1 is a schematic diagram of a fluid control platform, according to one aspect of the disclosure.

Figure 2 is a schematic diagram of exemplary modules of a fluid control platform's controller, according to one aspect of the disclosure.

Figure 3 is a schematic diagram of a coordinated system of networked fluid control platform controllers in a ring configuration, according to one aspect of the disclosure.

Figure 4 is a detailed schematic diagram of an exemplary fluid control platform, according to one aspect of the disclosure.

Figure 5 is a flow chart illustrating a method of electronic noise dampening of solenoid actuators, which may be run by a controller of a fluid control system, according to one aspect of the disclosure.

Figure 6 is a flow chart illustrating a method of determining the position of a solenoid armature, which may be run by a controller of a fluid control system, according to one aspect of the disclosure.

Figure 7 is a flow chart illustrating a method of sequencing simultaneous commands requiring power input where a power overdraw is anticipated, which may be run by a controller of a fluid control system, according to one aspect of the disclosure.

Figure 8 is a flow chart illustrating a method of manufacture of a fluid control system utilizing at least fluid control platform as depicted in Figure 4, according to one aspect of the disclosure.

Figures 9A through 9E are a set of graphical representations that demonstrate electronic noise dampening techniques, according to one aspect of the disclosure.

Figures 10A through 10E are graphical representations of an impedance-based position detection technique, according to one aspect of the disclosure.

Figure 11 is a flow chart illustrating method of self-calibration of system components, according to one aspect of the disclosure.

Figure 12 is a graph of a decaying exponential curve depicting the relationship between solenoid armature position and the non-acceleration current supplied to the valve, the underlying values of which may be used to more accurately control a solenoid actuator in a fluid control system, according to one aspect of the disclosure.

Figure 13 is a side view of an optical aperture sensor, according to one aspect of the disclosure.

Figures 14 and 15 are overhead cross-sectional views of an optical aperture sensor-the cross-section denoted in Figure 13 according to one aspect of the disclosure.

Figure 16 is a side view of an optical aperture sensor-viewing the same side depicted in Figure 13 according to one aspect of the disclosure.

Figure 17 is a side view of an optical aperture sensor-viewing the side opposite of that depicted in Figure 13 according to one aspect of the disclosure.

Figure 18 is a circuit schematic illustrating an exemplary hardware feedback loop for an optical aperture sensor, according to one aspect of the disclosure.

Figure 19 is a circuit schematic illustrating an exemplary gain circuit for an optical aperture sensor, according to one aspect of the disclosure.

Figure 20 is a schematic diagram of an exemplary intelligent fluid control component, according to one aspect of the disclosure.

Figure 21 is a cross-sectional side view of an exemplary optical aperture sensor, according to one aspect of the disclosure.

Figure 22 is the same view of Figure 21 that additionally illustrates various angles and distances, according to one aspect of the disclosure.

Figure 23 is a graph depicting a substantially linear relationship between aperture position and the amount of radiant power received by a photo receiver of an exemplary optical aperture sensor, according to one aspect of the disclosure.

### DETAILED DESCRIPTION

Reference will now be made in detail to the exemplary embodiments of the disclosure, examples of which are illustrated in the accompanying drawings. Wherever possible, the same reference numbers will be used throughout the drawings to refer to the same or like parts.

The present disclosure describes a fluid control platform with a multi-purpose controller board capable of operating a variety of motors, solenoids, sensors, and/or other fluid control components. Such a multi-purpose controller board may contain a programmable controller and hardware suitable to control a number of fluid control components-that may be of distinct (or different) types-without additional hardware customization. That is, a multi-purpose controller board may contain any and all hardware-such as circuit components-necessary for the programmable controller to direct the actions of and/or receive feedback from a group of fluid control components. For example, the multi-purpose controller board may included standard hardware that will support several different types of fluid control components at the same time, such that individual controllers are not necessary for each fluid control component. A controller on the multi-purpose control board is programmable to support the function the several (and perhaps distinct) fluid control components without the need for additional hardware. (However, it should be noted that, depending on a particular fluid control systems specifications, additional wiring might be used to permit fluid control components to operate at certain distances away from a multi-purpose controller board. Such additional wiring is not considered additional hardware for the purpose of this disclosure.) For example, a fluid control platform may be functional after fluid control components are electrically coupled to (i.e. plugged into) a multi-purpose controller board, and the programmable controller is programmed to operate them (i.e. via software customization). Additionally, where a multi-purpose controller board is used (with hardware suitable to control fluid control components being standardized for that multi-purpose controller board), software customization may be cheaper and quicker than software customization required for a conventional customized fluid control system because, with a standardized multi-purpose control board, a manufacturer (or user) may program the controller using modular computer-code functions that are pre-written and/or standardized for use with particular types of fluid control components on that particular multi-purpose controller board. Indeed, one or more standardized, prefabricated multi-purpose controller boards (or types of standardized pre-fabricated controller boards) may be utilized to facilitate efficient assembly of an operational fluid control platform system.

Such a fluid control platform may support, for example, motive power, positioning, valving, actuation, sensing, and pumping, with minimal customization. Using a standardized fluid control platform with optional features may reduce manufacturing costs, replacement costs, inventory needs, and design lead time. Additionally, instead of custom designing and programming an entirely new control system for each application, manufacturers may instead choose from a variety of standardized options to quickly assemble and test a working prototype.

The fluid control system described below integrates a wide variety of fluid control components through a single controller board and allows networking with additional controller boards to support additional components. That is, where more fluid control components are desired than can be operated by a single multi-purpose controller board, more than one multi-purpose controller board may be utilized, and this plurality of controller boards may be networked together to form a coherent fluid control system.

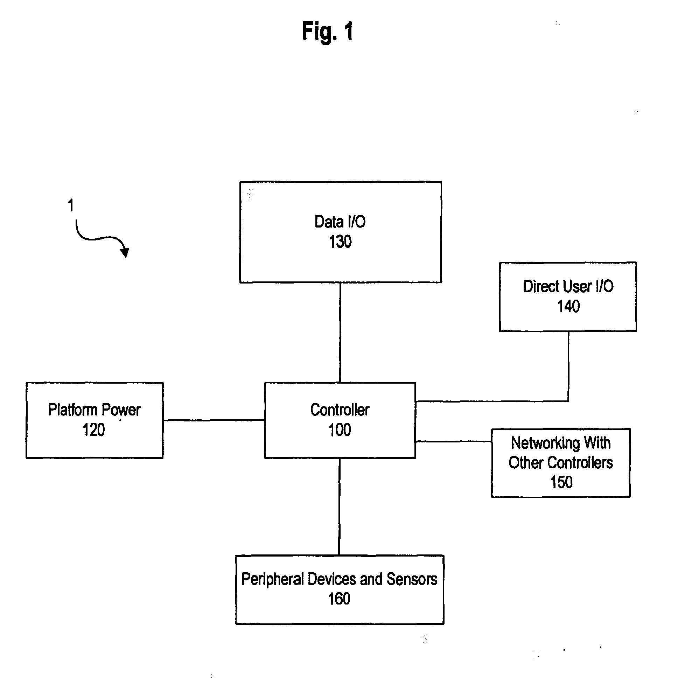

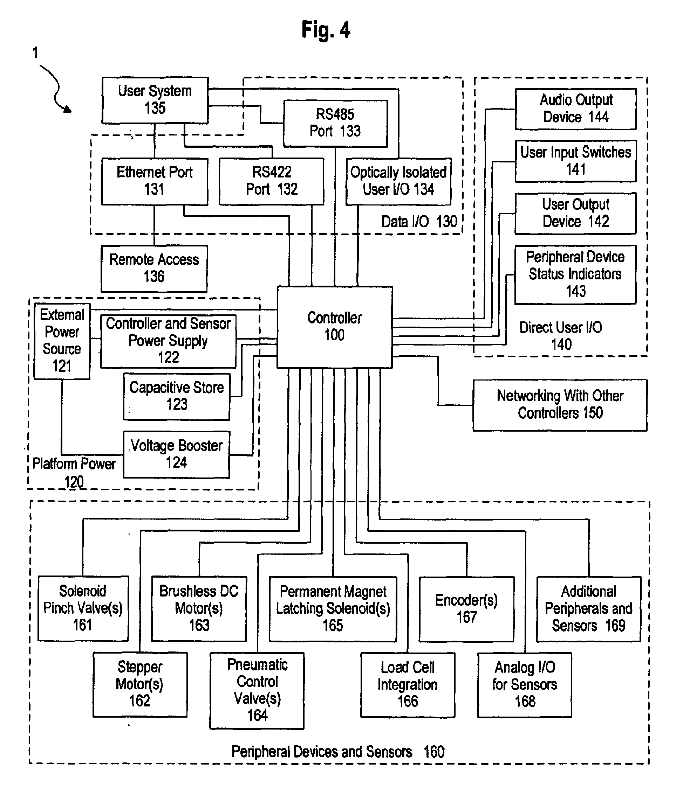

Features of a fluid control platform-both included and optional-according to an embodiment of the disclosure are described below. As illustrated in Figure 1 and Figure 4, fluid control platform 1 may include a controller 100 connected to one or more peripheral devices and sensors 160 and platform power 120. Controller 100 may further be connected to data I/O devices 130, direct user I/O devices 140, and networked with other controllers 150. All of these components, when connected to controller 100, may be considered part of fluid control platform 1.

Controller 100 may be programmable, may directly control various peripheral devices and sensors 160, may receive and analyze data from peripheral devices and sensors 160, may be networkable to other controllers 150. Controller 100 may include real time clock 101 and programmable controller software 112, and may feature various modules to facilitate its control over a fluid control platform or system, including data logging module 102, adaptive pulse and hold module 103, impedance-based position detection module 107, electronic noise dampening module 108, proportional control module 109, self calibration module 110, and sequencing scheme module 111. Those and other modules and functions may be selected and included in controller software 112, sometimes dependent on the types of fluid control components to be used in a fluid control system.

Fluid control components may include a number of peripheral devices and sensors 160. Peripheral devices may include, for example, solenoid pinch valves 161, stepper motors 162, brushless DC motors 163, pneumatic control valves 164 , and permanent magnetic latching solenoids 165. Exemplary sensors may include load cells 166, encoders 167, and sensors with analog output 168, which may be read by controller 100. For example, an optical aperture sensor may be read by controller 100 via analog I/O for sensors 168 and may be utilized to accurately measure relative position, that is, the distance between two bodies. These peripheral devices and sensors 160 may be used together in virtually any combination and in virtually any amount.

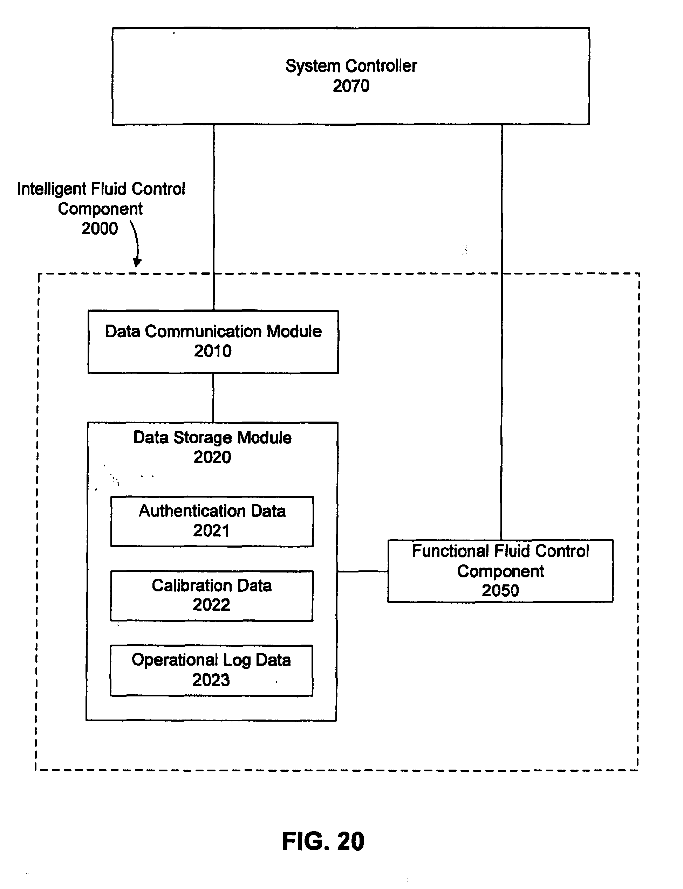

These peripheral devices and sensors 160 may or may not be considered intelligent, that is may or may not have data functionality. For example, as shown in Figure 20, an intelligent fluid control component 2000 may comprise a functional fluid control component 2050 (i.e. any peripheral device or sensor 160) integrated with a data storage module 2020 and a data communication module 2010.

Additionally, controller 100 may communicate with a separate user system 135 or provide remote access 136 to a user via data I/O 130. A user may provide and receive feed back to and from a controller 100 via direct user I/O 140.

Throughout this application, many embodiments of fluid control platforms and systems are described with reference to operating solenoid pinch valve 161. Integration of solenoid pinch valve 161 into a fluid control platform or system is, however, used as an example, and as such, this disclosure applies to embodiments featuring other fluid control peripherals and sensors 160, and such systems may or may not include solenoid pinch valve 161. Additionally, it should be understood that the available functions or modules of controller 100, often described with respect to solenoid pinch valve 161, will change depending upon the fluid control peripheral or sensor being operated by controller 100. Further, fluid control components integrated into fluid control platforms or systems may additionally or alternatively be "intelligent," that is, such fluid control components may be capable of storing and communicating digital data.

### Controller

Controller 100 controls fluid control platform 1. Controller 100 controls and receives data from attached peripheral devices and sensors 160. Controller 100 may be programmable to accommodate particular fluid control requirements. For example, controller 100 may be programmable via controller software 112, facilitating efficient customization to specified fluid control components, to external user systems 135 that interact with the fluid control system, and to specified timing and functions. Controller software 112 may be initially programmed in-factory, as part of the assembly of fluid control platform 1. It may be preferred to customize controller software 112 for each fluid control platform 1. That is, in programming controller software 112, the programmer may consider, for example, what peripheral devices and sensors 160 will be integrated, the operating point values of such components (as determined by calibration, discussed below), what modules of controller 100 will be utilized and how they will be configured, the data communication requirements of user system 135, and the various fluid control needs of the particular system (including timing and direct user I/O 140). And with reference to Figure 20, controller 100 (embodied as system controller 2070) may communicate with data communication modules 2010 of intelligent fluid control components 2000.

As illustrated in Figure 4, peripheral devices and sensors 160 may include, for example, one or more load cells 166, encoders 167, solenoid pinch valves 161, stepper motors 162, brushless DC motors 163, pneumatic control valves 164, sensors via analog I/O for sensors 168, and/or permanent magnet latching solenoids 165. Controller 100 may permit the input and output of data to and from user systems 135 or through remote access 136 via data I/Os 130, and permit the direct input and output of data to one or more users via direct user I/Os 140. Controller 100 may continuously and precisely monitor the voltage and current output of external power source 121. Controller 100 may utilize external power source 121 to drive various peripheral devices 160; may further utilize voltage booster 124 to drive solenoid pinch valves 161 or other components when higher voltages are required; may charge and discharge capacitive store 123 to compensate for fluctuations in energy and aid in driving solenoid pinch valves 161 and other components; may drive analog sensors 168, encoders 167 and other components from controller and power supply 122; and controller 100 may run off of regulated power from controller and power supply 122.

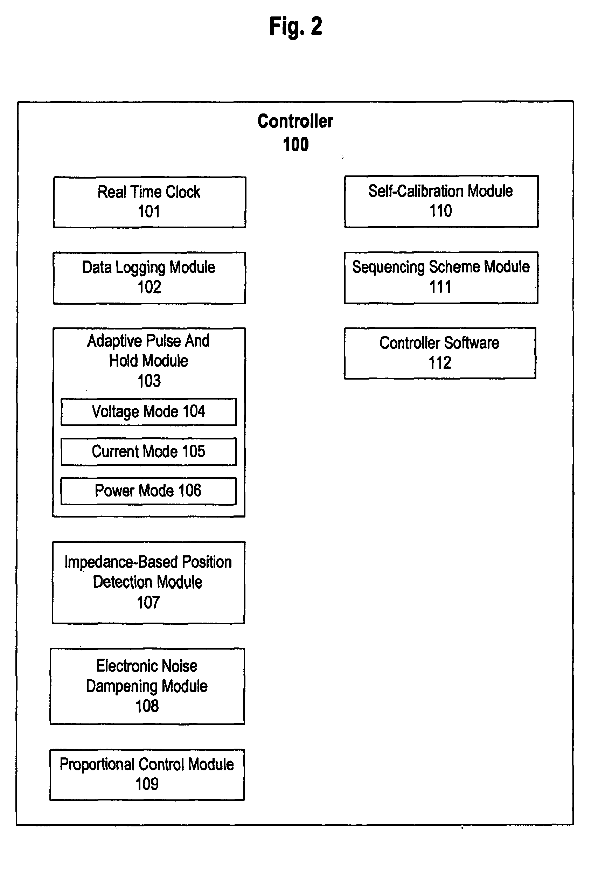

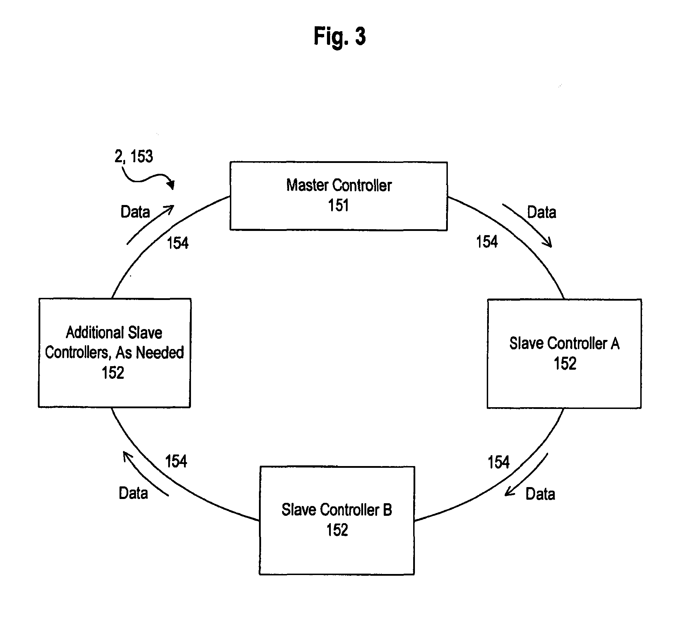

As illustrated in Figure 2, controller 100 may include several modules that assist with the control and operation of fluid control platform 1. Further, controller 100 may network with other fluid control platform controllers 100 so that multiple platforms may be joined together into a coordinated fluid control system 2, as illustrated in Figure 3 (with components omitted).

As illustrated in Figure 4, controller 100 may act as a multi-purpose controller board, capable of operating a variety of motors (such as stepper motor 162 and brushless DC motor 163), solenoids (such as solenoid pinch valve 161, permanent magnet latching solenoid 165, certain pneumatic control valves 164, and other solenoid transducers), encoders 167, analog sensors 168, and other fluid control components (such as pneumatic control valves 164 and other additional peripherals and sensors 169). Some of these fluid control components, which may additionally have data functionality, are described in detail below. Fluid control platform 1 may be configurable to support a variety of fluid-control functions, including, for example, motive power, positioning, actuation, and pumping. Unlike conventional fluid control systems that typically require customized hardware design for each component or set of components, the fluid control platform's controller 100 may be configured to control a variety of peripheral devices and sensors 160, including those that may be intelligent fluid control components 2000. Thus, using fluid control platform 1, including controller 100, may reduce production and replacement costs and may permit quicker production of a fluid control system.

As shown in Figure 2, controller 100 may also run various modules to reduce energy consumption and noise. Such exemplary modules are described in detail below. Such modules may be integrated into controller 100 either by including modules in controller software 112 or by adding additional hardware. For example, the modules may be integrated into controller 100 through the use of microcontroller chips, analog integrated circuits, or dedicated memory chips. Indeed, controller 100 may comprise one or more integrated circuits.

Controller 100 may be required to fit within a predetermined footprint, even in different configurations. Controller 100 may also be stackable, so as to allow combinations desired by users.

Using a standard fluid control platform with features that may be selected lowers manufacturing costs and design lead time. Instead of custom designing and programming an entirely new electronic control system for each application, manufacturers can instead choose from a variety of pre-designed options to quickly assemble and test a working prototype. That is, software or hardware necessary to manifest a particular option or set of options may need to be designed only once, and may be easily re-implemented in the future.

Predetermined options packages may be available to users of the fluid control platform. That is, a prefabricated, standardized multi-purpose controller board may contain controller 100 and the requisite hardware to permit controller 100 to operate fluid control components that are provided for in a particular options package. For example, a solenoid-focused configuration, intended to drive one or more solenoid pinch valves 161, may be one such available package. Such a configuration may include controller 100, controller and power supply 122, data I/O 130, direct user I/O 140, networking capability 150 (even though it may not be utilized in this particular configuration), solenoid pinch valves 161, capacitive store 123, and voltage booster 124. Different predetermined fluid control platforms 1 may include motor-focused packages or sensor-focused packages, depending on user needs. A motor-focused package may include controller 100, controller and power supply 122, data I/O 130, direct user I/O 140, networking capability 150, and stepper motor 162 or brushless DC motor 163. A sensor-focused package may include controller 100, controller and power supply 122, data I/O 130, direct user I/O 140, and networking capability 150, as well as integrating sensors through analog I/O for sensors 168.

### Adaptive Pulse and Hold Module

As shown in Figure 2, controller 100 may include adaptive pulse and hold module 103. An exemplary adaptive pulse and hold technique has been commercially by Acro Associates via marketing of adaptive pulse and hold solenoid drivers, such as the model 900R Modular Solenoid Controller.. Under an adaptive pulse and hold scheme, feedback to the driver regarding the position of a solenoid pinch valve's armature-whether the valve is open or closed-may permit the high-power pulse to be shortened. That is, once the driver receives information that a solenoid pinch valve has completed actuation, the driver may promptly modify its output to that solenoid pinch valve to a low-power state.

An adaptive pulse and hold algorithm determines an optimal high-power pulse length needed to actuate the solenoid pinch valve based upon the load current drawn by the solenoid pinch valve as it actuates. As actuation nears completion, the load current dips because energy in the system is moving from the magnetic field into both the kinetic energy of the armature's movement and the potential energy stored in the spring within the solenoid pinch valve. Then, as soon as actuation is completed, the load current begins to increase. In particular, the driver may examine the current flowing into the solenoid, and vary the pulse duration as appropriate. This, in turn, may limit unnecessary heat production due to current through the solenoid's resistive winding and lead to a lower power footprint for the solenoid driver.

For example, a typical solenoid pinch valve may require a pulse of between 30 and 50 ms to open. With no feedback to the driver, a fixed pulse of approximately 150-200 ms may be required to ensure that the solenoid pinch valve has fully actuated. With feedback, however, the driver may terminate the high-power actuating pulse upon receiving feedback that the solenoid armature has been repositioned. This early termination of the pulse may reduce average power consumption and may shorten the minimum length of time of a solenoid pinch valve's actuation cycle.

This technique allows for a shortening of the high-power pulse used to actuate solenoid pinch valves 161. Thus, this module may reduce the amount of energy consumed in each solenoid actuation cycle. In initially configuring adaptive pulse and hold module 103, a user may select one of three adaptive pulse and hold modes in which to drive solenoid pinch valves in fluid control platform 1: voltage mode 104, current mode 105, and power mode 106. Voltage, current, and power modes may driven by controller 100 without additional hardware. Thus, different modes may be chosen for each solenoid pinch valve 161 in fluid control platform 1 to meet a particular application's needs. Indeed, a single solenoid pinch valve 161 may even run different modes at different times or under different circumstances.

### Voltage Mode Pulse and Hold Control

In voltage mode 104 pulse and hold control, controller 100 maintains a first steady average voltage throughout the high-power driving pulse sent to solenoid pinch valve 161, and a second lower steady average voltage during the hold state. In voltage mode 104, however, controller 100 may ignore minor fluctuations in current drawn from external power source 121.

Voltage mode 104 may be considered the most basic of the three pulse and hold control modes. Voltage mode 104 may permit controller 100 to maintain functionality in the adaptive pulse and hold technique despite that voltage input may vary. For example, in voltage mode 104, controller 100 may-by varying the duty cycle through pulse width modulation techniques-regulate effective voltage output to solenoid pinch valve 161, even if voltage input from external power source 121 is not regulated, such as where external power source 121 is a battery. Further, although controller 100 may not specifically control current in this mode, controller 100 may monitor current to the extent necessary to detect a fault, such as a short or open circuit.

### Current Mode Pulse and Hold Control

In current mode 105 pulse and hold control, controller 100 maintains a first controlled current throughout the high-power driving pulse sent to solenoid pinch valve 161, and a second lower steady state current during the low-power hold state.

The resistance of solenoid pinch valves 161, or other solenoid actuators, may vary throughout the duration of operation-due to temperature, manufacturing tolerances, and other factors-and thus current may vary if the driving voltage remains constant. In current mode 105, controller 100 monitors the load current and modulates output voltage to maintain a steady current. Controller 100 acts to maintain this feedback loop.

Current mode 105 may result in additional energy savings over voltage mode 104 because a higher-than-necessary current results in additional wasted energy. Additionally, by monitoring the current, controller 100 may quickly detect an improper load impedance, which could indicate a solenoid pinch valve 161 malfunction or other system fault. Thus, current mode 105 may permit controller 100 to recognize faults more quickly.

### Power Mode Pulse and Hold Control

In power mode 106, controller 100 maintains delivery of a constant average amount of power to solenoid pinch valve 161. One benefit of delivering constant average power to solenoid pinch valve 161 is that the valve may be continuously heated because the delivery of power results in the generation of a steady amount of waste heat. This may serve to maintain a constant temperature in a solenoid, which may be referred to as "preheating." By maintaining a steady temperature in the solenoid, accuracy in timing of actuation may be improved. For instance, in voltage mode 104 and current mode 105, slight changes in temperature of solenoid pinch valve 161 may result in a slight variation in actuation.

Power mode 106 adaptive pulse and hold control may be accomplished where controller 100 delivers the low-power hold current to solenoid pinch valve 161 even when solenoid pinch valve 161 is in its rest position. Supplying this low-power hold current to a resting solenoid pinch valve 161 will not actuate the solenoid. However, if solenoid pinch valve 161 becomes actuated, for instance due to a user manually moving the solenoid's armature, while the low-power hold voltage is being delivered by controller 100, solenoid pinch valve 161 will remain actuated. In this case, power mode 106, may result in the controller 100 maintaining improper position of solenoid pinch valve 161, causing a system fault. As such, power mode 106 may require position sensing feedback to operate effectively. Controller 100 may determine the position of solenoid pinch valve 161 through an analog sensor 168, another sensor, or through impedance-based position detection module 107. By periodically determining the position of solenoid pinch valve 161, controller 100 may verify that the position of solenoid pinch valve 161 is as expected, and if controller 100 determines that solenoid pinch valve 161 is improperly actuated, it may temporarily reduce the current to solenoid pinch valve 161, thereby returning solenoid pinch valve 161 to its resting state.

In power mode 106, controller 100 may vary the current to ensure that average power output to the solenoid pinch valve 161 remains constant.

### Impedance-based Position Detection

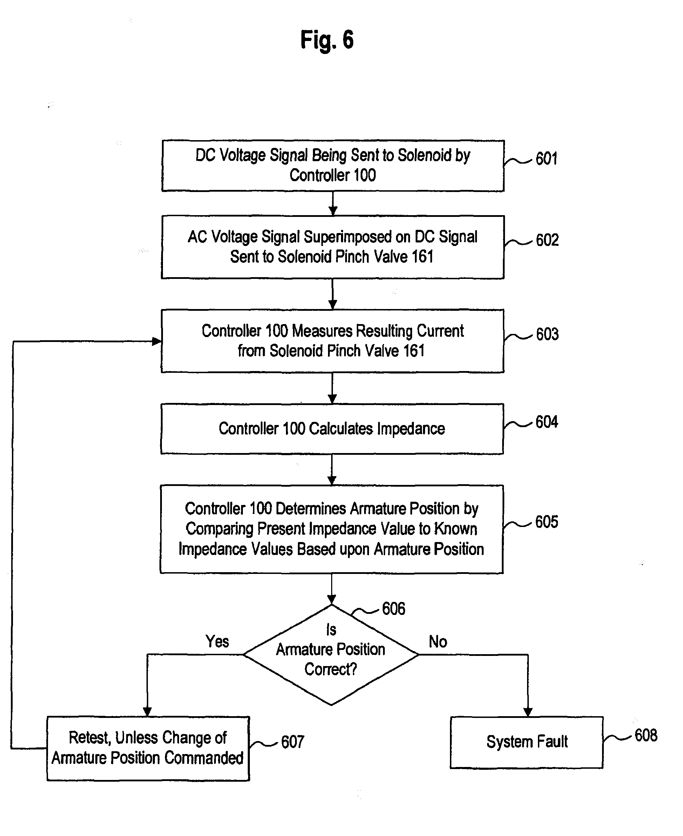

As illustrated in Figure 2, controller 100 may further include impedance-based position detection module 107. As set forth in Figure 6, impedance-based position detection module 107 may verify the position of static solenoids. A solenoid is considered static when its armature is not moving. Controller 100 may execute impedance based position detection module 107 through software.

Verifying the position of a solenoid, for instance solenoid pinch valves 161, may serve to detect some system faults. Thus, it may be beneficial to the effective operation of fluid control platform 1 for controller 100 to periodically determine the position of the static solenoid pinch valves 161. Existing technology to determine position of static solenoid pinch valves 161 includes using either electrical contacts (external to the solenoid coil) or hall effect sensors. Although such sensors may be integrated into fluid control platform 1, the use of such sensors may require use of additional sensor connections to controller 100 and may represent an increase in manufacturing costs, repair costs, physical size of the platform, and platform energy use. Impedance-based position detection module 107 may eliminate the need for an external sensor. In turn, this may reduce cost, open up more controller ports for peripherals, and conserve power.

Impedance measurements may be used determine the position of a solenoid pinch valve's armature because a solenoid's electrical impedance varies with the position of its armature. (As a matter of terminology, a determination of the position of a solenoid's armature is equivalent to a determination of the position of the solenoid.) Although adaptive pulse and hold module 103 determines when actuation is completed by measuring the load current through an actuating solenoid pinch valve 161, simply measuring the load current is insufficient where both the position of the armature is static and the electrical signal sent to the solenoid is static, having no time-varying component. During the low-power DC hold voltage sent to solenoid pinch valve 161 and during periods where a rest electrical signal (for instance, 0 V DC) is sent, the electrical signal remains static and the reactive part of the solenoid's impedance cannot be determined from the load current. That is, measuring a load current based solely on a static electrical signal may not provide a complete impedance measurement, and thus may be insufficient to determine the position of a static solenoid pinch valve 161.

The impedance of a static solenoid pinch valve 161 may be calculated by using an AC + DC variable-impedance technique. That is, adding an AC component to the DC electrical signal sent to static solenoid pinch valve 161 may provide for a more complete measurement of the solenoid's impedance. Adding a DC component (or pulse) may be unadvisable when using the AC + DC variable-impedance technique to measure impedance because, among other reasons, a DC signal of significant magnitude has the potential to change the position of the solenoid armature and undermine operation of fluid control platform 1. Further, solely adding a DC component and measuring the resulting current may not provide a complete impedance measurement, as described above. This general technique, however, may also be utilized by adding a time-varying signal component that is not an AC signal or is a non-monotonic signal.

In one embodiment, as shown in Figure 6, a DC signal from controller 100 is used to maintain the armature's static position, as in step 601, and impedance-based position detection module 107 superimposes an AC signal at a specific frequency on the DC signal, as in step 602. The signal may be provided as voltage input to solenoid pinch valve 161. Impedance-based position detection module 107 may then measure the resulting signal after it passes though the solenoid, as in step 603. The resulting signal may be measured as the current flowing through solenoid pinch valve 161. By analyzing the AC component of the resulting signal and comparing it to the AC component of the original signal, the impedance of the solenoid may be derived, as in step 604. This calculated impedance may be indicative of the position of the armature. Impedance-based position detection module 107 may then determine the position of the armature by comparing this calculated impedance value to 'control' impedance values of the same solenoid pinch valve 161 in various positions, which may include fully open, fully closed and a range of intermediate positions, as in step 605. Impedance-based position detection module 107 may use a lookup table for control values. And where solenoid pinch valve 161 is also intelligent fluid control component 2000, such control values may be stored in (and received from) data storage module 2020 as, for example, calibration data 2022. Module 107 may then determine if the actual position of the armature matches the proper position of the armature, as in step 606. If the armature position is correct, controller 100 may either retest the armature's position, as in step 607, and return to step 603. Or, controller 100 may reposition the armature if appropriate, for instance, in response to a controller 100 command, as in step 607. If the armature position is incorrect, a system fault may have occurred, as in step 608.

In another embodiment, impedance-based position detection module 107 may eschew actually calculating the impedance value. In cases where the AC voltage component added to the signal sent to solenoid pinch valve 161 is known, controller 100 may instead simply compare the AC component of the resulting current to predetermined values based on the known AC voltage component. These predetermined values may have been previously programmed into controller 100 to discern solenoid pinch valve 161's position. And where solenoid pinch valve 161 is also intelligent fluid control component 2000, such predetermined values may be stored in (and received from) data storage module 2020 as, for example, calibration data 2022.

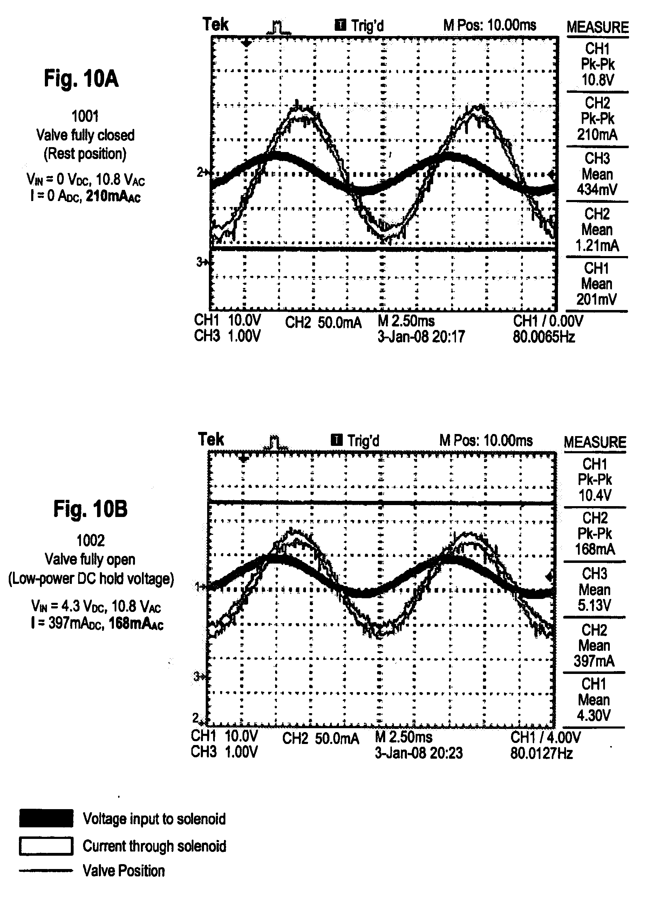

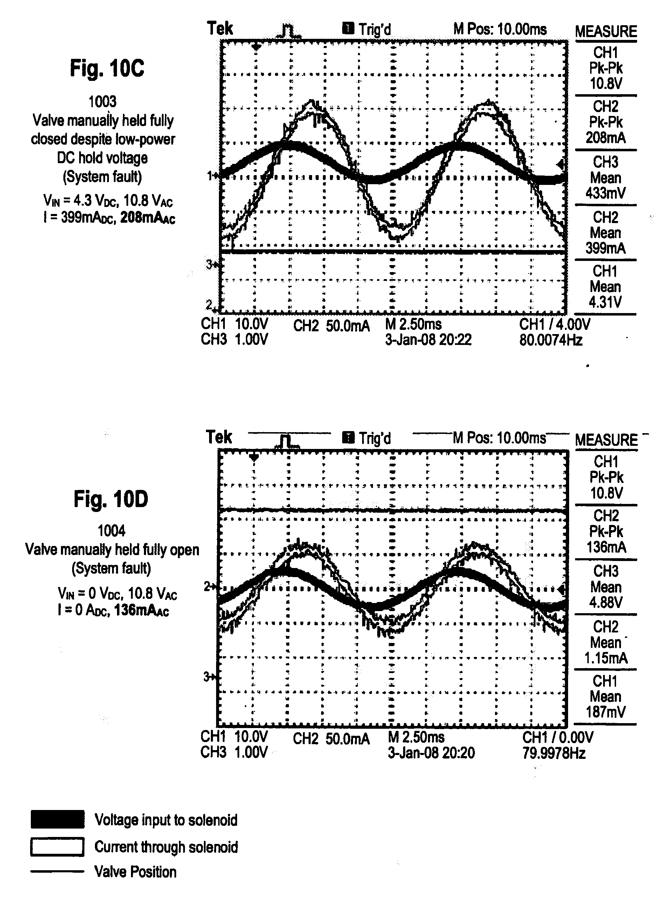

As shown in Figures 10A through 10E, the AC component of the resulting current varies with the position of solenoid pinch valve 161 when the same AC voltage component is applied. In generating most of these multimeter printouts, an AC component of 10.8 V peak to peak and 80 Hz was used. Figure 10B, however, used an AC component of 10.4 V peak to peak. The DC coil resistance of the valve was 10 Ω. The thin line represents the position of the valve, with a greater value (as in Figures 10B and 10D) showing the valve fully open, a smaller value (as in Figures 10A and 10C) showing the valve fully closed, and an intermediate value (as in Figure E) showing the valve partially open.

Although exemplary embodiments may add an AC voltage component of about 1 Vrms (2√2 V peak to peak) such a small amplitude may require a high gain current amplifier. And such high gain current amplifiers may be included in controller 100. In generating Figures 10A through 10E, an AC component on the order of 10 V peak to peak was used for demonstration purposes. However, in viewing Figures 10A through 10E, it must be noted that a 10 V peak to peak AC current may partially saturate the magnetic field and thus the relation between AC voltage component input and the resulting AC current component may be non-linear. Still, Figures 10A through 10E demonstrate the viability of this embodiment of the impedance-based position measurement technique.

Figures 10A and 10C show solenoid pinch valve 161 in a closed position. In Figure 10A, the valve is in a rest state, in closed position. This is consistent with normal operation because the DC Voltage input is 0 V. Here, the resulting AC current is 210mA peak to peak. In Figure 10C, the valve is being held closed manually, but is receiving a typical low-power hold signal of 4.3 V DC. Here the resulting current's AC component is 208mA peak to peak. The AC components of the resulting currents in both Figures 10A and 10C are similar. In fluid control platform 1 operation, controller 100 may recognize that a resulting current of around 210mA peak to peak indicates that a valve is closed. And in a situation like Figure C, where the valve is closed despite that controller 100 is providing a low-power hold signal to keep the valve open, controller 100 may recognize a system fault because of impedance-based detection module 107.

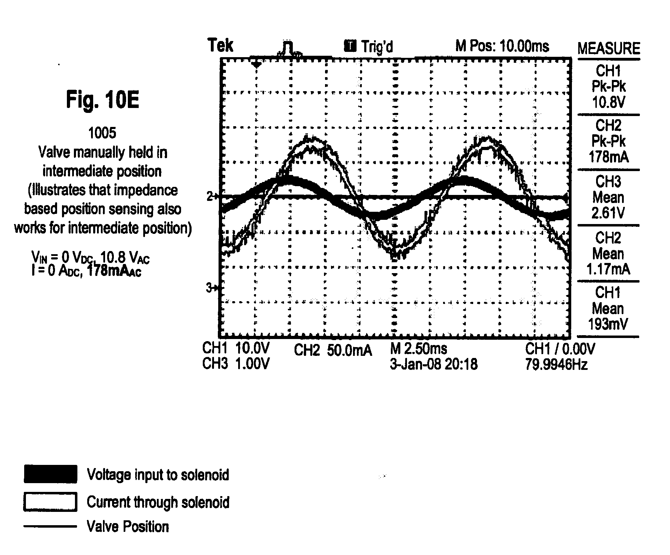

Figures 10B and 10D show solenoid pinch valve 161 in an open position. In Figure 10B, the valve is held closed by the low-power hold signal. This is consistent with normal operation because the DC Voltage input is 4.3 V. Here, the resulting AC current is 168mA peak to peak. In Figure 10D, the valve is being held open manually, but is receiving the rest signal of 0 V DC. Here the resulting current's AC component is 136mA peak to peak. The AC components of the resulting currents in both Figures 10B and 10D are relatively similar. Both "open" AC current components (Figures 10B and 10D) are significantly smaller than the "closed" AC current components (Figures 10A and 10C). Further, both "open" AC current components are smaller than the "half-open" AC current component of Figure 10E. In fluid control platform 1 operation, controller 100 may recognize that a resulting current of around 170mA peak to peak or below indicates that a valve is open. And in a situation like Figure 10D, where the valve is open despite that controller 100 is not providing a low-power hold signal to keep it open, controller 100 may recognize a system fault because of impedance-based detection module 107.

Figure 10E illustrates that impedance-based detection module 107 might also detect intermediate positions of solenoid pinch valve 161, in addition to fully open and fully closed positions. In Figure 10E, the valve is being manually held half-way open and the AC component of the resulting current is 178mA peak to peak. This value is in between the manually held fully open resulting AC components of Figure 10B and Figure 10D, and the manually held fully closed resulting AC component of Figure 10A and Figure 10C.

A frequency around 80 Hz may be most effective as a super-imposed AC frequency And a bandpass filter permitting a bandwidth of about 20 Hz may improve operation when measuring the resulting AC current. Although 50-60 Hz may be theoretically ideal as a superimposed frequency, the potential electronic noise due to environmental factors at such a frequency-such as the domestic power distribution system- may make its use unfavorable. Similarly, harmonics of 50 and 60 Hz might also be best avoided. It should also be noted that international power distribution systems may potentially create electronic noise around 50 Hz and 60 Hz. Further, where solid-iron core solenoid pinch valves 161 are used, higher frequencies may be best avoided. This is because at higher frequencies the magnitude of the AC component of the resulting current does not vary significantly with different armature positions. In a case where a DC pulse of about 20-24 V is required to actuate a solenoid pinch valve and about 4-6 V DC are required to maintain the hold state, a signal of about 1 Vrms (2√2 V peak to peak) may be desirable for the AC component. Pulse width modulation techniques may be used to create both the DC and the AC components of the signal. A frequency of 25 kHz - 30 kHz may best serve to modulate the desired signal for effective impedance measurement.

Other alternative embodiments of impedance-based position detection module 107 include adding a non-sinusoidal time-varying electrical signal to the DC signal. Additionally, under some conditions, measuring the phase shift of the resulting signal or charge/discharge time to a threshold may serve to provide sufficient information to determine solenoid pinch valve 161 position. Some methods of measuring phase shift, however, may require the intermediate step of determining the magnitude of the resulting AC component, making the phase shift method impractical.

Through module 107, controller 100 may verify that a solenoid armature is in the correct position and that this component of the fluid control system 1 is functioning properly.

### Electronic Noise Dampening

As illustrated in Figure 2, controller 100 may further include electronic noise dampening module 108 to reduce mechanical noise from the actuation of solenoid pinch valves 161, other solenoid devices, or other actuators. The use of, for example, solenoid pinch valves 161 in a fluid control system presents the potential drawbacks of creating mechanical noise, wasting energy, and emitting waste heat. Typically, the actuation of solenoid pinch valve 161 results in a rapidly increasing acceleration of a solenoid armature, whereby the armature's velocity rapidly increases non-linearly. With constant voltage input, the armature's acceleration increases as it actuates because the armature force is approximately inversely proportional to the distance remaining in the gap. Without dampening, this armature-after rapidly accelerating-abruptly impacts the contacting surface upon full actuation. The armature is traveling at a high velocity as it finishes actuating, and thus, much of its kinetic energy dissipates as mechanical noise and heat due to impact. Waste-heat is produced by the electric current passing through the solenoid's resistive windings, and such heat can reduce the life of solenoid pinch valve 161. Further, this mechanical noise represents energy inefficiency. The mechanical noise is created by extraneous kinetic energy, which is derived from the extraneous electrical energy used to actuate the armature.

In some circumstances, the mechanical noise is audible to the human ear. And in medical applications, the noise can disturb patients, hindering their ability to rest, relax, or sleep as needed to facilitate the healing process. For example, some medical applications require the use of a 3/8 inch tube, which may require about 10 pounds of force to pinch. Undampened mechanical noise from a solenoid pinch valve 161 large enough to deliver such force may result in a disturbing clicking sound.

Conventional fluid control systems may use a mechanical damper, such as, for example, a dashpot or an elastomer pad between contacting surfaces, to dampen the solenoid pinch valve's motion and reduce mechanical noise. It should also be noted that a tube placed within a solenoid pinch valve 161 may dampen mechanical noise as a valve closes. A dashpot may reduce mechanical noise by slowing the movement of the armature as it approaches completion of actuation, and in some applications, as it approaches return to rest position. Although use of a dashpot may reduce audible mechanical noise, the system loses additional energy through the physical damper. That is, additional electrical energy is consumed to compress the damper's working fluid. An elastomer pad may be placed between a solenoid's armature and its contacting surface and works by acting as a bumper when solenoid pinch valve 161 opens. Although additional electrical energy may not be needed during actuation, the pad creates a gap between the armature and the contacting surface when solenoid pinch valve 161 is held in its actuated state. As such (and discussed below), a larger hold-in current, consuming additional electrical energy, may be required to hold the armature in place. Thus, the use of elastomer pads may result in larger energy footprint in the "hold" part of a solenoid's actuation cycle. An additional technique for reducing mechanical noise is to utilize a solenoid pinch valve 161 in which the contacting surfaces are either tapered or angled, rather than flat. Such a valve, however, requires additional current to operate.

Controller 100 may utilize electronic noise dampening module 108 to control the motion of solenoid pinch valves 161 or other valves or devices. Modulating the magnetic field of the solenoid at high speeds may allow module 108 to control the velocity of the armature. The magnetic field of the solenoid may be modulated by means of modulating the electrical input into the solenoid. An analog output may be used to generate the modulated electrical input. Or a digital output at a supply level voltage may be used to generate the modulated electrical signal via pulse width modulation. By controlling the electrical energy input to the solenoid in this manner, electronic noise dampening module 108 may slow the armature, allowing actuation of solenoid pinch valve 161 to be completed with a reduced physical impact between the armature and the contacting surface.

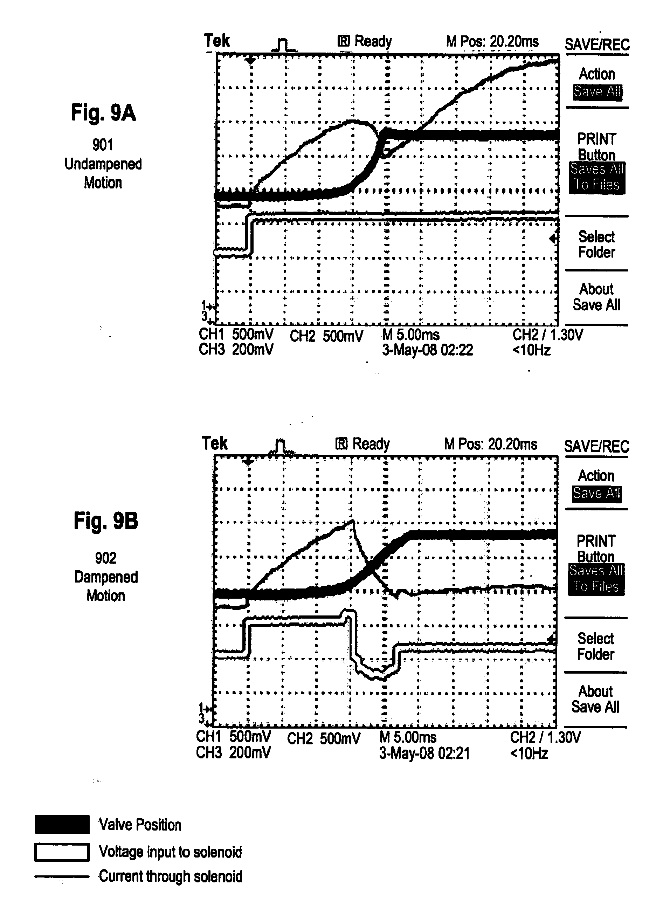

Specifically, Figures 9A though 9E are multimeter printouts that illustrate how modulating the voltage input to solenoid pinch valve 161 may dampen or reduce mechanical noise from actuating a solenoid. In each multimeter printout, valve position is shown with a thick black line. The valve is open when the line is at the upper limit and is closed when it is at the lower limit. Voltage input is shown with a white line, outlined in black. Although the modulated voltage input in Figures 9A through 9E was generated by using an analog output, this effect may also be achieved with a digital output via pulse width modulation.

Figure 9A illustrates undampened actuation of solenoid pinch valve 161. Voltage input simply increases and remains at a high-power actuating level. The armature's acceleration rapidly increases throughout the entire period that the valve is actuating. And the armature's position increases exponentially until it abruptly stops when the solenoid is fully actuated. The rapid deceleration upon completion of actuation is indicative of significant mechanical noise.

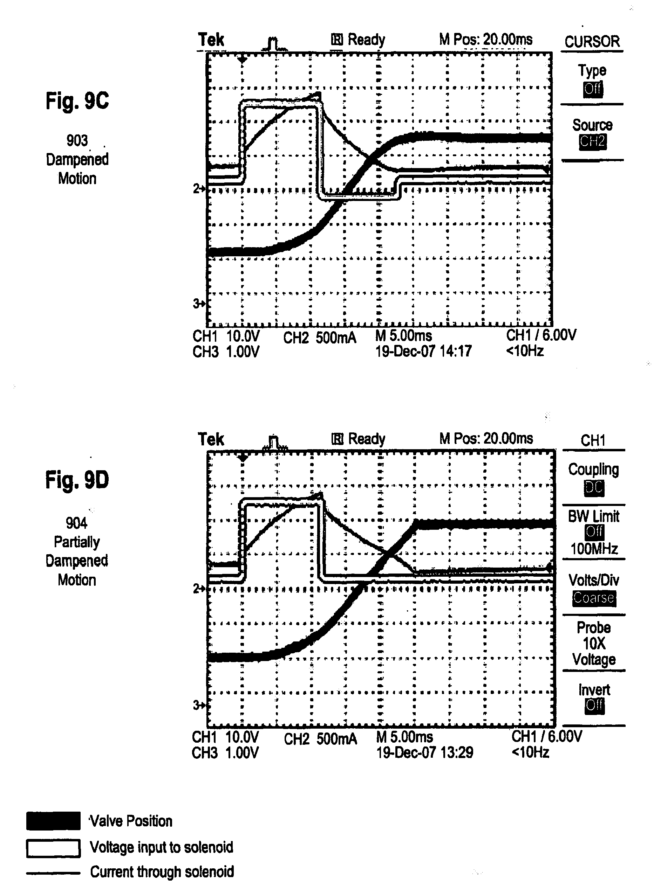

Figures 9B and 9C illustrate different embodiments of the electronic noise dampening techniques. In both Figures 9B and 9C, the voltage input is modulated once the armature has begun to rapidly increase its acceleration. The effect of such modulated voltage input is that the armature slows considerably before the valve is fully opened. This is apparent in the multimeter printouts by the smooth curve of the valve position lines as they approach the upper limit. That the voltage input signals in Figures 9B and 9C vary so widely and both achieve a similar result is indicative of the wide variety of electrical signals that embody electronic noise dampening. Because the armature is moving relatively slowly upon the completion of actuation, mechanical noise is significantly reduced.

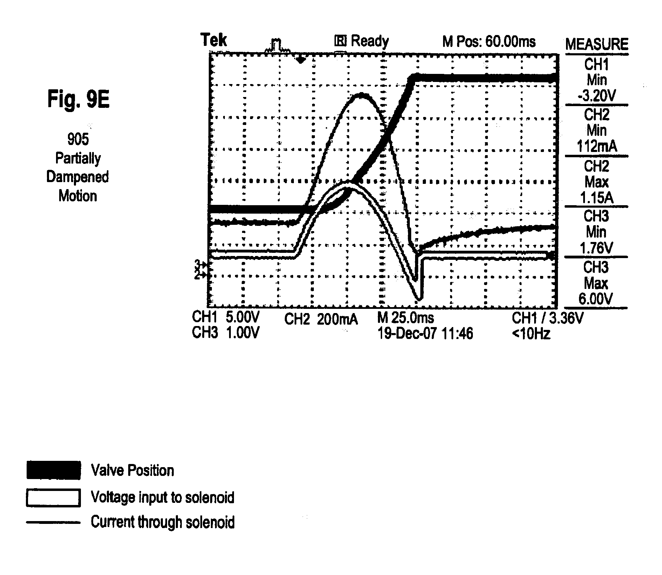

Similarly, Figures 9D and 9E also illustrate different embodiments of electronic noise dampening techniques. However, in both of these multimeter printouts, the mechanical noise is only partially dampened. In both Figures 9D and 9E, the voltage input is modulated once the armature has begun to rapidly increase its acceleration. The effect of these modulated voltage inputs is that the armature substantially stops accelerating after a certain point, maintaining a substantially steady velocity until the valve completes actuation. This is apparent in the multimeter printouts because, in each printout, the valve position increases in a substantially linear manner as it approaches the fully actuated position. Such partial dampening may result in somewhat less mechanical noise than undampened solenoid pinch valve 161 actuation, without fully minimizing the noise. That the voltage input signals in Figures 9D and 9E vary so widely is indicative of the wide variety of electrical signals that embody electronic noise dampening.

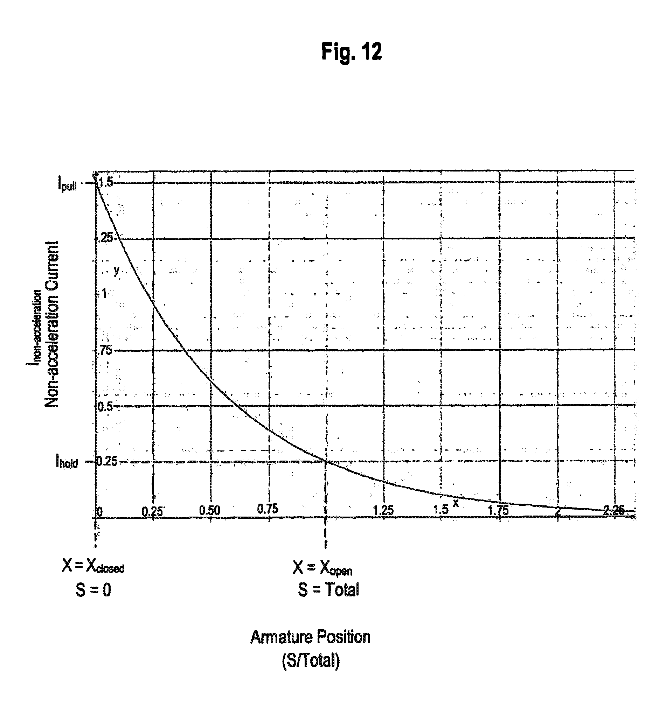

For every possible position of the armature of solenoid pinch valve 161, there is a particular amount of current for which net force exerted upon the armature will be 0, and thus the armature's acceleration will be 0. This net force includes any force generated by an internal spring within solenoid pinch valve 161. This current value may be referred to as the non-acceleration current. Thus, at the non-acceleration current at any armature position, the armature's velocity will remain constant. If the amount of current is less than the non-acceleration current, the armature will accelerate towards its rest position (wherein solenoid pinch valve 161 is fully closed). If, however, the amount of current is greater than the non-acceleration current, the armature will accelerate towards its fully actuated position (wherein solenoid pinch valve 161 is fully open). As shown in Figure 12, when the non-acceleration current is graphed with respect to armature position, it takes the form of a decaying exponential curve. That is, as the armature approaches its fully actuated position, the corresponding non-acceleration current decreases significantly. It must be noted, however, that in the embodiments described below, the non-acceleration current for each solenoid armature position is a calculated approximation. In other embodiments, a more accurate non-acceleration current for each armature position may be empirically found through testing.

Each solenoid pinch valve 161, even those manufactured to meet the same specifications, may have slightly different decaying exponential curves that embody the relationship between non-acceleration current and armature position. As such, electronic noise dampening module 108 embodiments that require accurate non-acceleration current data may further require that each solenoid pinch valve 161 be calibrated to determine its specific decaying exponential curve. The non-acceleration current characteristics may be determined via in-factory testing or via self-calibration module 110. And where solenoid pinch valve 161 also embodies intelligent fluid control component 2000, such acceleration current characteristics may be stored in (and received from) data storage module 2020 as, for example, calibration data 2022. An exemplary embodiment of a method of approximating the decaying exponential curve for a particular solenoid pinch valve 161 is discussed with self-calibration module 110 below.

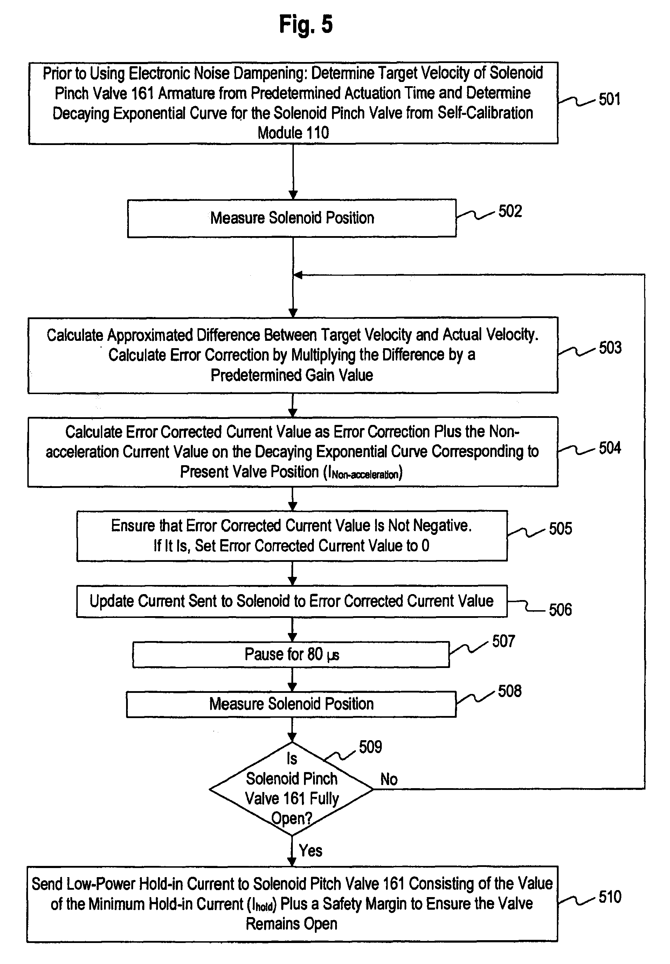

In an exemplary embodiment of electronic noise dampening module 108, as shown in Figure 5, controller 100 may dampen mechanical noise by modulating current input to a solenoid actuator, for example, solenoid pinch valve 161, to maintain a substantially steady armature velocity (due to electromagnetic force) until actuation is completed. In this embodiment, the decaying exponential curve specific to solenoid pinch valve 161 is determined-possibly via self-calibration module 110-prior to actuation of solenoid pinch valve 161, as shown in step 501. Also, as shown in step 501, a target armature velocity for actuation should be determined. This velocity may be specified by the user, or the velocity may be determined from a user-specified actuation time and the stroke length. And where solenoid pinch valve 161 also embodies intelligent fluid control component 2000, one or more target velocities may be stored in (and received from) data storage module 2020 as, for example, calibration data 2022. A position sensor, for instance a potentiometer or optical aperture sensor 200, may be required to give feedback to controller 100 regarding armature position throughout actuation. (And in other embodiments, impedance-based position sensing may be used.)

Upon receiving a command to open solenoid pinch valve 161, solenoid pinch valve 161 position is measured, as in step 502.

After the initial measurement, electronic noise dampening module 108 may enter a closed feedback loop to update the current sent from controller 100 to solenoid pinch valve 161 in order to substantially achieve and maintain the target velocity as the average armature velocity. As in step 503, electronic noise dampening module 108 corrects for discrepancies between actual armature position and anticipated armature position in each cycle of the loop. Here, controller 100 calculates an approximated difference between target velocity and the actual velocity. Controller 100 may calculate the targeted change in position of an armature during a loop cycle (which may be referred to as the target incremental change in position) by using the target velocity (as determined in step 501). During the first cycle of the loop-wherein actual armature velocity is presumed to be 0-controller 100 may use this target incremental change in position as the approximated difference between the target velocity and actual velocity. In subsequent cycles, controller 100 may calculate the difference between the targeted incremental change in position during the previous loop cycle and the actual incremental change in position during the previous loop cycle, and use this value as the approximated difference between target velocity and actual velocity. Alternatively, sensors may directly measure velocity. An error correction value is then calculated by multiplying this difference by a predetermined gain value. During any iteration of the loop, this error correction value may be 0.

As in step 504, the non-acceleration current for the present armature position is determined. This non-acceleration current value is added to the error correction value to determine the error corrected current value. Non-acceleration current determinations are further described in detail below in the section describing self-calibration module 110.

As in step 505, controller 100 checks if the error corrected current value is not negative. This is because a negative current may accelerate the armature in a similar manner as a positive current of the same magnitude. Thus, if a negative error corrected current value is found, its value may be set to 0.

Then, as in step 506, controller 100 changes the current sent to solenoid pinch valve 161 to the error corrected current value. Where current output is in digital format, pulse width modulation techniques may be used to effectuate output at the error corrected current value. Controller 100, however, may only indirectly control its current output by directly controlling its voltage output. Thus, in order to effectuate a current output at the error corrected current value, a closed control loop may be utilized. That is, controller 100 may approximate the voltage output needed to effectuate a current output at the error corrected current value, may measure the resulting current, and may adjust its voltage output to compensate for any discrepancy. This closed control loop within step 506 may be repeated to maintain controller 100's current output at the error corrected current value.

Electronic noise dampening module 108 may then pause for a brief period of time, for example 80µs, as in step 507. Valve position is re-measured, as in step 508. If the valve is not fully actuated, as in step 509, the cycle is repeated starting with step 503. However, if the valve has been fully opened, as in step 509, controller 100 will send a low-power hold current to the valve, as in step 510. This low-power hold current may consist of the minimum hold-in current plus a safety margin to ensure that the valve remains open until controller 100 permits the valve to return to the rest state.

In another embodiment, the approximated difference between the target velocity and actual velocity, as in step 503, may not be calculated. Rather, error correction may be calculated based upon the absolute position of the armature. That is, in a modified step 503, controller 100 may calculate the difference between a measured armature position and a calculated target armature position for that moment or cycle. The target armature position may be calculated using the target velocity and the time elapsed since the beginning of actuation. Then, the error correction value may be calculated by multiplying this difference by a gain value. Alternatively, where solenoid pinch valve 161 also embodies intelligent fluid control component 2000, one or more target armature positions may be stored in (and received from) data storage module 2020 as, for example, calibration data 2022.

Calculating error correction by using absolute armature position instead of using approximated actual velocity may serve to ensure that the solenoid actuation will be completed. In contrast, where approximated velocity is used to calculate error correction, the use of electronic noise dampening module 108 may result in an oscillating armature if, for example, an improperly calibrated solenoid is used or if the load current is greater than expected. For example, if a solenoid's actual non-acceleration current is greater than its approximated and/or calculated non-acceleration current, a significant error correction added to the current may be required to actuate the solenoid. Although controller 100 may supply an adequate error corrected current value to the solenoid in one cycle, thereby achieving a substantially adequate armature velocity; during the next cycle, the error correction will be significantly reduced because of the previous cycle's velocity. Then, the armature may reverse direction due to a potentially inadequate current. And because of this velocity in the reverse direction, the next subsequent cycle may have a significant error correction value, continuing the oscillation. On the other hand, using absolute armature position to determine the error correction value may result in overcompensation, possibly resulting in significant mechanical noise.

In other, similar embodiments, the steps of 503-509 may proceed in a different order. And in another embodiment, the loop of steps 503-509 may be preceded by a high power actuation pulse to rapidly accelerate the armature at the start of actuation. For example, controller 100 may send a high power actuation pulse to solenoid pinch valve 161 until 10% of the solenoid's stroke is completed before proceeding with steps 503-509.

Additionally, other embodiments may contemplate the use of different target velocities in each loop cycle. For instance, electronic noise dampening module 108 may be programmed to start actuation at a faster velocity and end actuation at a much slower velocity. Similarly, target armature positions may vary in a non-linear manner from one loop cycle to the next. It should be noted, however, that not all cycle-to-cycle position or velocity variations may be possible to achieve via electronic noise dampening module 108. This is because no electrical signal can actively reverse the direction of a typical solenoid actuator and because certain rapid fluctuations in voltage output from controller 100 may result in increased induction of a solenoid.

Effective electronic noise dampening may significantly reduce mechanical noise. It may eliminate the need for mechanical dampening and the associated energy loss. Electrical energy is conserved in each actuation cycle of valve because, when electronic noise dampening module 108 is utilized, the high-power actuation "pulse" to solenoid pinch valve 161 is modulated rather than kept constant throughout the life of the pulse. That is, the energy that would have resulted in a higher velocity impact of the armature on the contact surface may be conserved by module 108. That conservation of energy may also correspond to a reduction in heat-waste, which may extend the life of the solenoid.

In one embodiment, when a digital output is used, a pulse width modulation signal of about 25-30 kHz and a control loop running at about 4-10 kHz may be required for effective electrical dampening.

### Proportional Control

As illustrated in Figure 2, controller 100 may further include proportional control module 109 to permit proportional control of solenoid pinch valve 161 or other valves or devices. Such a module may permit proportional opening of solenoid pinch valve 161, which may allow fluid to flow continuously in a proportion determined by controller 100. This method may be used to limit the flow of fluid without fully opening and closing solenoid pinch valve 161, as done in the typical operational cycle of the valve.

Proportional control module 109 may utilize similar modulation techniques as electronic noise dampening module 108. Electronic noise dampening module 108 controls the velocity of the solenoid armature by modulating the electrical current through the solenoid. By controlling its velocity, the position of the armature may also be controlled. As such, the armature may be effectively "balanced" in a potentially numerous number of intermediate positions between being opened and closed. Thus, proportional control module 109 permits controller 100 to limit the flow of fluid through solenoid pinch valve 161 by balancing the solenoid armature in the desired position.

One possible drawback of proportional control is that it may require significant energy (in the form of high-power pulses) to maintain the armature's "balance" between open and closed positions. The modulated current would likely need to be maintained for as long as proportional control module 109 is utilized.

### Self-Calibration

As illustrated in Figure 2, controller 100 may further include self-calibration module 110 to increase operational efficiency by modifying controller software 112 to adjust for operating point values of peripheral devices and perhaps other system components.

Manufactured components of the same model, such as for example solenoid pinch valves 161, may slightly vary in their operating point values. These operating points may include, for example, the amount of current, voltage, or power required to actuate a solenoid; the amount of current, voltage, or power required to achieve a certain pinch force; the amount of time it takes to complete actuation at various voltages, currents, and power levels; the amount of current, voltage, or power required to hold a solenoid in an actuated state; and the stroke of a solenoid (the linear distance that the solenoid armature travels). Indeed, variances-within certain tolerances-may be expected, even in precision manufactured components.

By determining values of such operating points at a high degree of accuracy, however, controller software 112 may be programmed to compensate for these minor differences, thereby improving or optimizing controller 100 operation. For instance, as a result of self-calibration, controller 100 may adjust its electrical signal output to each component to increase operational efficiency of that component and the fluid control system as a whole. Additionally, sensitive modules and algorithms that require significant control feedback and balancing - such as electronic noise dampening module 108 and proportional control module 109-may require accurate operating point values in order to work effectively.

Operating points for a particular component may be determined externally to fluid control platform 1, for instance by independent equipment in a factory setting. That is, before assembly of fluid control platform 1, components may be tested to determine accurate operating point values. From these operating point values, controller software 112 may be fine-tuned to maximize operational efficiency of those components. It may not be necessary for these factory-calibrated components to be later self-calibrated by the fluid control platform 1. Further, with respect to intelligent fluid control components 2000, such operating point values may be classified as calibration data 2022, may be stored in data storage module 2020, and may be communicated to (or from) controller 100 (embodied by system controller 2070) via data communication module 2010. Thus, controller software 112 may be programmed to transmit and reference calibration data 2022 from a particular intelligent fluid control component 2000.

Fluid control platform 1 may, itself, take such operating point measurements. Then, upon determining operating point values, self-calibration module 110 may adjust the controller software 112 based on moving reference sample values predetermined in a factory setting in order to optimize system performance. That is, factory-determined values for system parameters that correspond to different operating point values may be substituted for default parameters in controller software 112. Additional sensors 169 connected to controller 100, such as those measuring force or stroke, or those measuring the relative position of a solenoid armature, for example a resistive potentiometer or optical aperture sensor 1300, may be utilized by self-calibration module 110. However, certain embodiments of self-calibration module 110 may be effectuated without a sensor where, for example, an operating point measurement can be determined with reasonable certainty based on electrical signals received by controller 100.

In one embodiment, fluid control platform 1 may contain specific channels in which an uncalibrated component, such as solenoid pinch valve 161, may be plugged into in order to permit sensor measurement. The component may also be connected to power supply 120 and directly to controller 100. Then, self-calibration module 110 may then direct controller 100 to determine the operating points for that particular component. Self-calibration module 110 may conduct tests to determine these values and then update controller software 112 based on corresponding reference values. This may permit calibration on a component by component basis. Similarly, calibration sensors corresponding to, for example, parameters of stepper motor 162, brushless DC motor 163, pneumatic control valves 164, solenoid pinch valves 161, permanent magnetic latching solenoids 165, and other components may be included in the fluid control platform 1 to facilitate self-calibration. Such calibration sensors may attach to controller 100 as analog I/O for sensors 168 or as additional peripherals and sensors 169.

With reference to intelligent fluid control components 2000, self-calibration module 110 may also utilize data stored in data storage module 2020 to calibrate intelligent fluid control components 2000 for optimal operation by, for example, modifying controller software 112 or modifying functional fluid control components' 2050 hardware configuration (such as, for example, digital potentiometer 1910 in gain circuit 1900 of optical aperture sensor 1300). Such calibration data may be utilized in methods described herein, such as, for example, electronic noise dampening and impedance based position sensing, proportional control, and sequencing schemes for power management. Further, self-calibration module 110 may also generate or update calibration data 2022 (including operating point values and/or reference sample values), which may be stored in data storage module 2020 by controller 100 (embodying system controller 2070) via data communication module 2010.

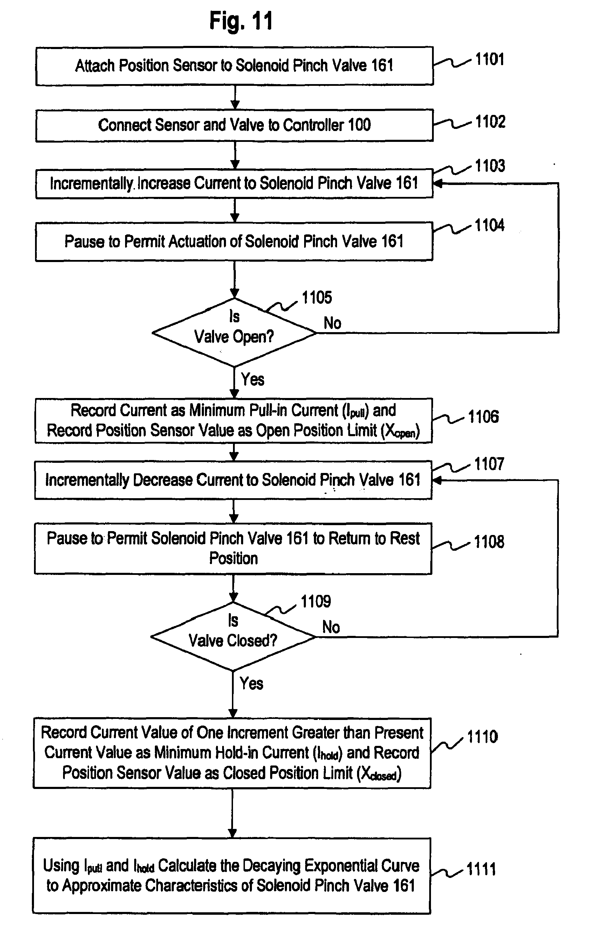

In an exemplary embodiment, as shown in Figure 11, self-calibration module 110 may be used to calibrate solenoid pinch valve 161 in conjunction with a position sensor. Specifically, this embodiment may be used to determine position (stroke) limits of solenoid pinch valve 161 with respect to the position sensor, the minimum hold-in current of the valve (which is the minimum current required to hold an

As in step 1101, a position sensor-for example a potentiometer or optical aperture sensor 1300-may be attached to the solenoid pinch valve 161 to be calibrated. The position sensor may be attached to measure the position limits of the valve's armature. As in step 1102, both the position sensor and solenoid pinch valve 161 may be connected to controller 100. Step 1102 may occur before step 1101, or vice versa.

Once the components are connected to each other as well as controller 100, controller 100 may begin to send current to solenoid pinch valve 161. This initial current level should be inadequate to actuate solenoid pinch valve 161. Controller 100 may incrementally increase the current, as in step 1103. Controller 100 may then pause-continuing to supply the same level of current to solenoid pinch valve 161-for a period of time, such as, for example, 10 - 30 ms, as in step 1104. This pause allows solenoid pinch valve 161 to fully open if the supplied current is sufficient for actuation. After each incremental increase and subsequent pause, controller 100 may then determine whether the valve has opened, as in step 1105. Controller 100 may determine if actuation has occurred by using the connected position sensor, or in some cases by utilizing impedance-based position detection module 107. If the valve has not opened, controller 100 may again incrementally increase the current sent to solenoid pinch valve 161 as in step 1103, may again pause as in step 1104, and may again determine if the valve has opened, as in step 1105. This loop may be repeated until solenoid pinch valve 161 is opened. Then, self calibration module 110 may record the most recent current supplied by controller 100 as the minimum pull-in current ("Iₚᵤₗₗ"), as in step 1106. Iₚᵤₗₗ reflects the minimum current necessary to actuate the valve. Self-calibration module 110 may also record the present position sensor value, at which solenoid pinch valve 161 is fully actuated, as the open position limit ("Xₒₚₑₙ"), as in step 1106.

Once Iₚᵤₗₗ and Xₒₚₑₙ are determined, controller 100 may incrementally decrease the current send to solenoid pinch valve 161, as in step 1107. Controller 100 may then pause-continuing to supply the same level of current to solenoid pinch valve 161-for a period of time, such as, for example, 10 - 30 ms, as in step 1108. This pause allows solenoid pinch valve 161 to fully close (returning to rest state) where the supplied current is insufficient to hold solenoid pinch valve in open position. After each incremental decrease and subsequent pause, controller 100 may then determine whether the valve has closed (returned to rest state), as in step 1109. Controller 100 may determine if solenoid pinch valve 161 has closed by using the connected position sensor, or in some cases by utilizing impedance-based position detection module 107. If the valve has not closed, controller 100 may again incrementally decrease the current sent to solenoid pinch valve 161 as in step 1107, may again pause as in step 1108, and may again determine if the valve has closed, as in step 1109. This loop may be repeated until solenoid pinch valve 161 has closed. After solenoid pinch valve 161 has returned to rest state, self-calibration module 110 may record the value of one increment greater than the present supplied current value as the minimum hold-in current ("I_{hold}"), as in step 1110. That is, I_{hold} is recorded as the current sent by controller 100 during the previous loop of steps 1107, 1108, and 1109, which is the smallest current value for which solenoid pinch valve 161 remained actuated. I_{hold} reflects the minimum current necessary to hold an already-actuated solenoid pinch valve 161 in a closed state. In another embodiment, self-calibration module 110 may instead record the present current value, at which solenoid pinch valve 161 is fully closed, as an approximation of I_{hold}.

Once Iₚᵤₗₗ and I_{hold} have been determined, self-calibration module 110 may determine values for the decaying exponential curve that embodies the relationship between non-acceleration current ("I_{non-acceleration}") and relative valve position ("S"), as in step 1111. Such I_{non-acceleration} values may be calculated as follows. A constant, K is derived by the formula: K = In (I_{hold/}Iₚᵤₗₗ). Then, the non-acceleration current for relative valve position ("S") for any number of total valve positions ("Total") may be derived by the formula: I_{non-acceleration}(S) = Iₚᵤₗₗ*e^{K*s/Total}. Controller 100 may calculate I_{non-acceleration} for values of S from S=0 (where the valve is fully closed and at rest) to S=Total (where the valve is fully open and fully actuated) and store them in a table in controller software 112. For example, Total may equal 1000, and a relative valve position of S=1000 occurs when the valve is fully actuated.

Figure 12 illustrates the decaying exponential curve that embodies the relationship between I_{non-acceleration} and armature position. The Y-axis represents the non-acceleration current. The X-axis represents relative valve position as an expression of S/Total.

Values of measured position sensor value ("X") may be linearly scaled to values of S by using the calibrated values of open position limit sensor value Xₒₚₑₙ, and closed position limit sensor value X_{closed}. A value of S corresponding to sensor position value X may be referred to as S(X). S(X) may be calculated each time a sensor position value is taken, for instance, during each loop of electronic noise dampening module 108 after position sensor value X is taken. Controller 100 may determine S(X) by the following formula: S(X) =(X-X_{closed})/(Xₒₚₑₙ-X_{closed}) * Total. Because, I_{non-acceleration}(S) may be determined for every S(X), I_{non-acceleration}(X) may be determined during each loop of electronic noise dampening module 108 by using this method.

Alternatively, X(S), the corresponding position sensor value X for each value of S, may be derived using the following formula. X(S)= S*(Xₒₚₑₙ-X_{closed})/Total + X_{closed}. Controller 100 may calculate X(S) for values of S from S=0 (where the valve is fully closed) to S=Total (where the valve is fully opened) and store these values in controller software 112 for later use. Storing such a table may permit quicker calculation of I_{non-acceleration}(X) during other system operation. And where intelligent fluid control component 2000 is being calibrated, such calibration data may be stored in (and received from) data storage module 2020 as, for example, calibration data 2022.

In a similar embodiment to the embodiment described above and in Figure 11, Xₒₚₑₙ and X_{closed} may be determined separately from determining Iₚᵤₗₗ and I_{hold}. In this embodiment of self-calibration module 110, X_{closed} is assigned the value of the position sensor measurement when controller 100 provides no current or minimal current to solenoid pinch valve 161. Xₒₚₑₙ may be determined as the measured position sensor value after solenoid pinch valve 161 is actuated. Iₚᵤₗₗ and I_{hold} may be determined via the method described above.

It may be useful for the user to initiate self-calibration module 110 when components in the fluid control platform are replaced or if additional components are added to the platform in the field, that is, self-calibration module 110 may run field calibration routines. Although it is contemplated that components may only need to be calibrated once-either externally or through self-calibration-periodically checking component performance and calibrating the manner in which the fluid control platform operates each component may permit the system to maintain operation at maximum efficiency. For sensitive modules and algorithms, however, it may be advantageous to utilize self-calibration module 110 on regular basis, for example, each time controller 100 is powered on and off.

Some commercially available products can monitor a component's operation data from an electrical standpoint and determine whether that component's power requirements have changed over time.

### Sequencing Scheme

As illustrated in Figure 2, controller 100 may further include sequencing scheme module 111 to prevent a power overdraw. Controller 100 may accommodate a wide variety of peripheral devices and sensors 160 and integrate their operation in virtually limitless ways to accommodate a specified fluid control system. As such, there may be operating conditions where multiple peripherals (or in some cases, power-intensive sensors) are called to be operated simultaneously. This presents a potential problem of temporary excessive power draw. For example, if too many solenoid pinch valves 161 are pulsed to actuate at once, external power supply 121 might fail to accommodate those and other system operations. Without adequate power at that moment, some or all solenoid pinch valves 161 might fail to actuate and perhaps other system components-for example, solenoid pinch valves 161 currently receiving a hold pulse-may lose adequate power, causing system fault.

Sequencing scheme module 111 permits controller 100 to execute simultaneous commands consecutively in order to prevent a temporary power overdraw. These commands may be software based. For example, controller software 112 may call for excessive simultaneous peripheral activity. Or, the commands may be based on direct user input 140 or data I/O 130. For example, the user may override the programming by calling for all solenoid pinch valves 161 to actuate simultaneously. Because controller 100 may monitor power levels, may be programmed with the operating parameters of each component, and/or may receive calibration data 2022 concerning power consumption from data storage module 2020, sequencing scheme module 111 may anticipate an excessive power draw. That is, sequencing scheme module 111 may determine that executing a set of simultaneous commands is likely to create a system fault due to excessive power draw. After making such a determination, controller 100 may execute the simultaneous commands in a prioritized order, avoiding the power overdraw.

In one embodiment, sequencing scheme module 111 may be programmed with a static predetermined order of component priority. Here, controller 100 would execute the commands sequentially and perhaps partially simultaneously, as power conditions allow, based on the order of priority of the components that the commands concern. For example, in fluid control platform 1, controller 100 may control three solenoid pinch valves 161, and sequencing scheme module 111 may be set to give valve A the highest priority, valve B the second highest priority, and valve C the lowest priority. Software conditions may result in commands calling for simultaneous actuation of all three valves, for which sequencing scheme module 111 may anticipate a power overdraw. In this embodiment, controller 100 will actuate valve A first. Then, when power conditions permit, it will actuate valve B. If, however, power conditions permit simultaneous actuation of valves A and B, controller 100 may drive A and B simultaneously. Then, when power conditions permit, controller 100 will drive valve C. If, however, only valve A has been actuated and power conditions permit simultaneous driving of valves B and C, controller 100 may drive valves B and C simultaneously. In this manner, sequencing scheme module 111 may ensure that all pending commands will be effectuated without power failure, even though the execution of at least one of the commands must be delayed.

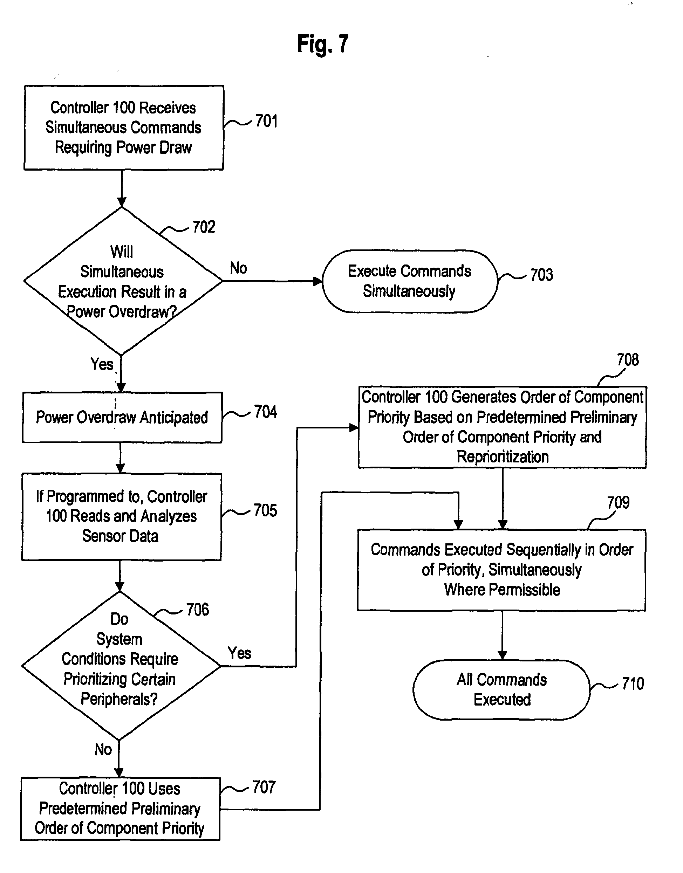

In another embodiment, as shown in Figure 7, sequencing scheme module 111 may be set with a predetermined preliminary order of component priority, but may read one or more sensors, or may reference already captured and logged sensor data before determining the final order of component priority. In this manner, sequencing scheme module 111 analyzes system conditions to determine command priority, which may minimize the harm that could result from the delayed command executions. That is, the order of priority may vary, dependent on system events and conditions.

In this sequencing scheme 111 embodiment, controller 100 receives simultaneous commands requiring a power draw, as in step 701, and determines if simultaneous execution will result in a power overdraw, as in step 702. If no power overdraw is anticipated, controller 100 will execute the commands simultaneously, as in step 703. However, upon anticipating a power overdraw, as in step 704; controller 100 may read live or logged sensor data, as in step 705, to determine whether system conditions require prioritization of certain peripherals, as in step 706. And if further prioritization is required, controller 100 may generate an updated order of component priority based on the predetermined order and system conditions, as in step 708. If further prioritization is not required, controller 100 may use the preliminary order of component priority without reprioritization, as in step 707. Then controller 100 may execute the commands sequentially in the updated order, simultaneously where possible, as in step 709, until all commands are executed, as in step 710.

For example, fluid control platform 1 might have valves three A, B, and C, and a pump D, which runs intermittently off of stepper motor 162 and pumps fluid into container E. The components may be in predetermined preliminary order of priority A, B, C, D. The system needs, however, may grant precedence to maintaining a certain pressure level in container E, and thus sequencing scheme module 111 may prioritize pump D if the pressure level is too low. In this embodiment, sequencing scheme module 111 may reference recently logged data from a pressure sensor in container E before finalizing the order of priority. If the pressure is too low, sequencing scheme 111 may prioritize pump D in the order of component priority. If, however, the pressure level is adequate, sequencing scheme 111 may allow pump D to remain at its preliminary priority level. That is, with adequate pressure, the order of priority may be A, B, C, D. A drop in pressure may result in order of priority D, A, B, C.

Other features of the fluid control platform 1 may enhance the effectiveness of the sequencing scheme module 111. Adaptive pulse and hold module 103 shortens the actuation pulse sent to each solenoid pinch valve 161 by terminating the pulse at the completion of actuation, minimizing the length of time of a significant power draw pulse. Thus, adaptive pulse and hold module 103 may permit the next sequenced command execution to be performed sooner. Further, use of capacitive store 123 (described below) may extend the permissible length of time of a power draw by providing additional stored power for a short period of time. As such, capacitive store 123 may permit sequencing scheme 111 to execute more power-intensive sequenced commands consecutively (or partially simultaneously) without pausing.

Additionally, coordinated fluid control system 2 may have its multiple networked controllers 100 share a common external power source 121 or share multiple common external power sources 121. In such a case, master controller 151 may anticipate excessive system power draws for coordinated fluid control system 2 in its entirety, considering peripheral devices and sensors 160 attached to each controller 100 in the system. Then, master controller 151 may use sequencing scheme module 111 to order each controller 100 to execute commands in a manner that prevents an excessive power draw. Alternatively, each controller 100 in coordinated fluid control system 2 may have its own external power source 121. In that case, each controller 100 may utilize its own sequencing scheme module 111 for its attached peripheral devices and sensors 160.

### Real Time Clock

As illustrated in Figure 2, controller 100 may include real time clock 101, to facilitate data logging module 102.

In coordinated fluid control system 2-where multiple controllers 100 are networked-as illustrated in Figure 3, only one real time clock 101 may be needed. However, each networked controller 100 may have its own real time clock 101. In that case, the clocks of the networked controllers 100 may be synced together, and when out of sync, slave controllers 152 may sync to master controller 151's real time clock 101.

### Data Logging

As illustrated in Figure 2, controller 100 may include data logging module 102 to maintain a log of faults, component power consumption, sensor data, operational information, cycles and operational time, and other fluid control platform data. Data logging module 102 may index data according to times provided by real time clock 101. Data logging module 102 may utilize a storage device, such as, for example, onboard non-volatile random-access memory (RAM).

As monitoring sensors may prove particularly important in certain fluid control applications, data logging module 102 may be able to store sensor measurements and analysis of such data. Operational information stored in data logging function 102 may include, for example, actuator or sensor operating hours, lifetime cycles or revolutions, operational histograms, fault logs, electronic serial numbers, and the like. It may be desirable to store the results of self-diagnostic testing or self-calibration module 110 data in the storage device. Regulatory requirements may determine the type of information stored by the fluid control platform.

Data logging module 102 may be able to analyze data before storing it. For example, data logging module 102 may be able to identify and distinguish certain types of faults before storing them. Controller 100 may then additionally notify a user or user system 135 of such faults, for example through an alert sent to user system 135 via user data I/O or to output device 142 (or in certain cases, through audio output device 144) in addition to logging the relevant data. For example, controller 100 may notify user system 135 after data logging module 102 indicates that a certain amount of fluid has been transferred. Controller 100 may also trigger stand-by modes, as appropriate, in response to data logging module 102 analysis. This may permit the fluid control platform to go into a stand-by mode after, for example, repeating an operation a given number of times.

Data logging module 102 may also permit controller 100 to quantify effectiveness of fluid control modules and controller software 112, and optimize them based on such data. Data logging module 102 may, for example, track the volume of fluid transferred, the cycle time required to transfer a given amount of fluid, or the number of cycles or operations required to transfer each unit of fluid. It may also prove useful to monitor or predict the path that fluid takes through the fluid control system. Automatically adjusting controller software 112 parameters to enhance system performance may benefit certain users.

Controller 100 may permit users to download the data from data logging module 102 via data I/O 130 and may permit users to view portions of the data directly via output device 142. In one exemplary embodiment, data from data logging module 102 may only be downloaded via Ethernet port 131, RS422 port 132, and RS485 port 133. Further, the logging of data and system faults may facilitate remote access 136 via Ethernet port 131, as well as corrective troubleshooting of fluid control platform 1 and reprogramming of controller software 112. Further, when such data pertains to a particular intelligent fluid control component 2000, controller 100 (embodying system controller 2070) may transmit the data via data communication module 2010 to be stored as operational log data 2023 in data storage module 2020.

Where multiple controllers 100 are networked into coordinated fluid control system 2, data logging module 102 of the master controller 151 may store and analyze all system data. Alternatively, data storage and analysis may be divided amongst the data logging modules 102 of each controller 100. In this case, each data logging module 102 may log data related to its corresponding fluid control platform 1 and its components, with master controller 151's data logging module 102 additionally logging data related to higher-level system operation.

### Platform Power

In accordance with Figure 1, fluid control platform 1 may include platform power 120. In accordance with Figure 4, platform power 120, may include external power source 121, controller and power supply 122, capacitive store 123, and voltage booster 124.

### External Power Source

As shown in Figure 4, fluid control platform 1 may feature external power source 121. Ultimately, all of fluid control platform 1's power needs may be supplied by external power source 121. External power source 121 may be directly connected to controller and power supply 122, controller 100, and voltage booster 124. External power source 121 may be a DC battery or other DC power source. And in cases where the underlying DC power source of external power source 121 cannot output a sufficient voltage to run fluid control platform 1 and/or its components, external power source 121 may further comprise a voltage booster (separate from voltage booster 124).

Controller 100 may use external power source 121 to drive motor loads, pneumatic control valves 164, solenoid pinch valves 161, and other components. Controller 100 may continuously monitor the voltage and current supplied by external power source 121. With this information, controller 100 may utilize pulse width modulation techniques to create duty cycles at external power source 121's supply voltage in order to drive components with varied electrical requirements. Controller 100's ability to monitor external power source 121's electrical characteristics and vary duty cycles accordingly may serve to compensate for any fluctuations in these electrical characteristics.

Controller 100 may control the distribution of power from external power source 121, as well as capacitive store 123 and voltage booster 124, to all high-power components throughout the system. However, in coordinated fluid control system 2, each platform might have its own external power source 121. In such a case, each controller 100 (including slave controllers 152) may run sequencing scheme module 111 for its directly attached components. Alternatively, coordinated fluid control system 2 might share one or more external power sources 121. Here, master controller 151 may run sequencing scheme module 111 for the entire coordinated fluid control system 2.

In one embodiment, certain high-powered components integrated into fluid control platform 1 may be powered directly by external power source 123 or even an additional external power source 123. For those components, controller 100 may simply serve to drive switches that regulate the high-powered components' functioning.

Where a higher voltage than can be supplied by external power source 121 may be required by one or more components, voltage booster 124 may be utilized in driving those components.

### Controller and Sensor Power Supply

As shown in figure 4, controller and power supply 122 may be powered by external power source 121. Within certain power input parameters, controller and power supply 122 may divide and condition its power input from external power source 121 to provide appropriate power and voltage levels for logic units and various low-power applications.

Controller and power supply 122 may be divided into a number of sections. Specifically, these sections may include, as examples, 3.3V power for logic applications, including controller 100; a variable 0-10 V section for analog sensors; and a 12 V power section for additional analog sensors and digital hall sensors. Further, power supply 120 may contain a 5 V regulator to facilitate the use of one or more encoders 167.

The fluid control platform may contain controller and power supply 122 on the controller 100's circuit board.

### Capacitive Store

In accordance with Figure 4, fluid control platform 1 may include capacitive store 123, intended to reduce system requirements of external power source 121, and to facilitate the use of voltage booster 124. Capacitive store 123 may comprise, for example, external capacitors attached to the fluid control platform's solenoid power drive.

Electric pulses may be used to control and to drive solenoid pinch valves 161 and additional peripheral devices 160 in the fluid control system. As such, power requirements for operating the fluid control system may tend to come in pulses and these pulses may require a significant power draw. Indeed, pulsed draws may represent a majority of a fluid control platform's electrical power needs. However, such pulsed power draws may be inefficient when drawn directly from external power source 121. And some components may require pulses at voltages greater than external power source 121's supply voltage.

In one embodiment, capacitive store 123 comprises the use of capacitors that are charged directly or indirectly by external power source 121 to meet the system's power needs. In this embodiment, external power source 121 continually charges the capacitors. In an exemplary embodiment, capacitive store 123 may be charged and discharged solely by controller 100. Capacitive store 123 may store electrical energy at the supply voltage of external power source 121, or at a voltage level provided by voltage booster 124.

Once capacitive store 123 is charged, the pulsed power required by solenoid pinch valves 161 and other peripherals may be drawn from the capacitors rather than directly from or solely from external power source 121 and/or voltage booster 124. This may serve to reduce or eliminate the string of high and low power draws directly from external power source 121, replacing it with a relatively continuous power draw that approaches a steady state average.

For example, many existing solenoid pinch valves 161 require 7 Watts or less to actuate, but typically a 60-70 Watt external power source 121 is used to ensure adequate power to actuate and/or hold open multiple solenoid pinch valves 161 simultaneously. Capacitive store 123 might permit the system to run off of a physically smaller external power source 123, with less power output, and still maintain the functionality of a system with a larger (for example, 60-70 watt) external power source 123. Similarly, capacitive store 123 may permit controller 100 to fire more valves simultaneously or sequentially. Further, capacitive store 123 may provide enough energy for controller 100 to complete failsafe protocols, such as latching or unlatching permanent magnet latching solenoid 165, in case of an external power source 121 failure.

Although larger super-capacitors could be used to power an entire fluid control system or allow for its continued operation where there is an external power source 121 failure, capacitive store 123 may be most effective with smaller capacitors. Although smaller capacitors could not support power needs of a fluid control system in case of an external power source 121 failure, they have the advantage of averaging out the pulsed power draws on external power source 123 without significantly increasing the physical size of the fluid control system.

The capacitive store 123 may be part of standard fluid control platform 1. However, it may also be a modular add-on component that may attach to the fluid control platform as an additional circuit board.

### Voltage Booster

In accordance with Figure 4, fluid control platform 1 may feature one or more voltage boosters 124. This may permit a fluid control system to drive peripheral devices and sensors 160 with higher voltage requirements despite the inability to meet such requirements through external power source 121.

Voltage booster 124 may be helpful for components with higher voltage requirements, such as higher-voltage solenoid pinch valves 161. For instance, with voltage booster 124, a fluid control platform 1 with a 12 V external power source 121 could drive 24-volt solenoid pinch valves 161. Power at this higher voltage may further be used by controller 100 to charge capacitive store 123 for later use.

Voltage booster 124 may be very useful in battery-powered applications, especially where high performance or efficiency is required. Using voltage booster 124 may serve to compensate for the inherent voltage fluctuation of battery power over each charge life by boosting declining battery voltage to maintain steady voltage levels suitable for use by system components. Voltage booster 124, however, may be most effective when used in conjunction with capacitive store 123 because the combination of the two power components may help reduce the requirements for and, in turn, the physical size of external power supply 121.

Voltage booster 124 may be placed on the same circuit board as capacitive store 123. And this circuit board may be an optional modular add-on to fluid control platform 1.

### Data I/O

In accordance with Figure 1, fluid control platform 1 may feature data I/O 130, which is an array of data input and outputs. The inclusion of standard communication ports may improve accessibility to controller 100 as well as logged data module 102 and to data stored within data storage module 2020 of any connected intelligent fluid control component 2000.

### Ethernet Port

In accordance with Figure 4, fluid control platform 1 may feature Ethernet port 131 in a compact format. It may be preferred if the Ethernet port 131's connection is appropriate for implementation of Modbus TCP/IP distributed automation protocol. The inclusion of Ethernet port 131 in the platform increases accessibility to controller 100 and data logging module 102. Although Ethernet port 131 may be used to gain access to controller 100 through a directly connected computer, it may also provide for connectivity via remote access 136. This may allow for accessibility over Local Area Networks or over the internet. Thus, controller software 112 and logged data module 102 may be accessed via a web browser, greatly enhancing its accessibility.

Ethernet port 131 may permit direct user control of controller 100, and thus an entire fluid control system. Ethernet port 131 may facilitate downloading and subsequent analyzing of system data, may permit debugging and troubleshooting of the system, may permit updating and reprogramming of controller software 112, perhaps in the form of regular system updates, and may permit recall information pertaining to a particular intelligent fluid control component 200 to be rapidly disseminated.

One benefit of remote access 136 is that it may increase the value, convenience, and efficiency of customer support. In turn, this may increase the overall value of the fluid control system.

Where multiple controllers 100 are networked in order to form a coordinated fluid control system 2, the Ethernet port 131 that is directly attached to master controller 151 may be used to access each controller 100's controller software 112 and data logging module 102. Alternatively, the Ethernet port 131 of each controller 100-master controller 151 and slave controller(s)152-could be used to interface with the networked system of controllers 100.

### RS422 Port

In accordance with Figure 4, fluid control platform 1 may include RS422 (EIA422) port 132 to facilitate data connection between user system 135 and controller 100. Through RS422 port 132, user system 135 may receive feedback from sensors or data from logged data module 102, change configuration parameters in the field in controller software 112, or override the controller software 112 to control fluid control platform components more directly. The RS422 port 132 may be easy to implement as part of the fluid control system and may permit communication for up to 4000 feet. Because RS422 is a "single drop" communication technology, it may permit user system 135 to communicate with a single fluid control platform 1 or a single coordinated fluid control system 2.

### RS485 Port

Additionally, fluid control platform 1 may include RS485 (EIA485) port 133 to facilitate data connection between user system 135 and controller 100. Through the RS485 communication port, one or more user systems 135 may receive feedback from sensors or data from logged data module 102, change configuration parameters in the field in controller software 112, or override the controller software 112 to control fluid control platform components more directly. The port may be easy to implement and may permit communication for up to 4000 feet. Further, a RS485 interface may be appropriate for implementation of standardized Modbus distributed automation protocol.

Unlike RS422, RS485 is a "multi-drop" communication technology. It may permit communication between up to 32 devices. Such devices may include multiple user systems 135, multiple fluid control platforms 1, and/or multiple coordinated fluid control systems 2. In one embodiment, inclusion of RS485 Ports 133 would allow one or more user systems 135 to control multiple coordinated fluid control systems 2, each made up of multiple fluid control platforms 1, each of which might control a number of peripheral devices and sensors 160

### Optically Isolated User I/O

In accordance with Figure 4, fluid control platform 1 may feature optically isolated user I/O to permit interface between user system 135 and controller 100. Further, such optically isolated user I/O 134 may serve to ruggedize and protect the fluid control system from user system 135 electrical faults or protect user system 135 from any electrical malfunctions of fluid control platform 1.

Optically isolated user I/O 134 may be digital level user control (trigger) inputs. These inputs may be rated at 5000 Vrms of isolation. Optically isolated user I/O 134 may have wide input and output voltage range capabilities. For instance, the digital inputs and outputs may permit control voltage levels from 2 to 42 v.

### Direct User I/O

In accordance with Figure 1, fluid control platform 1 may have a number of direct user input and outputs ("direct user I/O 140").

### User input Switches

In accordance with Figure 4, fluid control platform 1 may feature user input switches 141. One embodiment of the disclosure features four small built-in pushbutton switches. Other embodiments may have more or less user input switches 141. User input switches 141 may be used for initial programming and set-up of fluid control platform 1, and/or may be configured to allow direct user input, serving a variety of functions. Customized functionality of the buttons may be programmed into controller software 112 depending on the specific system needs. For instance, the buttons may permit viewing of error codes through output device 142, may facilitate simple programmability in the field, or may permit the user to choose between various customized modes of fluid control system operation.

### Output Device

In accordance with Figure 4, fluid control platform 1 may feature one or more output devices 142 to directly display data to the user. For example, output device 142 may be an LCD, a VFD, an OLED display, a different type of electronic visual display, and/or in some circumstances a printer. Output device 142 be used in fluid control platform 1 set-up, and/or may be used in the regular operation of fluid control platform 1. For example, output device 142 may display comprehensive logged data about an entire fluid control platform 1 or coordinated fluid control system. When combined with user input switches 141, output device 142 may facilitate comprehensive setup, configuration, debugging, and monitoring of the system. For instance, output device 142 may give information about error codes or system faults, or it may display information from data logging module 102. One exemplary output device 142 embodiment features a 16x2 character LCD.

Where multiple controllers 100 are networked, to save cost only one output device 142 per coordinated fluid control system 2 may be used. Output device 142 may be connected to master controller 151. Alternatively, each controller 100-master 151 and slave 152-may have its own output device 142, which may display information about each controller 100 and its directly attached components or may display information related to coordinated fluid control system 2 as a whole.

Output device 142 may be included in every fluid control platform 1 or it may be a modular add-on option. If output device 142 is only considered an add-on option, output device 142 may still be used during the initial in-factory set-up of a fluid control system.

### Peripheral Device Status Indicators

In accordance with Figure 4, fluid control platform 1 may include peripheral device status indicators 143. Such indicators may give the user real-time information as to the status of various peripheral devices and sensors 160. This may aid in troubleshooting, or may simply inform the user that a fluid control system component is working.

In one embodiment, the peripheral device status indicators 143 are color-coded LEDs for each attached peripheral device 160. The LEDs would indicate the status of the load. For instance, the LEDs may be colored red and green. And if the peripheral device is, for example, solenoid pinch valve 161, green may indicate that the valve is open and red might indicate that the valve is closed (or vice versa). If the peripheral device is, for example, stepper motor 162, the green LED may indicate that stepper motor 162 is running and the red LED may indicate that the motor is stopped. Peripheral device status indicators 143 may be located on the main circuit board with controller 100 so that they may be viewed through the physical casing. In one embodiment, light pipes may be employed to facilitate a user's viewing of peripheral device status indicators 143 attached directly to controller 100. Alternatively, peripheral device status indicators 143 may placed in a different location using lead wires, permitting the user to view them in a more convenient location.

Similarly, status indicators for networking with other controllers 150 or for data I/O 130 may be included. For example, in one embodiment of the ring configuration network 153, as discussed below, there is a LED that indicates receive/link and another LED that indicates transmit/activity for each controller networking 150 connection.

### Audio Output Device

In accordance with Figure 4, fluid control platform 1 may feature one or more audio output devices 144 to aid in programming and configuring fluid control platform 1. However, in some circumstances audio output device 144 may be configured to alert users to system faults or other system conditions. In one embodiment, an alarm may be used. In another, the audio output device 144 and controller 100 may be configured to give a brief verbal description of certain system conditions.

### Networking capability

In accordance with Figure 1, controller 100 may feature networking with other controllers 150. Because each controller 100 acts as an individual hub with networking capabilities, controllers may network with each other so that multiple fluid control platforms 1 may be joined together into a coordinated fluid control system 2.

A single fluid control platform 1, operating alone, may be more appropriate for specific applications requiring fewer fluid control peripherals and sensors 160. Where more peripherals and sensors are desired than can be supported by a single controller 100, however, these additional components may be supported by additional controllers 100, which in turn may be networked together. The platforms of these networked controllers may form a larger coordinated fluid control system 2 for integrated operation of all system components. This scalability represents a benefit over prior fluid control systems, which had to be custom-built for each application.

Controller 100's capability to network with other controllers 150 may also eliminate the need for user system 135 to send and receive signals directly to multiple controllers 100 or directly to peripheral devices and sensors 160 throughout the system. Instead of connecting directly to multiple individual components or to multiple controllers, user system 135 may be able to connect to a single controller 100 (in one embodiment, master controller 151). This may grant user system 135 access to and control over the entire coordinated fluid control system 2, including its components and data logging module(s) 102, through a single data I/O 130 port, thereby allowing a simplified, efficient, and effective interface. In one exemplary embodiment, however, data logging module(s) 102 may not be accessed through optically isolated user I/O 134.

### Master Controller and Slave Controller

In accordance with Figure 3, use of networking with other controllers 150 may include one controller 100 to be the master controller 151 of coordinated fluid control system 2. In addition to its regular controller 100 functionality, master controller 151 may perform higher level system functions, may seek sensor data from the slave controllers 152, and may command slave controllers 152 to drive their peripheral devices 160. Master controller 151 may be the exclusive controller 100 for data I/O 130 and direct user I/O 140. Further, data logging module 102 may be exclusive to master controller 151.

Although each controller 100 may have real time clock 101, in the case of a timing discrepancy, slave controllers 152 may defer to master controller 151's clock and synchronize to it.

Coordinated fluid control system 2 may share one or more external power sources 121 managed by master controller 151. Master controller 151's sequencing scheme module 111 may direct system-wide power in case of an anticipated power overdraw. However, some coordinated fluid control systems 2 may have additional external power sources 121 that are controlled by various slave controllers 152. In such circumstances, a slave controller 152 may access its own sequencing scheme module 111 for its external power source 121.

In one embodiment, coordinated fluid control system 2, however, may be run without a master controller 151 and slave controller(s) 152. Here, all controllers 100 are equal, and data I/O 130 or direct user I/O 140 from any controller 100 may be used in order for user system 135 or a user to communicate with coordinated fluid control system 2. As would be understood by one of skill in the art, networking with other controller 150 could be accomplished using wireless networking techniques.

### Ring Configuration Network and Plastic Optical Fiber

In accordance with Figure 3, exemplary embodiments of coordinated fluid control system 2 operate without a central hub, easing wiring demands. In such a configuration, plastic optical fiber connections 154 may connect each fluid control platform controller 100 to the adjacent one in a ring. In ring configuration network 153, communication data may stream between networked controllers 100 continuously and simultaneously.

The ring configuration network 153 of more than two controllers 100 may send information in a unidirectional manner. For example, in a three-controller network, master controller 151 may send data to the first slave controller 152, the first slave controller 152 may send data to the second slave controller 152, and the second slave controller 152 may send data back to the master controller 151. This may serve to ease and simplify wiring.

In one embodiment, data can run at about 1 Megabit, and the fibers between controllers can be at least 10 meters long without data loss. In this embodiment, up to 32 controllers 100 may be networked together in a loop.

### Intelligent Fluid Control Components

As illustrated in, for example, Figure 20, intelligent fluid control component 2000 may comprise data storage module 2020, communication module 2010, and functional fluid control component 2050. Additionally, intelligent fluid control component 2000 may integrate more than one functional fluid control component. For example, solenoid pinch valve 161 may be coupled with analog optical sensor 1300 to improve its operation. The coupled valve and sensor-when integrated with data storage module 2020 and a data communication module 2020-may also comprise intelligent fluid control component 2000.
By adding data functionality to individual functional fluid control components 2050, authentication data 2021 (manufacturing information data and component-indentifying data), calibration data 2022, and operational log data 2023 may be permanently stored in an intelligent fluid control component and may be communicated to a fluid control system controller or read by other devices. Including such capabilities may provide for free interchange of system components; may permit substitution of components with minimal effort and minimal effect on system performance, enabling upgrades in the field; and may ease replacement of components, greatly simplifying system repair. Further, the use of intelligent fluid control components 2000 may enable automatic and seamless calibration of system components, enabling or enhancing the use of sensitive fluid control techniques despite manufacturing variations. Additionally, the capabilities of intelligent fluid control components 2000 may improve safety and long-term system performance by logging operational data and by enabling alerts when a component should be replaced or inspected.

Data storage module 2020 may store data pertaining to component authentication, component calibration, and component operation. In a preferred embodiment, data storage module 2020 may be embodied by an EEPROM chip coupled to functional fluid control component 2050. In an exemplary embodiment, certain data stored in data storage module 2020, such as, for example, error log data, cannot be altered or deleted. Data may be stored using various techniques, for example in a table, in a list, in a matrix, in a tree, or by any other known data storage technique.

Data communication module 2010 may communicate data from data storage module 2020 to system controller 2070. System controller 2070 may be controller 100 (as shown in, for example, Figs.1, 2, and 4), master controller 151 (as shown in, for example, Fig. 3), slave controller 152 (as shown in, for example, Fig. 3), or the controller of any other fluid control system, regardless of whether the system is platform-based. System controller 2070 may control functional fluid control component 2050 and may independently communicate with data communication module 2010. In one embodiment, data communication module 2010 will utilize a 1-Wire bus system from Dallas/Maxim semiconductor to communicate with system controller 2070. Under a 1-Wire® bus system embodiment, data communication module 2010 will comprise a slave IC chip from Dallas/Maxim with its own unique serial number. (In one embodiment, the 1-Wire® serial number is distinct from a fluid control component's manufacturer's serial number, and is used in the communication protocol. Alternatively, the 1-Wire® serial number may be used as the manufacturer's serial number for intelligent fluid control component 2000.) Additionally, in one embodiment, both data communication module 2010 and data storage module 2020 may both be contained on a single chip, such as an EEPROM chip. Further, the master device IC may be integrated with system controller 2070. That is, system controller 2070 (embodied by controller 100) may contain a device to transmit and receive data from data communication modules 2010 of various intelligent fluid control components 2000.

In one embodiment, data from data storage module 2020 is sent to system controller 2070 via data communication module 2010 each time that a fluid control system is turned on. With this data, system controller 2070 may authenticate, calibrate, or assess the condition of the component. System controller 2070 may further utilize the data to adjust fluid control system routines or to alert the user of particular conditions pertaining to a component or the larger fluid control system.

### Authentication Data

Data storage module 2020 may store authentication data 2021, which allows the controller of an fluid control platform or other system controller 2070 to identify intelligent fluid control component 2000. Authentication data 2021 may identify the component as a device approved by the manufacturer of system controller 2070, and may identify what functions that the device is approved for. Further, authentication data 2021 may identify a number of characteristics about the component including its manufacturer, its component type, its function, its performance specifications (including, in some cases, correlation data relating a sensor's electrical output to a physical measurement), its part or model number, its serial number, and/or its date of manufacture.

In one embodiment, authentication data 2021 may be stored in data storage module 2020 by the manufacturer of the component.

Authentication data 2021 may inform system controller 2070 of what type of component is being used, permitting system controller 2070 to seamlessly configure intelligent fluid control component 2000 with minimal or no set-up by the user or the manufacturer. That is, the use of authentication data 2021 (sometimes in conjunction with calibration data 2022) may permit intelligent fluid control components to be considered plug-and-play type technology.

System controller 2070 may use authentication data 2021 to confirm that, when intelligent fluid control component 2000 is replaced, it is replaced by either the same type of component, or alternatively that it is replaced by a different type of component that is sufficient to perform a similar function. To facilitate this alternative scenario, authentication data 2021 may indicate the type of the component, the function of the component, and performance specifications of the component.

In the case of a component or system malfunction, authentication data 2021 may prove useful in determining the source of the malfunction or determining how to prevent future malfunctions of that type (such as recalling a particular batch of manufactured components). Further, in the case of a component recall, authentication data 2021 may permit system controller 2070 to notify a user, vendor, or manufacturer that a particular installed component is likely to be defective. Such recall information may be sent to system controller 2070, for example, via data I/O 130.

### Calibration Data

Data storage module 2020 may contain calibration data 2022, which enables system controller 2070 to automatically and seamlessly calibrate operation of intelligent fluid control component 2000. Calibration data 2022 may include set points for tube detection, data related to velocity control, data related to power consumption, and other calibration constants. Calibration data 2022 may also include calibration constants related to sensors, such as optical sensor output resolution and reference values. And calibration data 2022 may include any number of types of operating point values for a wide variety of components, as discussed above with reference to self-calibration module 110.

In one embodiment, calibration data 2022 may be stored in data storage module 2020 by the manufacturer after calibration constants for a particular functional fluid control component 2050 are determined in a factory setting. Alternatively or additionally, calibration data 2022 may be generated and stored by a user, vendor, or manufacturer through the use of a field calibration routine, perhaps utilizing self calibration module 110.

System controller 2070's calibration based on calibration data 2022 permits the precise and consistent use of fluid control components despite minor manufacturing variances. Such precision may further enable or enhance component control and system control techniques, such as, for example, electronic noise dampening and power sequencing, respectively. Further, such calibration may permit larger manufacturing tolerances, which in turn may permit more efficient and less expensive manufacture of fluid control components. Additionally, calibration of fluid control components may save energy by reducing the amount of power sent to fluid control components. Without calibration, safety and system stability concerns may require that certain fluid control components receive more power than might otherwise be necessary to compensate for manufacturing tolerances.

### Operational Log Data

Data storage module 2020 may contain operational log data 2023. Operational log data 2023 may include, for example, the number of hours of component use, the numbers of actuation cycles completed, the approximated wear on a component, error/fault logs, and other event tracking data. And the operational log data 2023 may include data related to component calibration, such as the date, location, and circumstances of the most recent component calibration. Operational log data 2023 may include any known type of data describing the operation of intelligent fluid control component 2000. Operational log data 2023 may be generated or logged by data logging module 112 prior to its storage in data storage module 2020.

Operational log data 2023 may inform system controller 2070 of certain conditions pertaining to intelligent fluid control component 2000. For example, a certain solenoid valve might operate safely for a specific number of hours or for a specific number of cycles (which might be indicated in the authentication data 2021). And system controller 2070 may use relevant operational log data 2023 to determine if intelligent fluid control component 2000 is in danger of failure because the particular component is nearing the end of its safe operational life. Additionally, operational log data 2023-including error or event logs-may inform system controller 2070 that the device has operated improperly or may be at risk to do so in the future. In one embodiment, system controller 2070 may use operational log data 2023 (sometimes in conjunction with authentication data 2021, such as, for example, performance specifications) to determine if a particular component should be replaced, inspected, or monitored immediately or in the near future; and to alert a user, vendor, or manufacturer accordingly.

The operational log data 2023 may also be used to analyze the prior operation of intelligent fluid control component 2000 in the case of a system or component event, error, or failure. For example, a log of faults may permit a vendor or manufacturer to quickly diagnose a error after a failure of a customer's fluid control component. Additionally, the ability of data storage module 2020 to store such operational log data 2023 may enable intelligent fluid control components within medical devices to satisfy any future regulatory requirements requiring error logging, particularly if the operational log data 2023 cannot be altered.

### Maintaining System Limitations By Utilizing Intelligent Fluid Control Components

System controller 2070 may be programmed to control only intelligent fluid control components 2000 that are authorized by a particular vendor or manufacturer. This may help ensure that a fluid control system utilizes only safe and reliable components. System controller 2070 may also be programmed to limit the allowable uses of particular intelligent fluid control components, thereby discouraging the misuse or misapplication of those components. Such limitations may also serve to maintain the commercial reputation of the system manufacturer by preventing system faults due to unauthorized or inappropriately applied components.

In another embodiment, system controller 2070 may be programmed to limit operation of a system to a certain number of components, a certain type of components, or a certain combination of components. System controller 2070 may utilize authentication data 2021 to accomplish this. With such an embodiment, a system manufacturer may distribute limited customized control systems to customers at a lower price, thereby allowing the customer to interchange certain components but only achieve the level of functionality for which the manufacturer was compensated.

### Systems And Methods Of Component Calibration Utilizing Intelligent Fluid Control Components

Certain techniques for using fluid control components may require sensitive calibration of the components to work effectively or to maximize efficiency of power usage. Done manually and individually for each component, such calibration may require tedious adjustments and may even undermine the viability of using such techniques altogether. As such, the disclosed methods of automatic calibration of intelligent fluid control components 2000 improve the utility of such techniques and, as a result, the utility of the fluid components themselves.

Calibration data 2022 be may received by system controller 2070 via data communication module 2010 from data storage module 2020. The controller may use this data calibration data 2022 in system operation by, for example, utilizing the calibration data 2022 values in executing system software, otherwise modifying system software based on the calibration data 2022, or by sending signals back to intelligent fluid components 2000 in order to modifying the components' hardware configuration, such as digital potentiometer 1910 to calibrate gain for optical aperture sensor 1300 as discussed below.

System controller 2070 may automatically and seamlessly calibrate all of intelligent fluid control components 2000 each time it powers on. In another embodiment, only certain types of components are calibrated each time the system is turned on. In yet other embodiments, components may be calibrated upon user request or upon installation of a new or replacement component. And in yet other embodiments, a component may be automatically calibrated when intelligent fluid control component 2000 is changed (that is, a "hot swap") or installed, while the system is running.

### Method Of Calibrating An Intelligent Fluid Control Component Comprising A Solenoid Valve Coupled With A Position Sensor

Intelligent fluid control component 2000 may comprise a solenoid valve coupled with a position sensor. Coupled together, the valve and sensor may share a common operational connection to the controller, a common data storage module, and a common communication module. (As would be appreciated by one of skill in the art, in other embodiments, the valve and sensor may each have an operational connection to the controller, data storage module, and/or communication module, respectively.)

As discussed above, with reference to self-calibration module 110, various techniques for solenoid control-such as electronic noise dampening and proportional control-may rely on a solenoid valve's non-acceleration current ("I_{non-acceleration}") at various armature positions, which are, in turn, calculated from values indicative of a solenoid valve's hold-in current ("I_{hold}") and pull-in current ("Iₚᵤₗₗ"). Similarly, such techniques may rely on values indicative of the position of the valve armature when it is fully open (i.e. fully actuated) and fully closed (i.e. at rest), Xₒₚₑₙ and X_{Closed,} respectively.

In an exemplary embodiment, values such as I_{hold}, Iₚᵤₗₗ, Xₒₚₑₙ and X_{Closed} may be determined either in a factory setting or by a field calibration routine (possibly utilizing self-calibration module 110). These values may be stored in data storage module 2020 and transmitted to the controller on system start-up. As such, the need for recalibration of I_{hold}, Iₚᵤₗₗ, Xₒₚₑₙ or X_{Closed} on each system start-up may be obviated. The controller may then calculate I_{non-acceleration} from the data stored in the intelligent fluid component itself. In other embodiments, values of I_{non-acceleration} for multiple valve positions may be calculated at the time of in-factory calibration or during a field calibration routine, permitting the controller to receive I_{non-acceleration} values from data storage module 2020 and store them in controller software, obviating the need to recalculate them.

### Peripheral Devices and Sensors

In accordance with Figure 4, fluid control platform 1 can support a wide range of peripheral devices and sensors 160. All peripheral devices and sensors 160 may be driven by controller 100, which also allocates power to these system components and reads sensor measurements. Peripheral devices and sensors 160 disclosed herein that may comprise part of intelligent fluid control components 2000 are still considered to be peripheral devices and sensors 160. Thus, with respect to systems and methods disclosed herein, an intelligent fluid control component 2000 may be considered a peripheral device or sensor 160. However, with reference to Figure 4 and as illustrated in Figure 20, an intelligent fluid control component's 2000 connection to controller 100 (i.e. system controller 2070) may also include a data connection to the controller 100 from data communication module 2010, as shown in Figure 20.

In one exemplary embodiment, a single controller 100 circuit board (e.g., a prefabricated, standardized multi-purpose controller board) may drive up to eight pneumatic control valves 164, or other small ancillary on/off control loads, and either one stepper motor 162, one brushless DC motor 163, or four solenoid pinch valves 161. Additionally, each board may support up to four analog outputs and four analog inputs for sensors or other components, and may provide four optically isolated digital inputs and four optically isolated digital outputs for communication with user system 135.

In another exemplary embodiment, a single controller 100 circuit board (e.g., a prefabricated, standardized multi-purpose controller board) may drive up to eight pneumatic control valves 164, or other small ancillary on/off control loads, and either one stepper motor 162, one brushless DC motor 163, or four solenoid pinch valves 161. In place of some or all of these components, each board may support hall sensors or encoders. Additionally, each board may support up to eight analog outputs and eight analog inputs for sensors or other components (of which, four inputs may be designed to accommodate intelligent analog aperture sensors 1300/2000) ; may provide four optically isolated digital inputs and four optically isolated digital outputs for communication with user system 135; may provide eight additional digital inputs and eight additional digital outputs (which may be used, for example, to support digital sensors, to drive relays, or to drive pumps with digital interfaces); may provide a load cell interface; may provide a special connection for programming controller 100, may have a piezo electric speaker; and have provide an LCD screen and user input switches 141 .

In yet another exemplary embodiment, a single controller 100 circuit board (e.g., a prefabricated, standardized multi-purpose controller board) may drive up to two intelligent fluid control components 2000, each of which may include a solenoid pinch valve 161 coupled to an optical aperture sensor 1300. Additionally, each board may support up to two additional analog sensors, may provide four optically isolated digital inputs and four optically isolated digital outputs; and may provide a special connection for programming controller 100.

Other embodiments may include support for more or less of these components, other peripheral devices and sensors 160, or various connections to other devices and systems.

### Solenoid Pinch Valves

In accordance with Figure 4, fluid control platform 1 may drive solenoid pinch valves 161. Various modules of controller 100, such as adaptive pulse and hold module 103, impedance-based position detection module 107, electronic noise dampening module 108, proportional control module 109, and sequencing scheme module 111 may enhance the function of solenoid pinch valves 161 in a fluid control system. These modules and other techniques described herein to control solenoid pinch valves 161 may be applied to solenoid actuators that are not pinch valves, including solenoid devices used in applications wholly separate from fluid control.

### Stepper Motor

In accordance with the Figure 4, controller 100 may drive one or more bipolar stepper motors 162. Stepper motor 162 may be preferred over brushless DC motor 163 in certain applications, such as, for example, applications that require high precision positioning without requiring power efficiency. Bipolar stepper motors may be used in various fluid control mechanisms, such as reciprocating pumps, peristaltic pumps, motor-based pinch valves, and proportional control valves.

Controller software 112 may include basic stepper motor control software, which may be significantly different than DC brushless motor control software because the signals required to drive these types of motors are different. The stepper motor control software may condition the electrical signal to the motor to prevent excessive motor noise. Stepper motor control may be integrated into the sequencing scheme module 11. This may be particularly useful when stepper motor 162 is used for a periodic activity such as positioning, as opposed to a continuous activity such as pumping. And stepper motor 162 may integrate encoder 167. Further, because motor control is a large field, controller software 112 may be programmed with various, already existing, enhancements to basic stepper motor control algorithms.

In one embodiment, each controller 100 may be equipped with drive outputs capable of driving one bipolar stepper motor 163 or four solenoid pinch valves 161.

### Brushless DC Motor

In accordance with the Figure 4, controller 100 may drive one or more multiphase-phase brushless DC motors 163, such as three-phase brushless DC motors. Because brushless DC motors 163 are more powerful, quieter, and more efficient than stepper motors 162, they may be preferred for some applications, for example, applications that require a motor to run continuously at high power for a significant period of time.

However, effective use of brushless DC motors 163 may require closed loop control, utilizing hall effect sensors or other sensors to determine rotor position. Here, controller 100 may serve to monitor rotor position and control brushless DC motor 163 using such feedback.

Controller software 112 may include basic brushless DC motor control software. The brushless DC motor control software may condition the electrical signal to the brushless DC motor 163 to prevent excessive motor noise. Brushless DC motor control may be integrated into sequencing scheme module 111. And brushless DC motor 163 may integrate encoder 167. Further, because motor control is a large field, controller software 112 may be programmed with various, already existing, enhancements to basic brushless DC motor control algorithms.

In one embodiment, each controller 100 may be equipped with drive outputs capable of driving one brushless DC motor 163 and one solenoid pinch valve 161 or four solenoid pinch valves 161.

### Pneumatic Control Valve

In accordance with Figure 4, controller 100 may drive one or more pneumatic control valves 164. Pneumatic control valves 164, under electrical control, permit pneumatic pressure to build and release within a pneumatic pinch valve; such changes in pressure result in the opening and closing of the pneumatic pincher.

The ability to drive pneumatic control valves 164 may be useful because such valves may require less current and power to operate than solenoid pinch valves 161. Further, a pneumatic pinch valve may ultimately generate more pinching force than a solenoid pinch valve 161. Pneumatic pinch valves, however, may

Pneumatic control valves 164 may be integrated into sequencing scheme module 111.

In one embodiment, controller 100 drives pneumatic control valves 164 with highside low-current power switches. Such drivers may be run at up to 0.5 A capacity at external power source 121's supply voltage. Further, one embodiment permits controller 100's pneumatic control valve driver output to drive other small ancillary on/off control loads instead of a pneumatic control valve 164.

In another embodiment, small electric solenoid pneumatic control valves 164 may be mounted directly on the controller 100 circuit board, and the controller board may permit tubes transferring pneumatic fluid or gas to attach directly to the controller board.

### Permanent Magnet Latching Solenoid

In accordance with Figure 4, controller 100 may drive permanent magnet latching solenoid 165. Such a valve does not require a hold pulse; rather, it remains statically in position-latched or unlatched-until it is driven into the other position. For example, permanent magnet latching solenoid valve 165 may latch in response to a particular drive signal and may not unlatch until that drive signal is reversed.

Permanent magnet latching solenoid 165 may be used as a failsafe device. In one embodiment, permanent magnet latching solenoid 165 remains open during regular operation and controller 100 may drive solenoid 165 to close when a power failure or loss of user control signal is detected. Capacitive store 121 may satisfy the power requirements of driving permanent magnet latching solenoid 165 closed in the moments after power failure is detected. In another embodiment, permanent magnet latching solenoid 165 remains latched during regular operation and unlatches in response to failure of external power source 121 or loss of user control signal.

### Load Cell Integration

In accordance with Figure 4, controller 100 may support attachment and integration of one or more load cells 166. Load cells 166 may, among other functions, be used in fluid control systems to weigh vessels of fluid or to sense pressure with a high degree of precision.

Load cells can be complex sensors that require special data analysis. Typically, the effective use of a load cell in fluid control application may require complex computer code and may require significant resources to set up for operation. Controller 100, however, may integrate load cell 166 into the fluid control system, saving considerable resources. Specifically, controller 100 may analyze output from a load cell 166 using customized controller software 112, may utilize the feedback in system control, may log the load cell data via data logging module 102, and may send data analysis to the user through direct user I/O 140 or to user systems 135 via data I/O 130.

One embodiment of the fluid control platform's load cell integration includes a 24-bit instrumentation amplifier and analog to digital converter to facilitate capture of load cell data. The instrumentation amplifier may amplify analog output from the load cell 166, which may be a millivolt level transducer. Analog load cell data may be converted into digital format by a 24-bit Δ-∑ (Delta-Sigma) converter. Using controller software 112 customized to that particular load cell and data logging module 102, the load cell data may be logged and analyzed by controller 100.

### Encoder

In accordance with Figure 4, fluid control platform configuration 1 may include encoders 167 to facilitate the use of stepper motor 162, brushless DC motor 163, or other integrated motors. Encoders 167 may be useful in providing controller 100 information about rotor position, speed of rotation, direction of rotation, and number of rotations for attached motors. Such information may be indicative of system conditions and thus may be useful as system feedback. Encoder data may also be logged by data logging module 102 or sent to user system 135 via data I/O 130. Controller 100 may receive feedback from encoders 167 in a digital format.

Simple count encoders, which do not provide information as to the direction of the motor rotation, as well as quadrature encoders, which do provide information about the direction of motor rotation, or other encoders, may be integrated into fluid control platform 1.

### Analog I/O for Sensors

In accordance with Figure 4, fluid control platform 1 may include one or more integrated high current digital to analog (D/A) outputs and one or more analog to digital (A/D) inputs ("Analog I/O for sensors 168"). The D/A output may be used as a power supply or control signal for one or more sensors or additional peripherals. The A/D input may be used for one or more attached analog or digital sensors.

Analog I/O for sensors 168 may be used for a wide variety of sensor applications. Such applications include, for example, external pinch valve position detection (which may be accomplished by using optical aperture sensor 1300, discussed below), tube detection, bubble detection, color detection, temperature measurement, flow measurement, and pressure measurement. Tube detection sensors (an already existing technology) may provide feedback as to whether a tube is physically inserted into a tube path.

Further, feedback from analog I/O for sensors 168 may be logged in data logging module 102, may be analyzed by controller 100, and may be utilized by sequencing scheme module 111 and self-calibration module 110. Further, controller 100 may provide sensor data and analysis to user systems 135 or remote access 136 via data I/O 130 and/or directly to the user via direct user I/O 140. Where such sensors also embody intelligent fluid control components 2000, such data may be additionally stored as operational log data 2023 in data storage module 2020.

Additionally, in one embodiment, analog I/O for sensors 168 may be alternatively used for process or limit switches.

### Optical Aperture Sensor

Fluid control platform 1 may further include optical aperture sensor 1300. Optical aperture sensor 1300 may be used to aid self-calibration module 110; may be used as a sensor integrated into other operations of fluid control platform 1, such as for solenoid pinch valve 161 position feedback; and may be used for taking position measurements in other fluid control and non-fluid control systems and applications. Analog I/O for sensors 168 may be used to connect optical aperture sensor 1300 to controller 100.

In an exemplary embodiment, optical aperture sensor 1300 may be attached to various devices, to measure the size of a variable gap between two members. For example, when used with solenoid pinch valve 161, optical aperture sensor 1300 may measure the gap between a moving or static solenoid armature and the contacting surface, wherein the contacting surface may be the non-movable pole of a solenoid that the armature contacts when solenoid valve 161 is fully open. For solenoid pinch valve 161, the size of the gap is indicative of the position of its armature, which may be referred to as the position of the valve. That is, a fully open solenoid pinch valve 161 has no gap, and a fully closed solenoid pinch valve 161 has a gap of maximum size (the stroke length) for that valve. The optical aperture sensor 1300 embodiments discussed herein describe optical aperture sensor 1300 in terms of measuring gap size. However, embodiments of optical aperture sensor 1300 may be used to measure changes in the relative position of two objects where no gap is created. In such embodiments, one member is attached to pin 1301 and the other to the object containing optical aperture sensor 1300's components.

Other existing position feedback technology includes digital optical slot sensors, mechanical switches, hall effect sensors, capacitive sensors, and linear resistive sensors. Indeed, these sensors may serve as peripheral devices and sensors 160, Analog optical aperture sensor 1300 represents an improvement over mechanical switches and optical slot sensors because, for example, it may be fully variable, providing a continuous representation of position and high resolution data. Analog optical aperture sensor 1300 represents an improvement over hall effect sensors because, for example, it may operate in a strong magnetic field-such as one created by solenoid pinch valve 161. Analog optical aperture sensor 1300 represents an improvement over mechanical switches and resistive sensors because, for example, it may work without physical contact. Analog optical aperture sensor 1300 further represents an improvement over resistive sensors because, for example, its accuracy may not reduce with wear and resistive sensors are generally much larger than optical aperture sensors. And analog optical aperture sensor 1300 represents an improvement over capacitive sensors because, for example, it may be manufactured at a lower cost and may operate with a shorter delay time.

Due to the properties of light, however, optical aperture sensor 1300 may work best when the maximum gap between members is small. For instance, optical aperture sensor 1300 may accurately measure such a gap in solenoid pinch valves 161, because in one embodiment, solenoid pinch valves 161 have a stroke length (maximum gap size) on the order of ¼ inch.

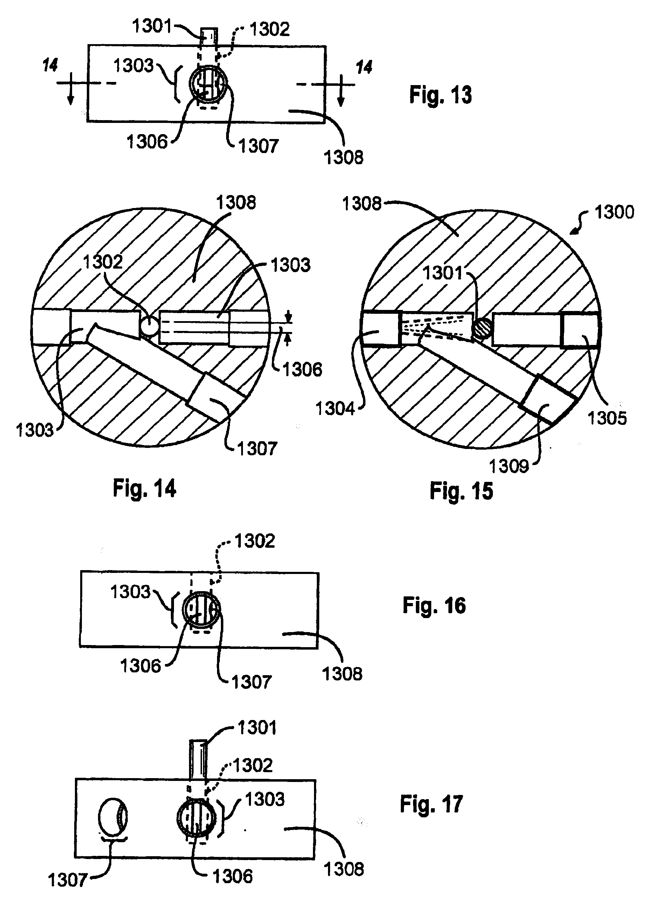

In an exemplary embodiment of optical aperture sensor 1300, as shown in Figures 13-17, object 1308 may be used to house most of optical aperture sensor's component. Pin 1301 may be mechanically attached to a member of a device from which gap position is to be measured, for instance, the armature of solenoid pinch valve 161. Object 1308 may be attached to the device or another member of the device, for instance the solenoid valve or non-movable pole of solenoid pinch valve 161. Pin 1301 and pin bore 1302, which is a shaft through object 1308 to accommodate the movement of pin 1301, may be oriented perpendicularly to main tunnel 1303 through object 1308. Main tunnel 1303 may be circular. As a gap between members closes, pin 1301 is inserted into pin shaft 1302, closing off main tunnel 1303. Pin 1301 may be inserted into pin shaft 1302, closing off main tunnel 1303 in an amount that is proportional to the size of the gap (or position of the armature). As an example, when solenoid pinch valve 161 is fully open (and there is no gap), pin 1301 may be fully inserted into pin shaft 1302, closing off the full diameter of main tunnel 1303.

Positioned on one end of main tunnel 1303 is light source 1304, for example a mounted infrared diode or other LED. Positioned on the opposite end of the main tunnel 1303 is main photo receiver 1305, which converts radiant power (or photo current) into an electrical output. Main photo receiver 1305 may be, for example, a photo transistor or photo diode. It may be beneficial if electrical output from main photo receiver 1305 is linearly proportional to radiant power received from light source 1304. The value of output from main photo receiver 1305 may be the amount of current flowing from a phototransistor, and may be measured by controller 100.

Main tunnel 1303 may also feature one or more apertures 1306 in between light source 1304 and main photo receiver 1305. It may be preferred if one or more apertures 1306 are adjacent to pin bore 1302. One or more apertures 1306 may be included by, permitting a portion of the wall of pin bore 1302 to block part of main tunnel 1303, as shown in Figures 13-17. Aperture 1306 may be rectangular to further make the electrical output of main photo receiver 1305 linearly proportional with the size of the gap. Without at least one rectangular aperture 1306, light from light source 1304 may be received by main photo receiver 1305 through a circular main tunnel 1303. But because the center of a circular tunnel is wider than the top or bottom of a tunnel, without at least one aperture 1306, the amount of light received by main photo receiver 1305 may not vary linearly with the position of pin 1301. For example, without a rectangular aperture 1306, a 10% movement of pin 1301 in the middle of main tunnel 1303 may vary the amount of light received by main photo receiver 1305 significantly more than a 10% movement of a pin 1301 at the top of main tunnel 1303. By contrast, with a rectangular aperture 1306, a 10% movement of pin 1301 in the middle of main tunnel 1303 may vary the amount of light received by main photo receiver 1305 by substantially the same amount as a 10% movement of pin 1301 at the top of main tunnel 1303.

### Optical Aperture Sensor: Corrective Photo Receiver Embodiments

The electrical output of main photo receiver 1305, however, may vary with a number of environmental factors, including temperature and age of the receiver. For example, because photo transistors have temperature sensitivity, the same size gap between members may result in different levels of electrical output as the temperature of main photo receiver 1305 varies. As such, it may be difficult to acquire accurate, repeatable readings of gap size via optical aperture sensor 1300 without accounting for the temperature sensitivity. Thus, as shown in Figures 13-17, one embodiment further features corrective photo receiver 1309, which is an additional photo receiver to help compensate for the effect of environmental factors on electrical output from main photo receiver 1305. Corrective photo receiver 1309 may be substantially identical to main photo receiver 1305 so that both receivers' electrical output will vary with environmental factors-such as temperature-in a substantially identical manner. Corrective photo receiver 1309 may be positioned to receive light energy solely from light source 1304 via corrective tunnel 1307 through object 1308. Corrective tunnel 1307, however, may function with or without an aperture. Further, corrective tunnel 1307 may be attached as to guide light energy from light source 1304 to corrective photo receiver 1309 at an indirect angle. 30 degrees may serve as an effective off-angle. An off-angle may be required because main tunnel 1303 may occupy the space that receives light energy from light source 1304 at a direct (0 degree) angle. Because no pin enters corrective tunnel 1307, electrical output from corrective photo receiver 1309 may not vary with the size of the gap being measured. Electrical output from corrective photo receiver 1309, however, may vary with environmental factors, such as temperature, in substantially the same manner as electrical output from main photo receiver 1305. Thus, a ratio of the electrical outputs from the respective photo receivers may vary with the size of the gap, but not with environmental factors. That is, when a ratio of the respective electrical outputs is used to determine gap size, the effect of environmental factors on main photo receiver 1305 may be, for practical purposes, negated by the effect of environmental factors on corrective photo receiver 1309. Thus, the numerical value of the ratio may be indicative of the size of the gap, and by comparing this value to predetermined ratio values at one or more known gap sizes, the present gap size may be discerned. Thus, as applied to solenoid pinch valve 161, the ratio value may be used to discern the valve's position.

Figure 14 is a cross-sectional view of an embodiment of optical aperture sensor 1300, but with pin 1301, light source 1304, main photo receiver 1305, and corrective photo receiver 1309 removed. This embodiment contemplates an increase in the circumferences of main tunnel 1303 and corrective tunnel 1307 through object 1308 where light source 1304, main photo receiver 1305, and corrective photo receiver 1309 may be mounted. Note that in this embodiment, there is an aperture 1306 along each side of pin bore 1302.

Figure 15 is the same cross-sectional view of an embodiment of optical aperture sensor 1300 as in Figure 13, but pin 1301, light source 1304, main photo receiver 1305, and corrective photo receiver 1309 are included.

Figure 16 is a view of an embodiment of optical aperture sensor 1300, with pin 1301, light source 1304, main photo receiver 1305, and corrective photo receiver 1309 removed, from a perspective that centers on the space that light source 1304 would occupy. This figure depicts aperture 1306 and corrective tunnel 1307 as viewed through main tunnel 1303. The location of pin bore 1302 is depicted by dotted lines.

Figure 13 is a view of an embodiment of optical aperture sensor 1300 as in Figure 16, but with pin 1301 included. In this figure, pin 1301 is inserted to block approximately half of the light through aperture 1306. The visible sections of pin 1301 from this angle are line-shaded for illustrative purposes.

Figure 17 is a view of an embodiment of optical aperture sensor 1300, with light source 1304, main photo receiver 1305, and corrective photo receiver 1309 removed, from a perspective that centers on the space that main photo receiver 1305 would occupy. This figure depicts aperture 1306 as viewed through main tunnel 1303 and depicts corrective tunnel 1307 to the left of main tunnel 1303. The location of pin bore 1302 is depicted by dotted lines and the visible sections of pin 1301 from this angle are line-shaded for illustrative purposes. In this figure, pin 1301 is inserted to block no light through aperture 1306.

In an exemplary embodiment, object 1308 may resemble a miniature hockey puck, or a disc-shaped object, with a diameter of 1.5" and a height of ½ inch. A hole with a diameter of 0.125" may be drilled in the center of the puck to serve as pin bore 1302. Both main tunnel 1303 and corrective tunnel 1307 may have diameters of 5 mm, or may have different diameters selected to fit light source 1304, main photo receiver 1305, and corrective photo receiver 1309 in a snug manner.

In other exemplary embodiments, object 1308 may be assembled from one or more molded pieces. And in such embodiments, pin bore 1302, main tunnel 1303, and corrective tunnel 1307 may be molded (or drilled). A pin bore 1302 may be created to fit a pin 130 with a diameter of approximately 0.124". Main tunnel 1303 may have a diameter of approximately 0.182". The aperture may have a width of approximately 0.069" and a maximum height of approximately 0.200". The maximum height of the aperture may be slightly smaller than the diameter of main tunnel 1303 in cases where the aperture is made to be fully rectangular. (However, in some embodiments, the aperture may not be truly rectangular. That is, two (or one) of its sides may remain rounded-the edge(s) provided for by the circumference of main tunnel 1303.)

### Optical Aperture Sensor: Hardware Feedback Loop Embodiments

Although the ratio value may accurately represent relative position of two members, such a ratio may need to be calculated by a controller, a process that may consume computing resources and may delay the time until usable distance data may be accessed and utilized. Further, the use of the ratio technique may require additional electrical connections to the controller-that is, the controller may need to be connected to both main photo receiver 1305 and corrective photo receiver 1309. Through the use of hardware feedback techniques, environmental variables may be accounted for without explicit calculation of a ratio. In an embodiment, the output from the corrective photo receiver may be used to control the amount of light emitted by light source 1304 through a hardware feedback loop. That is, a circuit may be configured to maintain a particular output level from corrective photo receiver 1309, such as, for example 1 Volt, by making the current received by light source 1304 increase or decrease dependent on corrective photo receiver 1309's output level.

Because main photo receiver 1305 receives light only from light source 1304 and because light source 1304 is standardized to the output of corrective photo receiver 1309, the output of main photo receiver 1305 is standardized with corrective photo receiver 1309; no separate calculation of a ratio of the respective outputs of the main photo receiver and the corrective photo receiver is required. That is, because corrective photo receiver 1309 adjusts the intensity of light, taking environmental factors into account, the output of main photo receiver 1305 may represent the relative position measured by the optical aperture sensor and needs no further adjustment to account for environmental factors. In essence, the hardware feedback technique obviates the need to calculate the ratio.

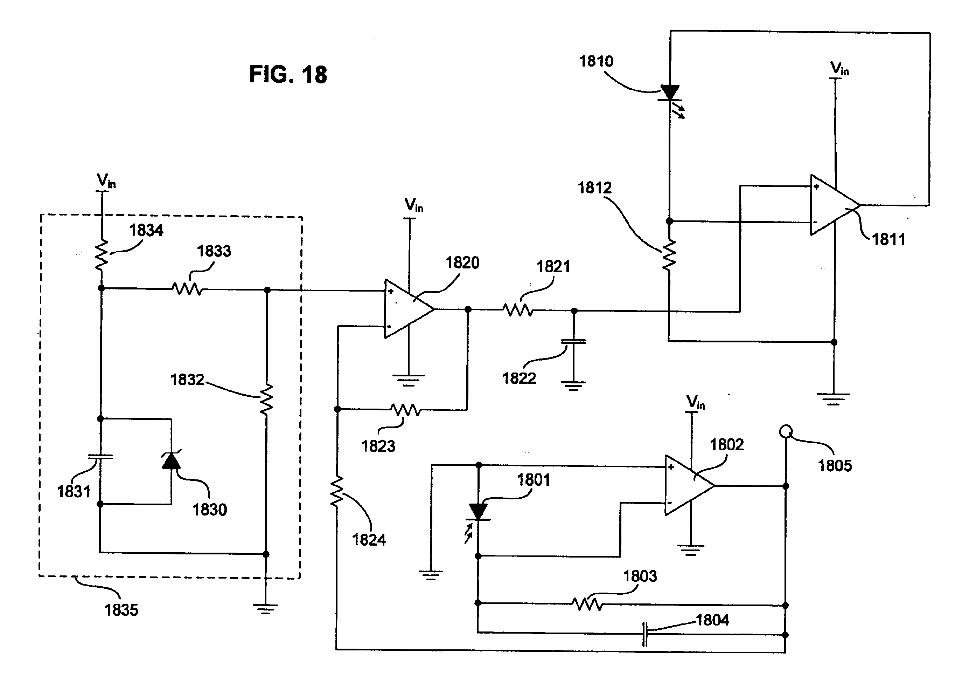

Figure 18 is a circuit schematic illustrating an exemplary embodiment of a hardware feedback loop of optical aperture sensor 1300. The output of corrective photodiode 1801 (serving as corrective photo receiver 1309), which represents the light received from infrared LED 1810 (serving as light source 1304), may be read at corrective photo receiver output 1805. When the luminary output of infrared LED 1810 is standardized, corrective photo receiver output 1805 should substantially remain at 1 Volt. Operational amplifier 1820 compares corrective photo receiver output 1805 to a reference voltage of 1 Volt, maintained by voltage reference circuit 1835. And after the output of operational amplifier 1820 is lowpass filtered (by resistor 1821 and capacitor 1822), operational amplifier 1811 provides an adjusted current to infrared LED 1810. When corrective photo receiver output 1805 is less than 1 Volt, the current output of operational amplifier 1811-and the intensity of the light output from infrared LED 1810-is increased by the hardware feedback loop, and when corrective photo receiver output 1805 is greater than 1 Volt the current output of operational amplifier 1811-and the intensity of the light output from infrared LED 1810-is decreased by the hardware feedback loop. (Viewing this hardware feedback circuit embodiment from another perspective, the feedback circuit effectively acts as an analog computer performing the ratio calculation because the denominator-corrective photo receiver output 1805-is maintained as 1.0V, and thus, the output from main photo receiver 1305 is equal to the ratio of the respective outputs of the photo receivers.) With reference to Figure 18, Vᵢₙ may equal 3.3V.

The table below identifies the electronic components used in an exemplary embodiment of a hardware feedback loop in an exemplary optical aperture sensor 1300 depicted in Figure 18.

| **Reference** | | **Component Information** | **Manufacturer** | **Part Number** |
|---|---|---|---|---|
| Corrective Photodiode | 1801 | QS0D030 | Fairchild Semiconductor | QSD2030 |
| Operational Amplifier | 1802 | MCP6024 | Microchip | MCP6024-I/ST |
| Resistor | 1803 | 20.0k 0.1% 1/10W | Susumu | RG1608P-203-B-T5 |
| Capacitor | 1804 | 15pF 5% 50V | AVX | 06035A150JAT2A |
| Infrared LED | 1810 | IR333C/H2 | Everlight | IR333C/H2 |
| Operational Amplifier | 1811 | MCP6024 | Microchip | MCP6024-I/ST |
| Resistor | 1812 | 75ohms 0.1% 1/10W | Susumu | RG1608P-750-B-T5 |
| Operational Amplifier | 1820 | MCP6024 | Microchip | MCP6024-I/ST |
| Resistor | 1821 | 100k 0.1% 1/10W | Susumu | RG1608P-104-B-T5 |
| Capacitor | 1822 | 1.5uF 16V 10% | Panasonic | ECJ-3YB1C155K |
| Resistor | 1823 | 100k 0.1% 1/10W | Susumu | RG1608P-104-B-T5 |
| Resistor | 1824 | 100ohms 0.1% 1/10W | Susumu | RG1608P-101-B-T5 |
| Voltage Reference | 1830 | LM4040 3.0V | Texas Instruments | LM4040A301DBZR |
| Capacitor | 1831 | 0.1uF 50V | Panasonic | ECJ-1VB1H104K |
| Resistor | 1832 | 3.32k 0.1% 1/10W | Susumu | RG1608P-3321-B-T5 |
| Resistor | 1833 | 6.65k 0.1% 1/10W | Susumu | RG 1608P-6651-B-T5 |
| Resistor | 1834 | 100ohms 0.1% 1/10W | Susumu | RG1608P-101-B-T5 |

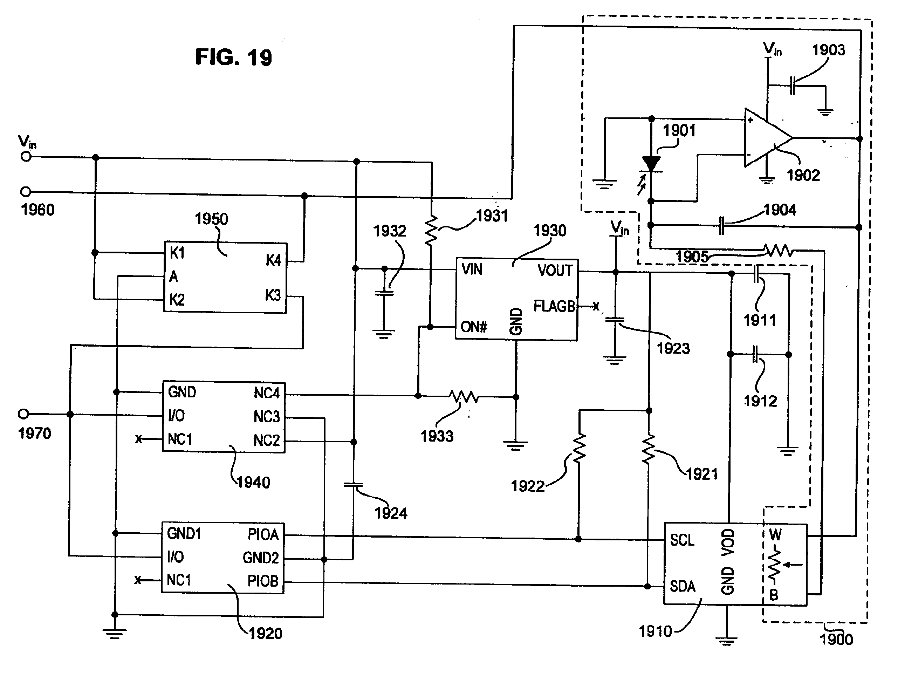

In one embodiment, operational amplifiers 1802, 1811, and 1820 referenced above and operational amplifier 1902 (reference below, with respect to Figure 19) may reside on the same chip.

### Optical Aperture Sensor: Gain Control and Calibration Embodiments

Notwithstanding environmental variables or correction for them, the output of optical aperture sensor 1300 may vary with electrical and physical manufacturing tolerances in the electrical and optical components, and with variations in the alignment of the optical components. However, when optical aperture sensor 1300 comprises part of an intelligent fluid control component 2000, the manufacturing variances may be corrected for in an additional manner. That is, calibration data 2022 relating to such variations may be stored by data storage module 2020 and sent to system controller 2070 via data communication module 2010. System controller 2070 may calibrate the sensor's performance by utilizing calibration data 2022 with respect to a sensor's gain.

Manufacturing and alignment variances of optical aperture sensor 1300 may be compensated for by multiplying the raw electrical output of main photo receiver 1305 (which may be embodied by main photodiode 1901) by a particular gain value. Although this could also be done through controller software 112, the electrical output of the main photo receiver may be compensated for in hardware by, for example, a gain circuit. That is, in a gain circuit, the output of a photo receiver may be effectively multiplied by a calibrated gain value for the controller to receive sensor output that has been effectively compensated for manufacturing variances. In an exemplary embodiment, gain controlled photo receiver output 1960 may be considered the ultimate output of analog aperture sensor 1300.

Gain circuit 1900 may feature, among other electrical components, various resistors positioned with respect to an operational amplifier. The resistance values of such resistors may dictate the amount of gain for the circuit. In an exemplary embodiment, one or more resistors used in the gain circuit may be digital potentiometer 1910. Digital potentiometer 1910 may be set by system controller 2070 (or intelligent fluid control component 2000, itself) to produce a particular amount of resistance, thereby effectively setting the gain value for a particular photo receiver in gain circuit 1900. In turn, this gain value may compensate for manufacturing and alignment variances, thereby standardizing the correlation between an optical aperture sensor's (or photo receiver's) electrical output and the relative distance being measured by the optical aperture sensor.

A manual potentiometer could be used instead of digital potentiometer 1910 and would not need to be set by a controller on start up. However, adjusting the manual potentiometer to a precise calibration setting may be difficult and may add significant expense to the calibration procedure.

Figure 19 is a circuit schematic illustrating an exemplary embodiment of gain circuit 1900 of optical aperture sensor 1300. The gain circuit illustrated in Figure 19, includes main photodiode 1901 (serving as main photo receiver 1305), operational amplifier 1902, and digital potentiometer 1910. Gain controlled photo receiver output 1960 may be read by controller 2070 or another device receiving data from optical aperture sensor 1300. Digital potentiometer 1910 may be variable between 0kΩ and 50kΩ and its resistor terminals are represented by "W" and "B." "SCL" and "SDA" represent an I²C interface that directly controls the setting of digital potentiometer 1910. The I²C interface communicates over 1-Wire® via a 1-Wire® parallel I/O converter 1920 (which communicates with the controller via controller data connection 1970), to receive data from controller 2070. The embodiment illustrated in Figure 19 may embody intelligent fluid control component 2000 because in addition to comprising a functional sensor, it features EEPROM memory chip 1940, which contains data storage module 2020 and data communication module 2010 to communicate with controller 2070 via controller data connection 1970 through the 1-Wire® system. Further, the embodiment illustrated in Figure 19 contains electrostatic discharge chip 1950 and power management switch 1930.

The table below identifies the electronic components used in an exemplary embodiment of the circuit schematic depicted in Figure 19.

| **Reference** | **-** | **Component Information** | **Manufacturer** | **Part Number** |
|---|---|---|---|---|
| Main Photodiode | 1901 | QS0D030 | Fairchild Semiconductor | QSD2030 |
| Operational Amplifier | 1902 | MCP6024 | Microchip | MCP6024-I/ST |
| Capacitor | 1903 | 0.1uF 50V | Panasonic | ECJ-1VB1H104K |
| Capacitor | 1904 | 15pF 5% 50V | AVX | 06035A150JAT2A |
| Resistor | 1905 | 19.6k 0.1% 1/10W | Susumu | RG1608N-1962-B-T5 |
| Digital Potentiometer | 1910 | AD5246 | Analog Devices | AD5246BKSZ50-RL7 |
| Capacitor | 1911 | 4.7uF 25V | Panasonic | ECJ-2FB1E475M |
| Capacitor | 1912 | 0.1uF 50V | Panasonic | ECJ-1VB1H104K |
| Parallel I/O Converter | 1920 | DS2413 | Maxim | DS2413P+ |
| Resistor | 1921 | 2.00k 1% 1/10W | Vishay | CRCW06032KOOFKEA |
| Resistor | 1922 | 2.00k 1% 1/10W | Vishay | CRCW06032KOOFKEA |
| Capacitor | 1923 | 0.1uF 50V | Panasonic | ECJ-1VB1H104K |
| Capacitor | 1924 | 0.1uF 50V | Panasonic | ECJ-1VB1H104K |
| Power Management Switch | 1930 | FPF2005 | Fairchild Semiconductor | FPF2005 |
| Resistor | 1931 | 10.0k 1% 1/10W | Vishay | CRCW06010KOFKEA |
| Capacitor | 1932 | 4.7uF 25V | Panasonic | ECJ-2FB1E475M |
| Resistor | 1933 | O ohms 5% 1/1 0W | Vishay | CRCW06030000Z0EA |
| EEPROM Memory Chip | 1940 | DS2431 | Maxim | DS2431P+ |
| Electrostatic Discharge Chip | 1950 | PESD3V3L4UG | NXP Semiconductors | PESD3V3L4UG |

A particular gain value may be calculated either in a factory setting or by a field calibration routine (perhaps utilizing self-calibration module 110). A gain value may be determined as such, or it may be effectively determined by the determination of a particular setting on, for example, digital potentiometer 1910 within gain circuit 1900. Either way, once the gain value for a particular photo receiver has been determined, the gain value and/or its proxy-such as digital potentiometer 1910 settings-may be stored in data storage module 2020, along with other calibration data 2022.

In one exemplary embodiment, the initial calibration routine for an optical aperture sensor may proceed as follows: To begin the calibration, the aperture may be fully open and the gain may be set to a very low level. For example, with reference to Figure 19, digital potentiometer 1910 may be set to its minimum resistance value, for example 0kΩ. The gain value may be iteratively increased, for example, by raising the resistance of the digital potentiometer by 390Ω per iterative cycle. After each increase in gain, the gain-controlled output of main photodiode 1901 may be determined. Once gain-controlled main photo receiver output 1960 reaches a predetermined particular value or is within a predetermined range of values, such as, for example 2.9 Volts, the gain may be considered calibrated. (In other calibration routines, the digital potentiometer may be initially set to its maximum resistance value, for example 50kΩ, and iteratively decreased.) The calibrated digital potentiometer setting-i.e. its setting at the predetermined main photo receiver output value (or range of values)-may be stored in data storage module 2020. With reference to Figure 19, Vᵢₙ may equal 3.3 V.

As discussed above, optical aperture sensor 1300 may be coupled to a valve, such as solenoid pinch valve 161, to accurately determine the degree which the valve is opened or closed. That is, optical aperture sensor 1300 may determine the relative position of the armature of solenoid pinch valve 161. In such an embodiment, the correlation between an optical aperture sensor's electrical output (for example, gain-controlled main photo receiver output 1960) and the relative position measured by the optical aperture sensor may be stored in data storage module 2020 as calibration data 2022—or in some cases as authentication data 2021-where the correlation is standardized for a particular model of component. For example, data within data storage module 2020 may indicate that a 2.9 Volt output indicates that aperture 1306 is fully open and that a 0 Volt output indicates that aperture 1306 is fully closed. Because an optical aperture sensor (which may be a considered a functional fluid component in its own right) may be physically coupled to a functional fluid control component via multiple methods, data storage module 2020 may further indicate what a certain optical aperture sensor output indicates with respect to that functional fluid control component. For example, with respect to a valve, one output, for example 2.9 Volts, may indicate that the valve is closed and another output, for example 0 Volts, may indicate that the valve is open. In other embodiments, correlation data may be determined by indirectly using authentication data 2021 that identifies a particular part. In such embodiments, controller 2070 may look up relevant sensor output correlation data based on the model of component identified.

Although such calibration may greatly increase the resolution of sensor output, it should be noted that calibrated gain control may not be necessary for basic operation of optical aperture sensor 1300. When the aperture of an optical aperture sensor is fully closed, the main photodiode 1901 receives effectively no light and main photo receiver output 1960, is effectively zero, regardless of the gain. And a controller may be programmed to consider the aperture fully open whenever the electrical output of a photo receiver is above a certain value, such as a particular voltage. However, because of variances in manufacturing tolerances, an optical aperture sensor without calibrated gain control may not be able to accurately determine intermediate apertures. For example, without calibrated gain, the electrical outputs of two photo receivers (of the same type) with their respective apertures fully open may both be greater than a particular voltage, such as, for example 2.5 Volts. However, the output of the first photo receiver wherein its corresponding aperture is 40% open may be measurably greater or smaller than the output of the second photo receiver wherein its corresponding aperture is 40% open. Thus, the use of calibrated gain control may optimize resolution for an optical aperture sensor.

When optical aperture sensor 1300 is used in a fluid control system-either alone or coupled to another functional fluid control component-it may be automatically calibrated upon system start up using the values determined through, for example, the above described processes. That is, system controller 2070 may receive calibration data 2022 (and, in some cases, authentication data 2021 to determine correlation) from data storage module 2020 via data communication module 2010. Controller 2070 may then set one or more digital potentiometers 1910 to the predetermined settings, and may adjust controller software 112 to account for the correlation between sensor output values and a functional fluid control component or other relative position being measured. In this manner, by calibrating each optical aperture sensor digitally, the performance of any number of optical aperture sensors may be substantially identical despite variances in manufacturing, including alignment. That is, use of the calibration data 2022 may ensure that feedback from intelligent fluid control components 2000 to either system controller 2070 or to other user equipment is consistent among multiple components of the same type and model (or, in some embodiments, different models of components.)

### Optical Aperture Sensor: Maximizing Linearity

Optical Aperture Sensor 1300 may work most effectively when its output varies as linearly as possible with the size of the aperture. This linearity may vary with a number of variables that affect the transmission of light between main photo receiver 1305 and light source 1304.

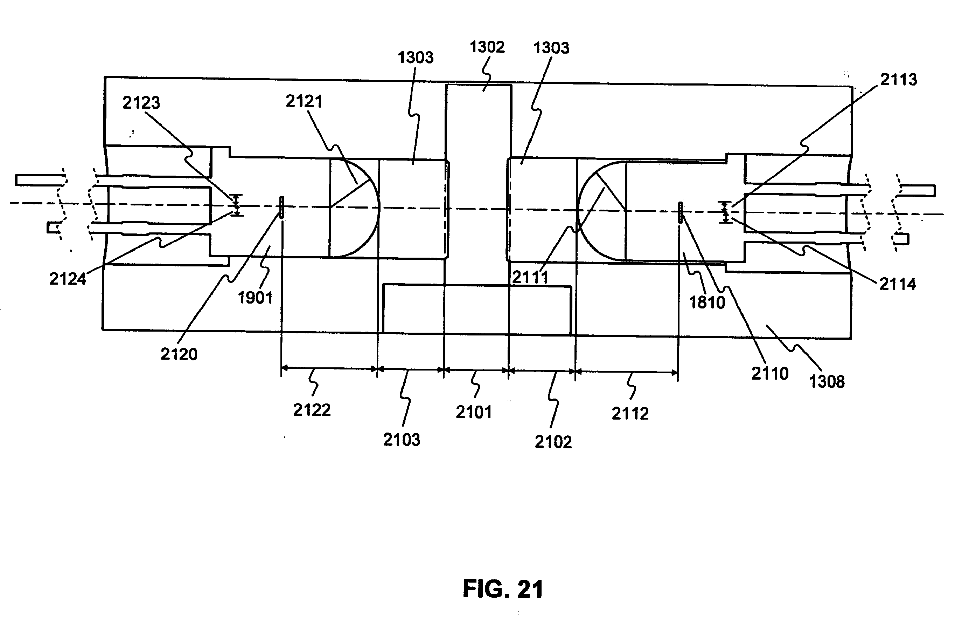

Figure 21 illustrates a cross section of an exemplary embodiment of optical aperture sensor 1300, wherein light source 1304—embodied by infrared LED 1810-and main photo receiver 1305-embodied by main photodiode 1901-emit and receive light, respectively, through semi-spherical surfaces. In this embodiment. several variables affecting linearity are inherent characteristics possessed by main photodiode 1901 and infrared LED 1810. With respect to infrared LED 1810, these variables may include emitter radius 2111 (the radius of the emitter's semi-spherical surface); the emitter surface's index of refraction; emitter length 2112 (the distance between emitter chip 2110-the emitting chip within the emitter-and the edge the emitter's surface); and upper emitter chip limit 2113 and lower emitter chip limit 2114 (which together describe the height of emitter chip 2110). With respect to main photodiode 1901, these variables may include detector radius 2121 (the radius of the detector's semi-spherical surface); the detector surface's index of refraction; detector length 2122 (the distance between detector chip 2120-the detecting chip within the detector-and the edge the detector's surface); and upper detector chip limit 2123 and lower detector chip limit 2124 (which together describe the height of detector chip 2120). Other variables are dependent of the physical dimensions of object 1308 and the assembly specifications of optical aperture sensor 1300. These variables include the aperture distance 2101 (which may be the diameter of pin bore 1302), emitter-side space 2102 (the distance between the surface of the emitter and pin bore 1302), and detector-side space 2103 (the distance between the surface of the detector and pin bore 1302).

The relationship between optical aperture sensor 1300 output (which may be gain-controlled main photo receiver output 1960) and the aperture size may be modeled. That is, the amount of light received by detector chip 2120 from emitter chip 2110 at various aperture sizes may be determined using various optics equations that are known in the art. A set of data points at a number of these aperture sizes may thus be generated. Using linear regression techniques, an R-Squared value may be determined for the set of data points calculated based various sets of variables described above. A high R-Squared value, which is indicative of a highly linear relationship between sensor output and aperture size, may be desired.

A computer program may be supplied with ranges for the variables described above (e.g. emitter radius 2111, the emitter surface's index of refraction, emitter length 2112, upper emitter chip limit 2113, lower emitter chip limit 2114, detector radius 2121, the detector surface's index of refraction; detector length 2122, upper detector chip limit 2123, lower detector chip limit 2124, aperture distance 2101, emitter-side space 2102, and detector-side space 2103). The program may calculate sets of data points and resulting R-Squared values for each combination of variable values that may be derived from supplied ranges for each respective variable. Where particular variables are already determined, that variable may be "set" as a single value for the purposes of running such a computer program. For example, a particular aperture distance 2101 may already be determined. Alternatively, or in addition, a particular emitter and/or detector may already be selected. Thus, all variables inherent that the particular selected emitter (and/or detector) may already be set.

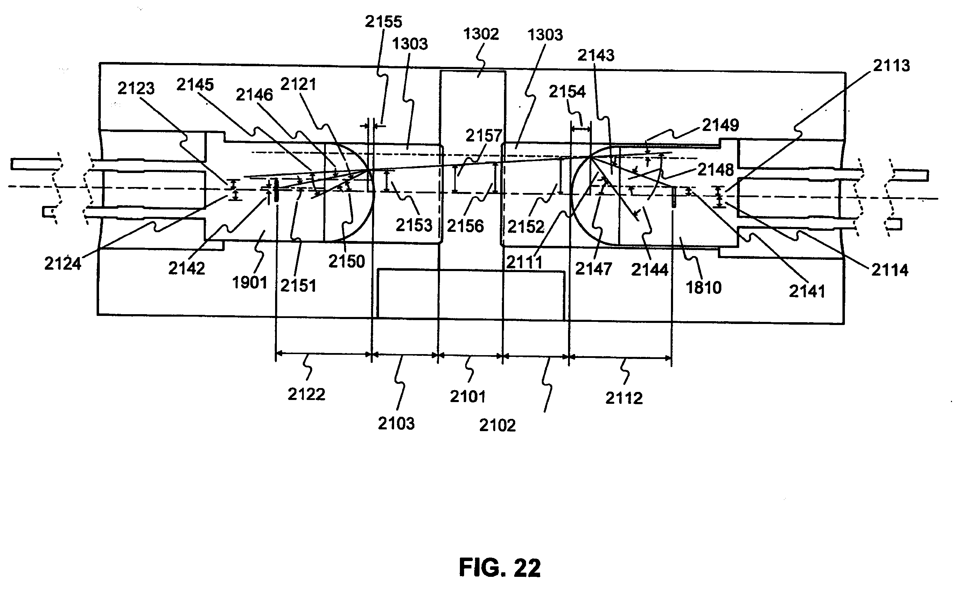

The computer code listed at the end of the specification is an embodiment of a computer program that may ultimately determine the set of variables (within respective ranges supplied in the program) that would result in the highest R-squared value. It is written in C computer language. For each set of tested variables, this program uses optical equations to estimate the amount of light received by detector chip 2120 from emitter chip 2110 at various aperture settings. With reference to Figure 22, for each aperture size data point (for each set of tested variables), the program aggregates calculations estimating the of the amount of light received by discrete sections of detector chip 2120-based on chip detector position 2142 (varying between upper detector chip limit 2123 and lower detector chip limit 2124)—from discrete sections of emitter chip 2110-based on chip emitter position 2141 (varying between upper emitter chip limit 2113 and lower emitter chip limit 2114). For each chip emission position 2141 modeled, the computer program models a number of light rays in order to determine the amount of light received by each modeled chip detector position 2142. Known optical equations are used to calculate the amount of light received. For each light ray, Angles 2143 -2151, vertical emission position 2152, vertical detector position 2153, horizontal emission position 2154, horizontal detector position 2155, may be utilized in the calculation. Additionally, ray position emitter edge of pin shaft 2156 and ray position detector edge of pin shaft 2157 may be calculated and used to determine whether pin 1301 blocks a particular light ray at a particular aperture size.

The table below maps the variables referenced in Figures 21 and 22 and discussed above to the variables used in the computer code listed at the end of the specification.

| **Reference** | | **Corresponding Variable within the Computer Code Listed at the End of the Specification** |
|---|---|---|
| Aperture Distance | 2101 | x2 |
| Emitter-Side Space | 2102 | x1 |
| Detector-Side Space | 2103 | x3 |
| Emitter Radius | 2111 | r1 |
| Emitter Length | 2112 | s1 |
| Upper Emitter Chip Limit | 2113 | 0.7mm (value not variable) |
| Lower Emitter Chip Limit | 2114 | -0.7mm (value not variable) |
| Emitter Index of Refraction | | n1 |
| Detector Radius | 2121 | r2 |
| Detector Length | 2122 | s2 |
| Upper Detector Chip Limit | 2123 | z1 |
| Lower Detector Chip Limit | 2124 | z2 |
| Receiver Index of Refraction | | n2 |
| Chip Emission Position | 2141 | h1 |
| Chip Detection Position | 2142 | h2 |
| Angle | 2143 | theta 1 |
| Angle | 2144 | theta2 |
| Angle | 2145 | theta3 |
| Angle | 2146 | theta4 |
| Angle | 2147 | thetaA |
| Angle | 2148 | thetaB |
| Angle | 2149 | thetaC |
| Angle | 2150 | thetaD |
| Angle | 2151 | thetaE |
| Vertical Emission Position | 2152 | a1 |
| Vertical Detector Position | 2153 | a2 |
| Horizontal Emission Position | 2154 | d1 |
| Horizontal Detector Position | 2155 | d2 |
| Ray Position Emitter Edge of Pin Shaft | 2156 | y1 |
| Ray Position Detector Edge of Pin Shaft | 2157 | y2 |

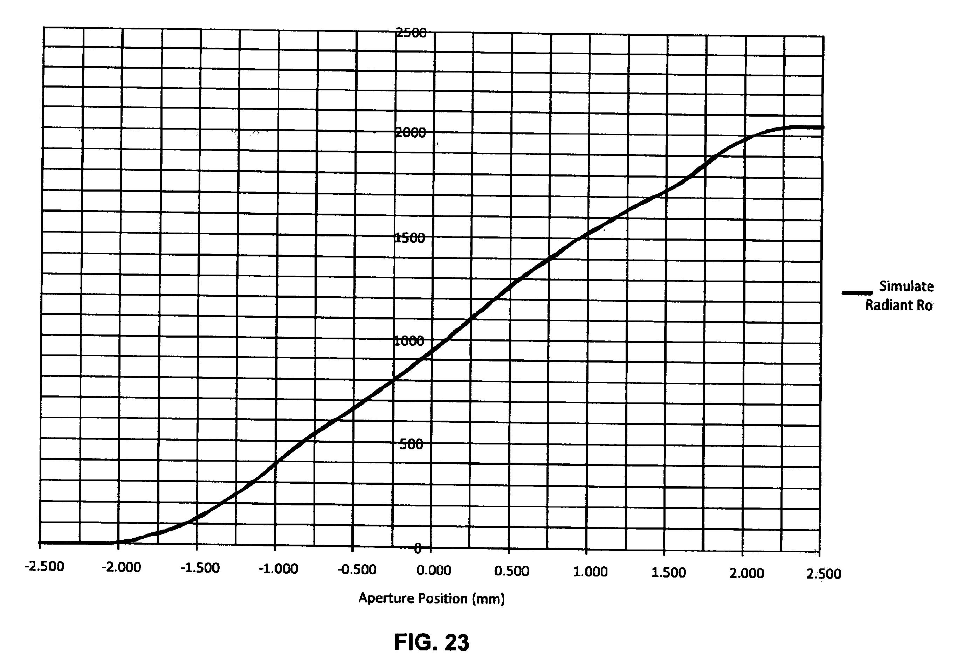

The software code listed at the end of the specification, according to one aspect of the disclosure, can additionally output data points simulating the output of an optical aperture sensor at various aperture positions. Figure 23 is a graph generated by the software code listed at the end of the specification illustrating simulated output of optical aperture sensor 1300 at various aperture positions. Figure 23 illustrates an substantially linear relationship between aperture position and optical aperture sensor output (in the form of calculated radiant power received from simulated light rays), according to one aspect of the disclosure. That is, it illustrates that the relationship between aperture position and optical aperture sensor output is substantially linear under optimized dimensional criteria.

### Additional Peripherals and Sensors

In accordance with Figure 4, additional peripherals and sensors 169 may be integrated into fluid control platform 1. Because controller software 112 is customizable, and because the fluid control platform may contain many ports for peripheral devices and sensors, a platform may be configured to accommodate-within certain power constraints-a virtually limitless array of sensors and peripheral devices 169. These may include, for example, additional types of motors-such as brushed DC motors, additional types of valves, and other types of transducers.
Indeed, the fluid control platform contemplates being able to control, drive, and receive feedback from even those fluid control components that may not yet exist. Controller software 112 may be augmented with algorithms to permit effective operation of these components. Further, such components may be intelligent fluid control components 2000.

### Physical Enclosure

The fluid control platform may be required to fit within a predetermined footprint, even if different configurations are utilized. The fluid control platform may also be stackable, so as to allow combinations desired by users. The physical enclosure of fluid control platform 1 may consist of a panel mounted potted metal or plastic environmental enclosure. Such an enclosure may conceal the fluid control platform technology and provide ingress protection, heat sinking, and electrostatic discharge resistance for the system's electronics. It may provide access to direct user I/Os 140 and data I/O 130.

The physical casing may also permit the mounting of fluid control platform 1 on an equipment panel or other mounting device, such as a DIN-rail. A DIN-rail is a standard 35 mm wide top hat shaped rail often found in industrial equipment enclosures. Such an option would make the fluid control platform more convenient for a user who is mounting multiple modules or additional Programmable Logic Controllers or other standard industrial I/O equipment.

The physical enclosure may be augmented with certain features for a more rugged package, depending on the system needs. This may add further protection to the fluid control platform. Additional protections may include power supply reversal protection, a built-in temperature sensor, and transient voltage suppressors on all inputs and outputs. These and other features may be integrated into fluid control platform 1 in order to make the device universally adaptable.

### Method of Manufacture

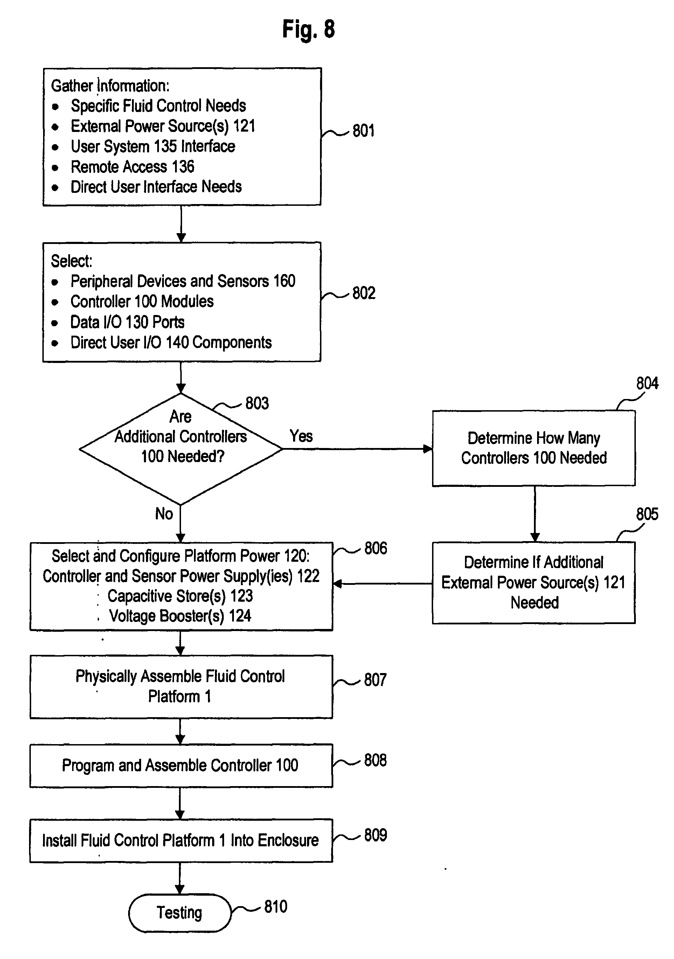

As illustrated in Figure 8, the following steps may be taken to design and manufacture fluid control platform 1 or coordinated fluid control system 2.

The manufacturer may determine the specific fluid control needs of the particular application and the manner in which fluid must be controlled, as in step 801. Additionally, the manufacturer may determine what external power source(s) 121 may be used, what interface that user system(s) 135 (if any) to be integrated may require, whether remote access 136 is desired, and what direct user interface 140 is desired (if any), as in step 801.

Particular peripheral devices and sensors 160 to be integrated into the fluid control system may be selected, as in step 802. Indeed, some, none, or all selected peripheral device and sensors 160 may be intelligent fluid control components 2000. One or more peripheral devices and sensors 160 may be selected, as needed. These components may be calibrated to determine operating point values.

Various modules of controller 100 may be selected for inclusion, as in step 802. One or more module may be selected, as needed. Other excluded modules may be physically left off controller 100, left out of controller 112 software, disabled, or otherwise not made operational for the particular fluid control platform 1 or coordinated fluid control system 2.

Taking into account the particular user system 135 and if remote access 136 is required, data I/O 130 ports may be selected, as in step 802. One or more data I/O 130 ports may be integrated into the fluid control platform, as needed.

Taking into account specific system needs, direct user I/O 140 components may be selected, as in step 802. One or more direct user I/O 140 components may be integrated into the fluid control platform, as needed.

In cases where peripheral devices and sensors 160 are too numerous or may consume too much power to be driven by a single controller 100, multiple controllers 150 may be utilized, as in step 803. Two or more controllers 100 may be networked depending on the power and port needs of the selected peripheral devices and sensors 160. The most efficient number of platforms to satisfy a particular system's needs may be determined, as in step 804. Where multiple controller 100s are to be integrated, multiple external power supplies 121 may be needed, as in step 805.

Platform power 120 may be selected and configured to meet the power needs of peripheral devices and sensors 160, taking into account what external power source(s) 121 is available, as in step 806. One controller and power supply 122 per controller 100 may be selected and configured. Additionally, one or more capacitive stores 123 or voltage boosters 124 may be selected, as in step 806.

The fluid control platform may be physically assembled, as in step 807. Peripheral devices and sensors 160; data I/O 130 ports; direct user I/O 140; and platform power 120, including selected power components may be connected to the controller 100. Where networking with other controllers 150 is utilized, the controllers 100 may be connected to one another in a network configuration, such as in the unidirectional ring configuration network 153 using plastic optical fiber connections 154. Assembly of the platform may be further facilitated by providing prefabricated circuit boards that contain sufficient hardware to support both the controller and a predetermined set of components, all of which need not be connected.

Controller 100 may be programmed and assembled, as in step 808. Each module may be integrated into controller 100 via controller software 112 or, in certain embodiments, by adding module chips to controller 100. Controller software 112 may be programmed to drive peripherals and operate sensors at specified system times and specified system events. In programming controller software 112, sections of the software governing the operating of components may be calibrated based on the operating point values of those specific components. A software interface between user system 135 and controller 100 may be programmed into controller software 112. Software to permit remote access 136 via Ethernet port 131 and software to permit operation of direct user I/O 140 may be included in controller software 112. Where a coordinated fluid control system 2 is required, software to facilitate networking between controllers 150 may be included in controller software 112. In some embodiments, the steps of 807 and 808 may be reversed.

Subsequent to assembly and programming, assembled fluid control platform 1 (or coordinated fluid control system 2) may be installed into a physical enclosure (or multiple enclosures), as in step 809. The manufacturer may also thoroughly test assembled and programmed fluid control platform 1 (or coordinated fluid control system 2) before its delivery and installation at a system site, as in step 810.

Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

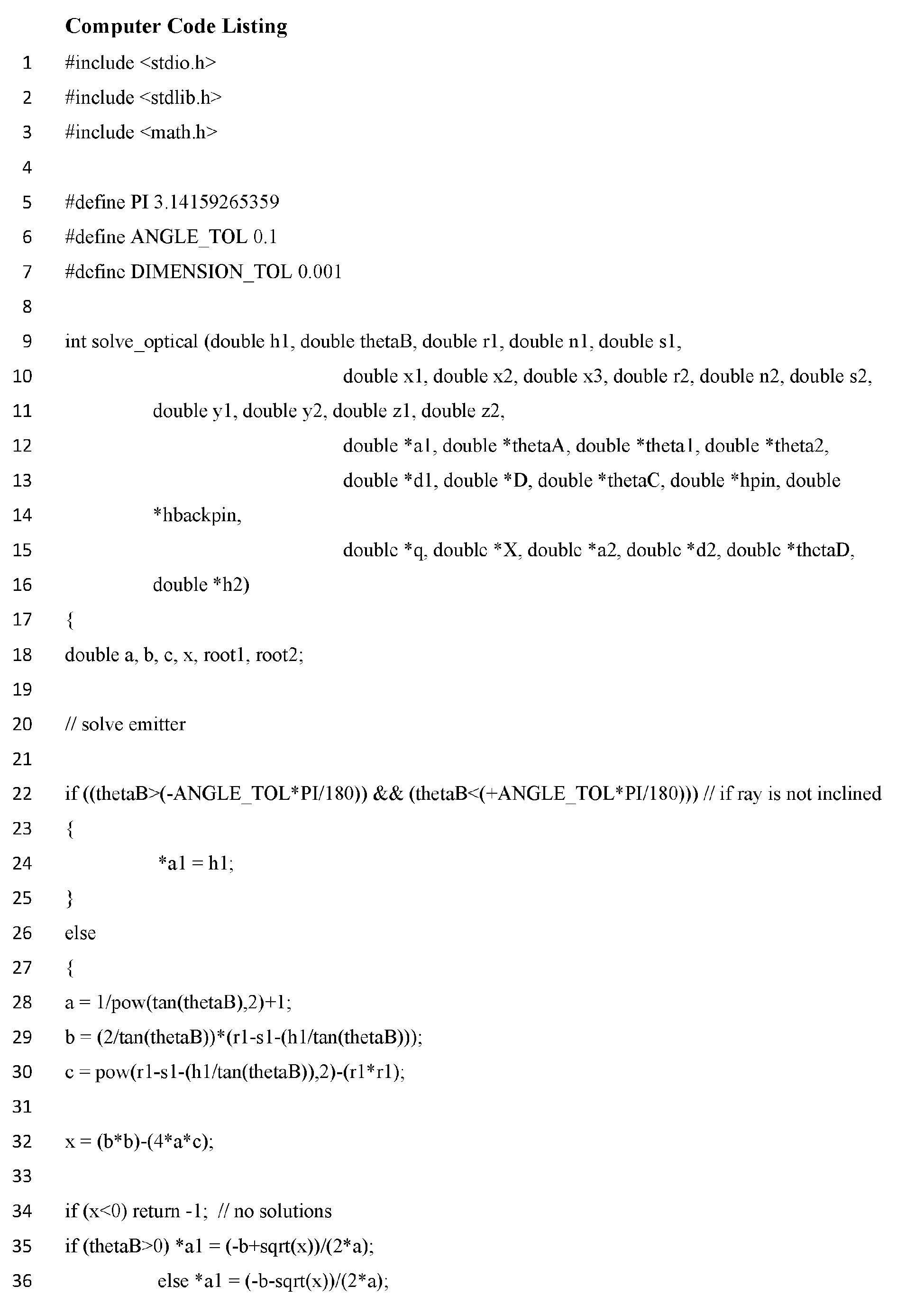

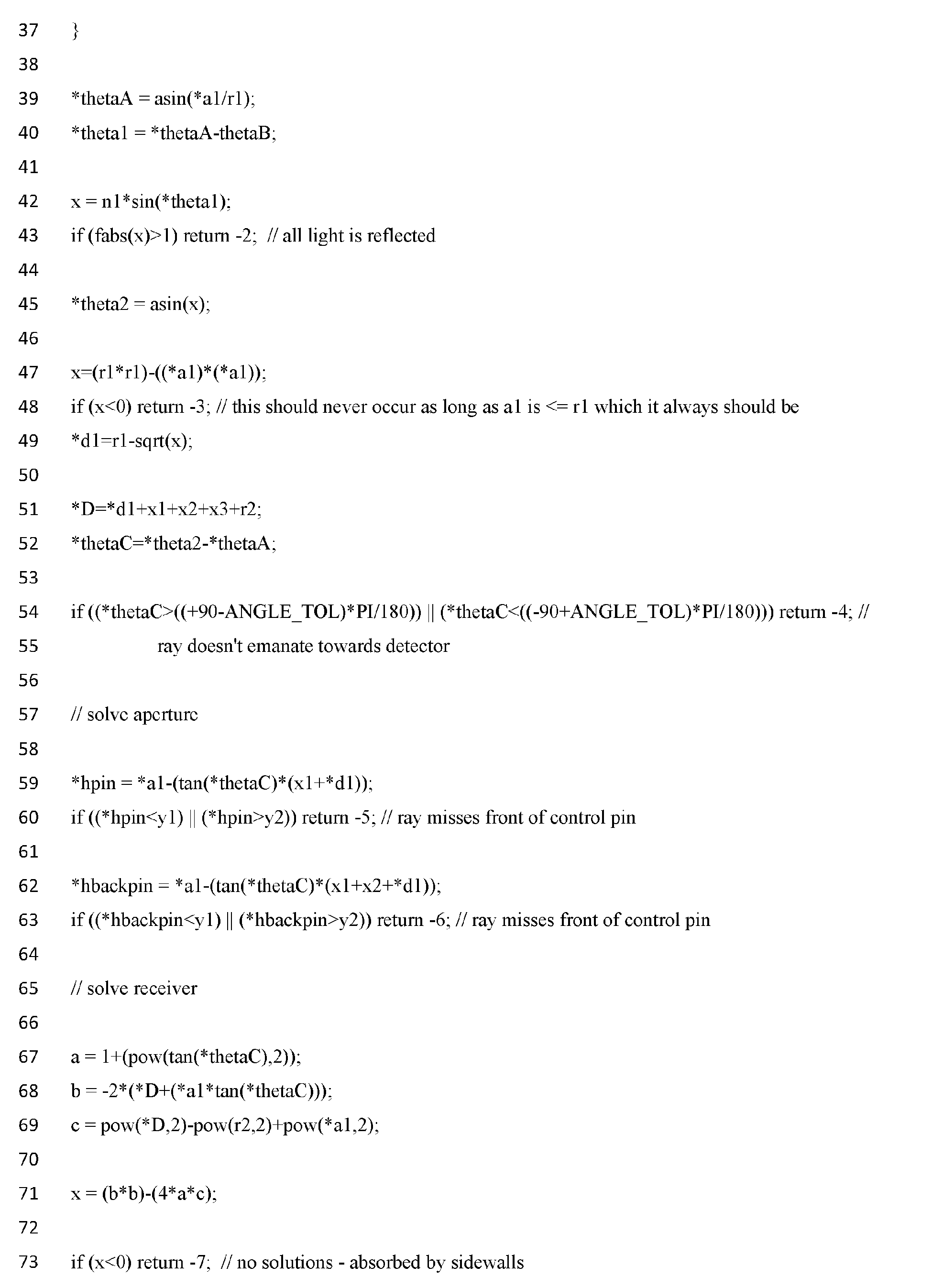

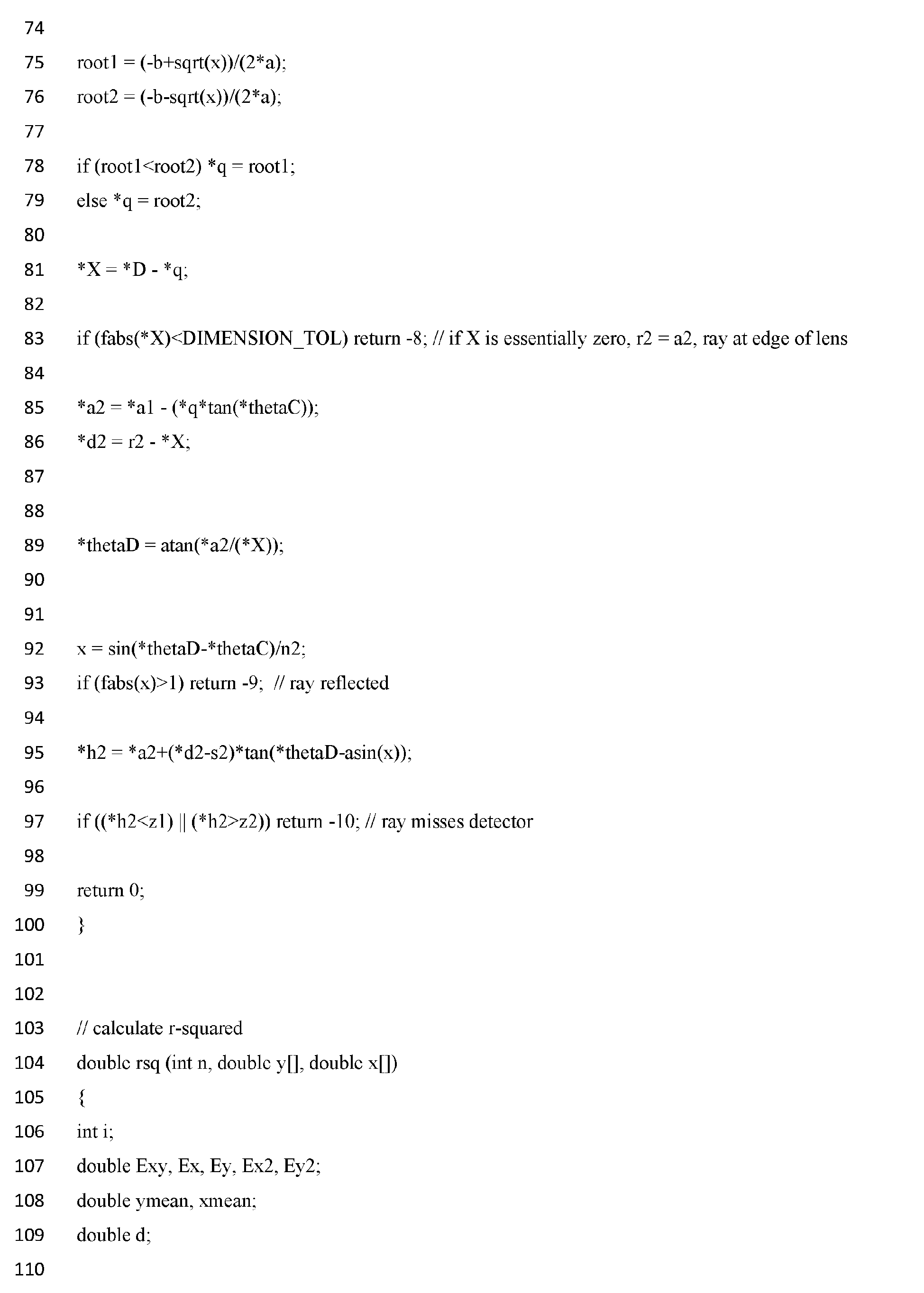

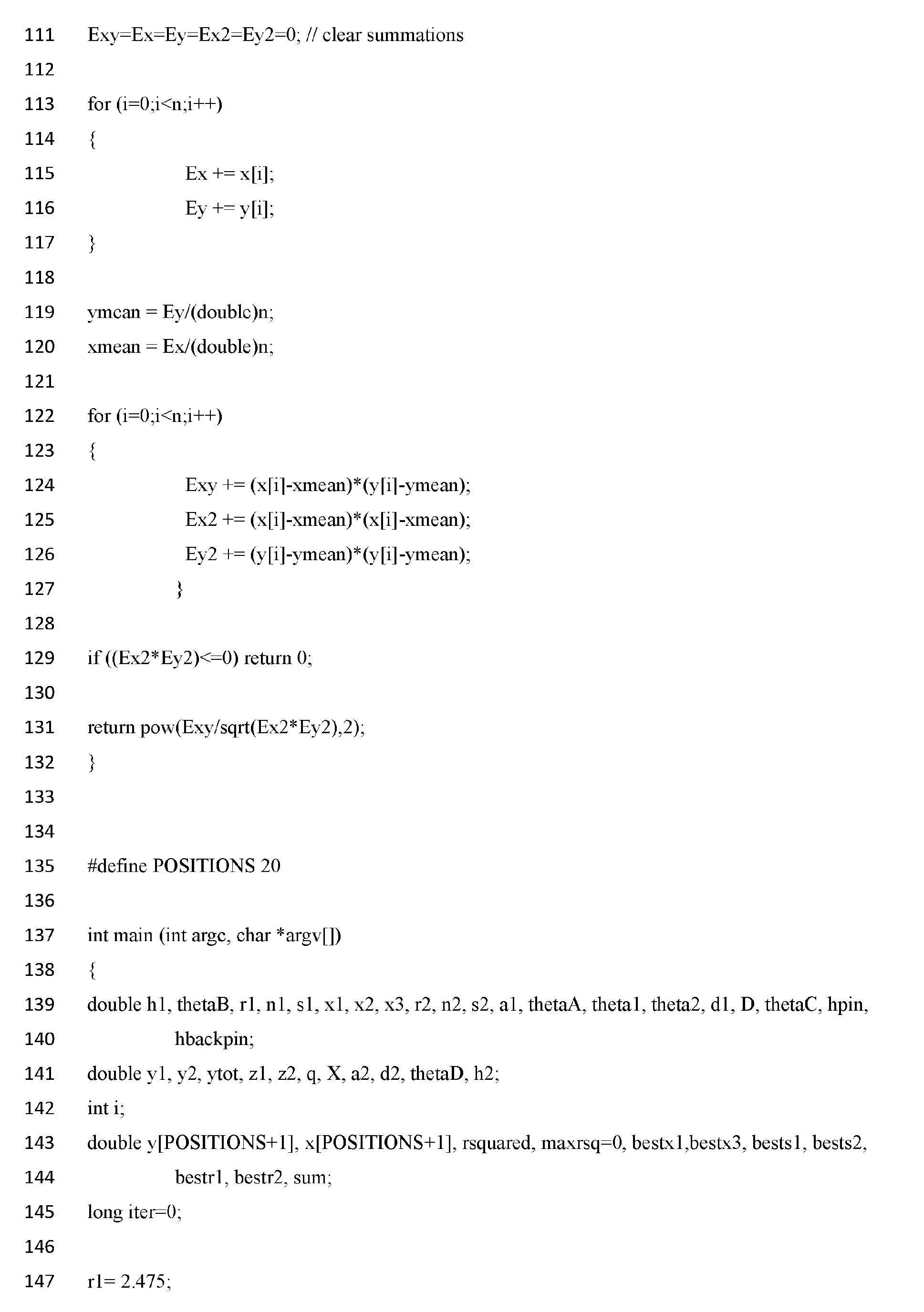

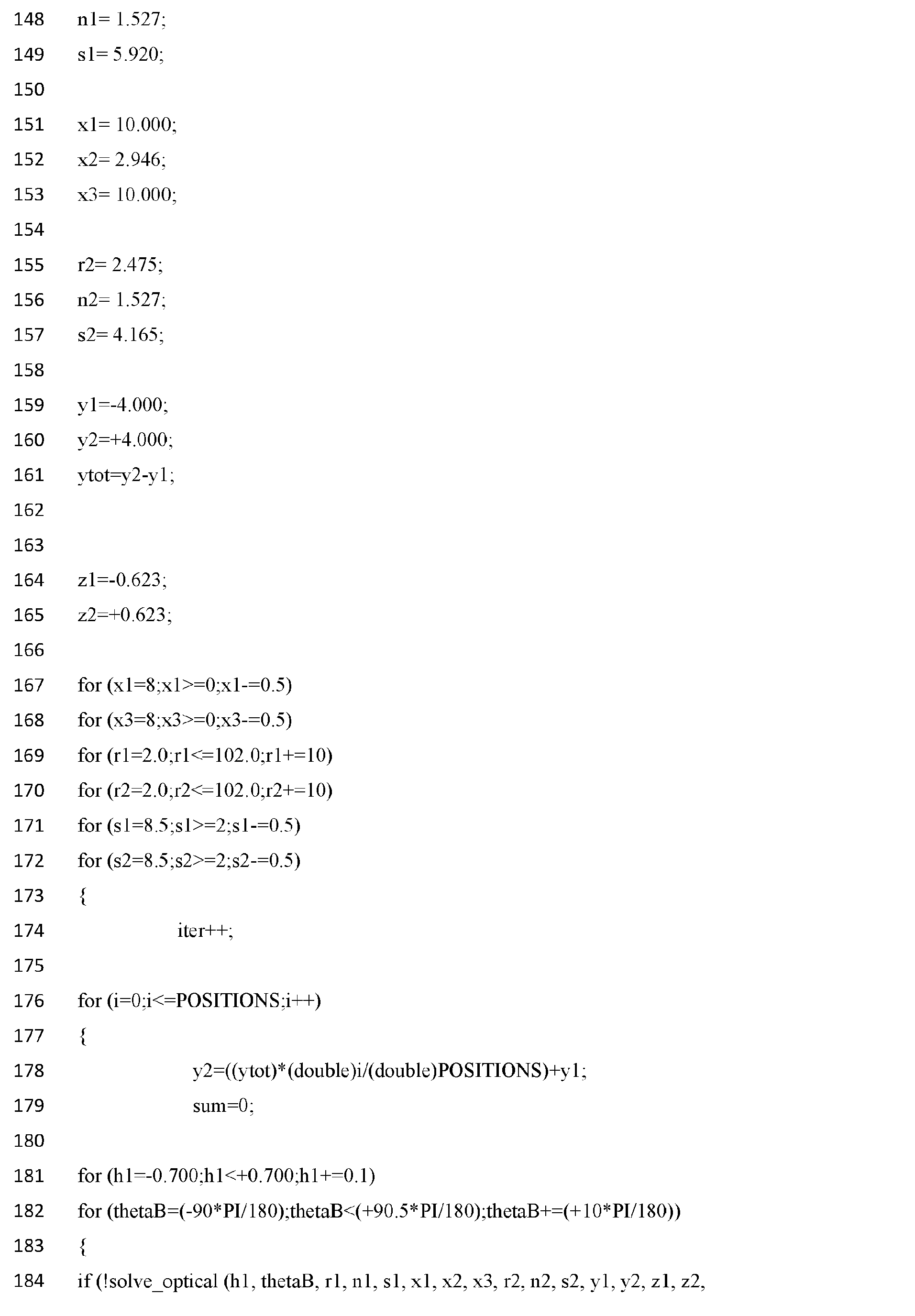

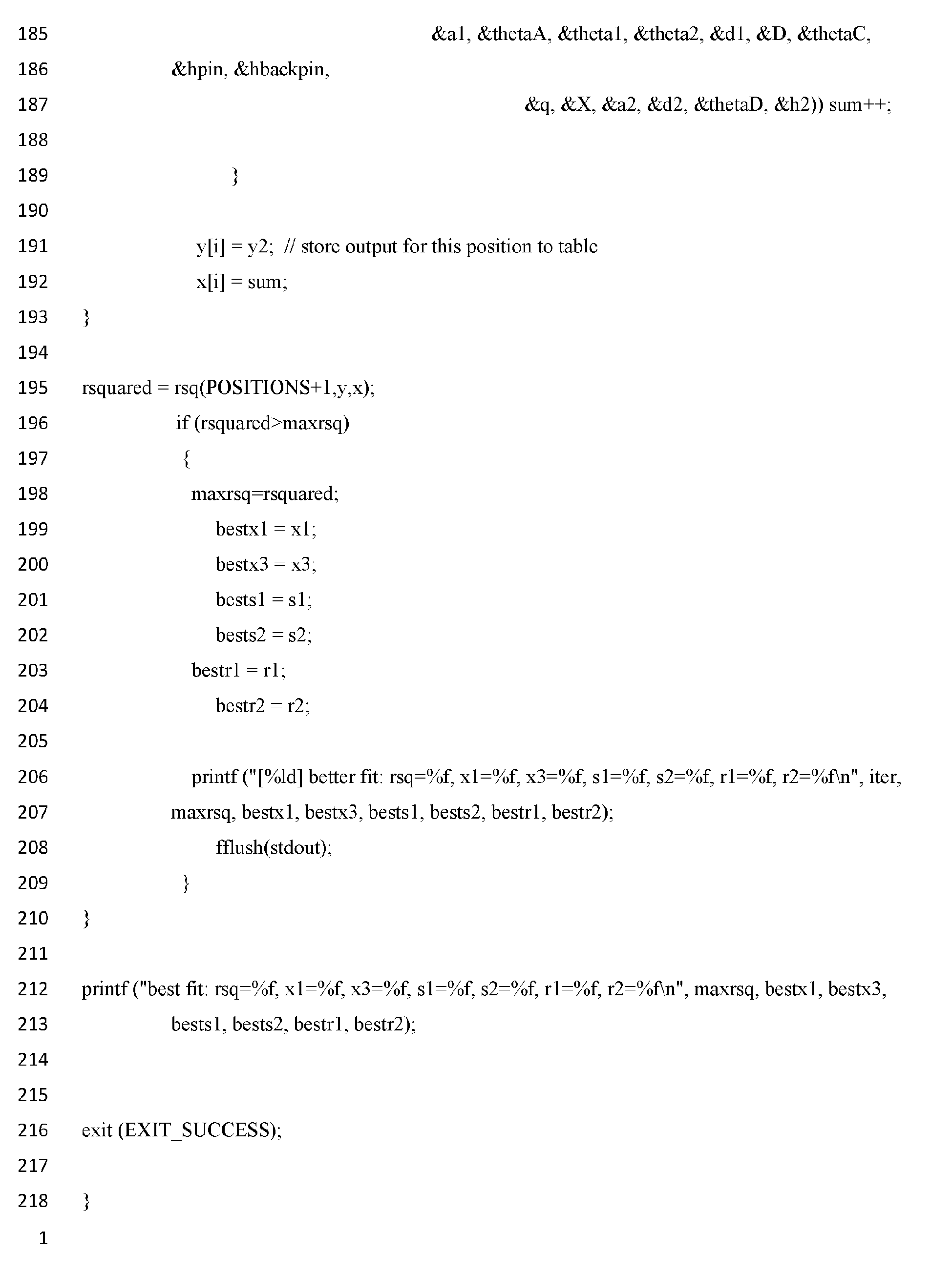

## Claims

1. A position sensor, comprising:
an obj ect defining a first tunnel therethrough;
a light source coupled to said object, wherein said light source is positioned to send light through said first tunnel;
a first photo receiver coupled to said object, wherein said photo receiver is positioned to receive light sent by said light source through said first tunnel;
a bore defined by the object and intersecting said first tunnel in between said light source and said photo receiver;
a movable structure located within said bore, wherein the movable structure moves within the bore and is capable of blocking light through the tunnel; and
a member attached to said movable structure, wherein a position of said member is to be measured based on the amount of light blocked by the structure.

2. The position sensor as in claim 1, further comprising: a blockage in said tunnel, wherein said blockage forms an aperture permitting light to flow through said tunnel only through the aperture.

3. The position sensor as in claim 2, wherein said aperture is rectangular.

4. The position sensor as in claim 2 or 3, wherein the aperture is variable.

5. The position sensor as in claim 3, further comprising:
a second tunnel defined through said object, wherein said second tunnel is positioned to receive light from said light source and is positioned to avoid intersection with said bore; and
a second photo receiver coupled to said object, wherein said photo receiver is positioned to receive light sent by said light source through said second tunnel.

6. The position sensor as in claim 5, wherein an intensity of the light sent from light source varies with respect to an electrical output of the second photo receiver.

7. The position sensor as in claim 5 , further comprising a gain circuit, wherein the gain circuit output is substantially proportional to an electrical output of the first photo receiver.

8. The position sensor as in claim 7, wherein the gain circuit includes a potentiometer.

9. A position sensor as in claim 5, wherein
the light source is positioned with respect to the bore to optimize performance of the position sensor; or
the first photo receiver is positioned with respect to the bore to optimize performance of the position sensor.

10. The position sensor as in claim 5, further comprising a data storage device, wherein said data storage device contains calibration data, authentication data, and operational log data; and/or a data communication device.

11. A method of determining a relative position of two members, comprising:
coupling a first member to a movable structure;
coupling a second member to an object, wherein the movable structure is movable relative to the object and may be inserted into the object;
positioning the movable structure as to block light between a light source coupled to the obj ect and a photo receiver coupled to the obj ect, wherein the amount of light blocked varies with the position of the movable structure;
measuring an output of the photo receiver; and
comparing the output of the photo receiver to a predetermined value to determine a position of the first member relative to a position of the second member.

12. The method as in claim 11, wherein the photo receiver comprises a first photo receiver, the method further comprising:
positioning a second photo receiver to receive light from the light source, wherein
the light received by the second photo receiver from the light source does not vary with position of the movable structure;
measuring an output of the first and second photo receivers; and
calculating a ratio of the respective outputs of the first photo receiver and the second photo receiver;
wherein the step of comparing the output of the photo receiver to a predetermined value comprises comparing the ratio to a predetermined ratio value of the respective outputs of the first and second photo receivers to determine the position of the first member relative to the position of the second member.

13. The method as in claim 11, wherein the photo receiver comprises a first photo receiver, the method further comprising:
positioning a second photo receiver to receive light from the light source, wherein
the light received by the second photo receiver from the light source does not vary with position of the movable structure; and
varying an intensity of light from the light source dependent on an output of the second photo receive.

14. The method of determining a relative position of two members as in claim 13, further comprising increasing the output of the first photo receiver by a gain value, wherein the step of increasing occurs prior to the step of comparing the output of the first photo receiver to the predetermined value.

15. A method of calibrating gain for a position sensor as in claim 4, comprising:
connecting the position sensor to a controller;
setting the variable aperture to its maximum size; and either
setting a gain of the position sensor to a low level; and
iteratively increasing the gain of the position sensor until an output of the position sensor reaches a predetermined value or range;
or
setting a gain of the position sensor to a high level; and
iteratively decreasing the gain of the position sensor until an output of the position sensor reaches a predetermined value or range; and
storing a value indicative of the gain setting at the predetermined value or range.
